# EUROPEAN PATENT APPLICATION

(11) **EP 4 464 743 A1**
(43) Date of publication of application: **20.11.2024**
(21) Application number: 23740295.3
(22) Date of filing: 12.01.2023
(51) Int. Cl.: C08L 23/16, C08F 210/18, C08K 3/04, C08K 3/22, C08K 3/26, C08K 5/13, C08K 5/14, C08L 23/08, C08L 83/05, C08L 91/00

(54) **COPOLYMER COMPOSITION, FOAM MOLDED BODY, CROSSLINKED MOLDED BODY, AND PRODUCTION METHODS OF THESE**

(30) Priority: 12.01.2022 JP 2022003316; 08.09.2022 JP 2022142879
(71) Applicant: Mitsui Chemicals, Inc., Tokyo 104-0028 (JP); Dow Toray Co., Ltd., Tokyo 140-8617 (JP)
(72) Inventor: ICHINO Kotaro, Ichihara-shi, Chiba 299-0108 (JP); ISHII Yuji, Ichihara-shi, Chiba 299-0108 (JP); ARINO Mitsunao, Ichihara-shi, Chiba 299-0108 (JP); KUWADA Iori, Ichihara-shi, Chiba 299-0108 (JP); HIGUCHI Kazuki, Ichihara-shi, Chiba 299-0108 (JP); HATTORI Yusuke, Ichihara-shi, Chiba 299-0108 (JP); KISHIMOTO Norihisa, Ichihara-shi, Chiba 299-0108 (JP); YOSHIZAWA Takeshi, Ichihara-shi, Chiba 299-0108 (JP)
(74) Representative: Murgitroyd & Company
(86) International application number: PCT/JP2023/000598
(87) International publication number: WO 2023/136287

(57) **Abstract**

Provided is a copolymer composition containing a copolymer (S) which has a structural unit derived from an ethylene (A), a structural unit derived from an α-olefin (B) having 3 to 20 carbon atoms, and a structural unit derived from a specific non-conjugated polyene (C), and satisfies a requirement (i) and a requirement (ii), a hydrosilyl group-containing compound (Y) which is an organohydrogenpolysiloxane having at least one silicon atom-bonded aralkyl group and at least two silicon atom-bonded hydrogen atoms in a molecule, and a platinum catalyst for hydrosilyl crosslinking. (i) [A]/[B] is 40/60 to 99.9/0.1 (ii) a mass percent concentration of the structural unit derived from the non-conjugated polyene (C) is 0.07% to 10% by mass.

## Description

### [Technical Field]

The present invention relates to an ethylene/α-olefin/non-conjugated polyene copolymer composition, a production method of the same, a foam molded body obtained from the copolymer composition and a production method of the same, and a crosslinked molded body and a production method of the same.

Priority is claimed on Japanese Patent Application No. 2022-003316 filed January 12, 2022 and Japanese Patent Application No. 2022-142879 filed September 8, 2022, the contents of which are incorporated herein by reference.

### [Background Art]

A copolymer composition obtained by performing a hydrosilyl crosslinking on an ethylene/α-olefin/non-conjugated polyene random copolymer (Patent Document 1) has excellent mechanical strength, heat aging resistance, compressive permanent strain, and blooming properties, and has characteristics such as being capable of continuous crosslinking, as compared with sulfur vulcanization or peroxide crosslinking, and it is expected to be applied to seal components such as packings and gaskets.

Patent Document 1 proposes a copolymer composition that can be crosslinked in a short time at a temperature of 150°C to 200°C, which is a crosslinking temperature, by setting a scorch time to be long so that crosslinking does not occur during kneading and molding at a relatively low temperature of 50°C to 130°C.

Patent Document 2 proposes to perform crosslinking using, in combination, a hydrosilyl-containing compound and an organic peroxide which is relatively easily available at a low cost.

### [Citation List]

### [Patent Document]

[Patent Document 1]
   Japanese Unexamined Patent Application, First Publication No. 2018-131527
[Patent Document 2]
   Japanese Unexamined Patent Application, First Publication No. 2019-156950

### [Summary of Invention]

### [Technical Problem]

However, in Patent Documents 1 and 2, the hydrosilyl group-containing compound used for the crosslinking has not been sufficiently studied.

In view of the above circumstances, an object of the present invention is to provide a copolymer composition containing an ethylene/α-olefin/non-conjugated polyene copolymer having excellent physical properties, processability, and the like of a molded body to be obtained and a production method of the copolymer composition; a foam molded body obtained from the copolymer composition and a production method of the foam molded body; and a crosslinked molded body and a production method of the crosslinked molded body.

### [Solution to Problem]

In order to achieve the above objects, the present invention has the following aspects.
[1] A copolymer composition containing:
   a copolymer (S);
   a hydrosilyl group-containing compound (Y); and
   a platinum catalyst,
   in which the copolymer (S) has a structural unit derived from an ethylene (A), a structural unit derived from an α-olefin (B) having 3 to 20 carbon atoms, and a structural unit derived from a non-conjugated polyene (C) including, in a molecule, a total of two or more partial structures of at least one type selected from Formula (I) and Formula (II), and satisfies the following requirement (i) and the following requirement (ii),
   the hydrosilyl group-containing compound (Y) is an organohydrogenpolysiloxane represented by Formula (a), which has at least one silicon atom-bonded aralkyl group and at least two silicon atom-bonded hydrogen atoms in a molecule,
   the requirement (i) is that [A]/[B], which is a ratio of a number of moles [A] of the structural unit derived from the ethylene (A) to a number of moles [B] of the structural unit derived from the α-olefin (B) having 3 to 20 carbon atoms, is 40/60 to 99.9/0.1,
   the requirement (ii) is that a mass percent concentration of the structural unit derived from the non-conjugated polyene (C) is 0.07% to 10% by mass with respect to all structural units constituting the copolymer (S), 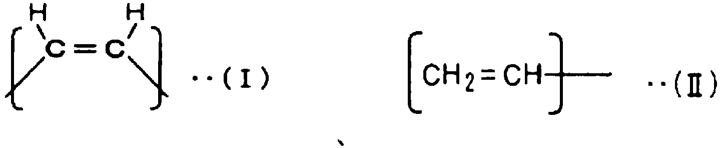 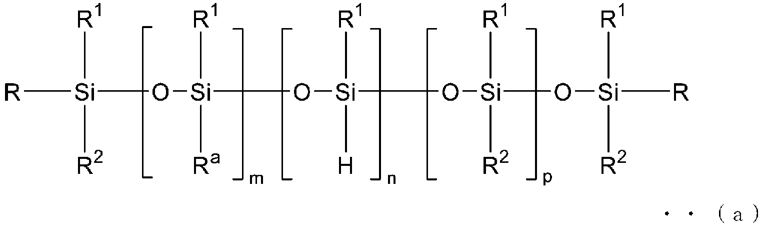
   in Formula (a), n and p are each independently 0 or a positive number, m is a number in a range of 1 to 20, a sum of n, m, and p is 5 to 50, a plurality of R¹'s and R²'s are each independently a monovalent alkyl group, R^{a} is an aralkyl group, two R's are each independently a group selected from the group consisting of R¹, R², a hydrogen atom, and R^{a}, and the structural units may be arranged in blocks or randomly, provided that in a case where n = 1, at least one of the two R's is a hydrogen atom, and in a case where n = 0, both the two R's are hydrogen atoms.
[2] The copolymer composition according to [1], further containing:
   a baking soda-based foaming agent satisfying the following requirement (b),
   in which the requirement (b) is that a cumulative 10% unevenness degree in a number-based cumulative distribution curve of unevenness degree is 0.9 or less, and a cumulative 90% equivalent circle diameter in a number-based cumulative distribution curve of equivalent circle diameter is 43 µm or more,
   where the unevenness degree is a ratio of an envelope peripheral length to a peripheral length, which are measured by a dynamic image analysis method using methyl ethyl ketone as a dispersion solvent, and the equivalent circle diameter is a diameter of a circle with an area equal to a projected area of particles measured by a dynamic image analysis method using methyl ethyl ketone as a dispersion solvent.
[3] The copolymer composition according to [2],
   in which, with respect to 100 parts by mass of the copolymer (S), the hydrosilyl group-containing compound (Y) is contained in an amount of 0.1 to 100 parts by mass, the platinum catalyst is contained in an amount of 0.001 to 10 parts by mass, and the baking soda-based foaming agent is contained in an amount of 1 to 30 parts by mass.
[4] The copolymer composition according to [2] or [3], further containing:
   a reaction inhibitor in an amount of 0 to 2 parts by mass with respect to 100 parts by mass of the copolymer (S).
[5] The copolymer composition according to any one of [2] to [4], further containing:
   a hindered phenol-based antioxidant in an amount of 0.07 to 10 parts by mass with respect to 100 parts by mass of the copolymer (S).
[6] A foam molded body including:
   a foam body obtained by crosslinking and foaming the copolymer composition according to any one of [2] to [5].
[7] A production method of a foam molded body, including:
   melt-extruding and crosslinking the copolymer composition according to any one of [2] to [5].
[8] The copolymer composition according to [1],
   in which the copolymer (S) further satisfies the following requirements (iii) to (v) and has an intrinsic viscosity [η] of 2.0 to 4.0 dL/g,
   the copolymer composition further contains, with respect to 100 parts by mass of the copolymer (S), carbon black in an amount of 0.1 to 200 parts by mass, paraffinic process oil in an amount of 0.1 to 200 parts by mass, and a reaction inhibitor as necessary,
   a Mooney viscosity "ML (1 + 4) 100°C" of a composition obtained by mixing components other than the hydrosilyl group-containing compound (Y), the platinum catalyst, and the reaction inhibitor, which is measured by a method in accordance with JIS K 6300-1: 2013, is 8 to 200,
   the requirement (iii) is that (n_{C}) obtained by the following expression (1) is 4.5 or more and 40 or less, $\begin{matrix}\left({n}_{C}\right) = \left(Mw\right) \times \left\{\left(a mass percent concentration of \left(C\right)/100\right.\right\} / a molecular weight of \\ \left(C\right)\end{matrix}$
   where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
   the requirement (iv) is that a ratio P (η*_{(ω = 0.1)}/η*_{(ω = 100)}) between a complex viscosity η*_{(ω = 0.1)} (Pa·sec) at a frequency ω of 0.1 rad/s and a complex viscosity η*_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P/ \left({\left[η\right]}^{2.9}\right) \leq the mass percent concentration of \left(C\right) \times 6$ and
   the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000 C} \leq 1 - 0 .07 \times Ln \left(Mw\right)$
[9] A crosslinked molded body obtained by crosslinking the copolymer composition according to [8].
[10] The copolymer composition according to [1],
   in which the copolymer (S) further satisfies the following requirements (iii) to (v) and has an intrinsic viscosity [η] of 0.5 dL/g or more and less than 2.0 dL/g,
   the copolymer composition further contains paraffinic process oil in an amount of 10 to 100 parts by mass with respect to 100 parts by mass of the copolymer (S),
   a Mooney viscosity "ML (1 + 4) 100°C" measured by a method in accordance with JIS K 6300-1: 2013 is 0.1 to 8,
   the requirement (iii) is that (n_{C}) obtained by the following expression (1) is 4.5 or more and 40 or less, $\begin{matrix}\left({n}_{C}\right) = \left(Mw\right) \times \left\{\left(a mass percent concentration of \left(C\right)/100\right.\right\} / a molecular weight of \\ \left(C\right)\end{matrix}$
   where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
   the requirement (iv) is that a ratio P (/η*_{(ω = 0.1)}/η*_{(ω = 100)}) between a complex viscosity η*_{(ω = 0.1)} (Pa·sec) at a frequency ω of 0.1 rad/s and a complex viscosity η*_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P/ \left({\left[η\right]}^{2.9}\right) \leq the mass percent concentration of \left(C\right) \times 6$ and
   the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000 C} \leq 1 - 0 .07 \times Ln \left(Mw\right)$
[11] A crosslinked molded body obtained by crosslinking the copolymer composition according to [10],
[12] The copolymer composition according to [1],
   in which the copolymer (S) further satisfies the following requirements (iii) to (v) and has an intrinsic viscosity [η] of 0.5 dL/g or more and less than 2.0 dL/g,
   the copolymer composition further contains, with respect to 100 parts by mass of the copolymer (S), carbon black in an amount of 0.1 to 200 parts by mass and paraffinic process oil in an amount of 100 to 400 parts by mass,
   a Brookfield rotational viscosity at 25°C, which is measured by a method in accordance with JIS K 7117: 1999, is 6,000 Pa·s or less,
   the requirement (iii) is that (n_{C}) obtained by the following expression (1) is 4.5 or more and 40 or less, $\begin{matrix}\left({n}_{C}\right) = \left(Mw\right) \times \left\{\left(a mass percent concentration of \left(C\right)/100\right.\right\} / a molecular weight of \\ \left(C\right)\end{matrix}$
   where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
   the requirement (iv) is that a ratio P (η*_{(ω = 0.1)}/η*_{(ω = 100)}) between a complex viscosity η*_{(ω = 0.1)} (Pa·sec) at a frequency ω of 0.1 rad/s and a complex viscosity η*_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P/ \left({\left[η\right]}^{2.9}\right) \leq the mass percent concentration of \left(C\right) \times 6$ and
   the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000 C} \leq 1 - 0 .07 \times Ln \left(Mw\right)$
[13] A crosslinked molded body obtained by crosslinking the copolymer composition according to [12],
[14] The copolymer composition according to [1], further containing:
   a reaction inhibitor; and
   an organic peroxide (Z),
   in which the copolymer (S) further satisfies the following requirements (iii) to (v),
   the organic peroxide (Z) is contained in an amount of 0.2 to 6 parts by mass with respect to 100 parts by mass of the copolymer (S),
   the requirement (iii) is that (n_{C}) obtained by the following expression (1) is 4.5 or more and 40 or less, $\begin{matrix}\left({n}_{C}\right) = \left(Mw\right) \times \left\{\left(a mass percent concentration of \left(C\right)/100\right.\right\} / a molecular weight of \\ \left(C\right)\end{matrix}$
   where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
   the requirement (iv) is that a ratio P (η*_{(ω = 0.1)}/η*_{(ω = 100)}) between a complex viscosity η*_{(ω = 0.1)} (Pa·sec) at a frequency ω of 0.1 rad/s and a complex viscosity η*_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P / \left({\left[η\right]}^{2.9}\right) \leq the mass percent concentration of \left(C\right) \times 6$ and
   the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000C} \leq 1 - 0.07 \times Ln \left(Mw\right)$
[15] The copolymer composition according to [14],
   in which, with respect to 100 parts by mass of the copolymer (S), the hydrosilyl group-containing compound (Y) is contained in an amount of 0.01 to 10 parts by mass, the platinum catalyst is contained in an amount of 0.001 to 1 parts by mass, and the reaction inhibitor is contained in an amount of 0.001 to 5 parts by mass.
[16] A crosslinked molded body obtained by crosslinking the copolymer composition according to [14] or [15].
[17] A production method of the copolymer composition according to any one of [1] to [5], [8], [10], [12], [14], and [15], the production method including:
   kneading the copolymer (S) and the hydrosilyl group-containing compound (Y) at 80°C to 170°C for 1 to 10 minutes to obtain a first-stage blending material; and
   adding the platinum catalyst to the first-stage blending material and kneading the mixture at 10°C to 130°C for 1 to 30 minutes to obtain a second-stage blending material,
   in which the copolymer (S) has a structural unit derived from an ethylene (A), a structural unit derived from an α-olefin (B) having 3 to 20 carbon atoms, and a structural unit derived from a non-conjugated polyene (C) including, in a molecule, a total of two or more partial structures of at least one type selected from Formula (I) and Formula (II), and satisfies the following requirement (i) and the following requirement (ii),
   the hydrosilyl group-containing compound (Y) is an organohydrogenpolysiloxane represented by Formula (a), which has at least one silicon atom-bonded aralkyl group and at least two silicon atom-bonded hydrogen atoms in a molecule,
   the requirement (i) is that [A]/[B], which is a ratio of a number of moles [A] of the structural unit derived from the ethylene (A) to a number of moles [B] of the structural unit derived from the α-olefin (B) having 3 to 20 carbon atoms, is 40/60 to 99.9/0.1,
   the requirement (ii) is that a mass percent concentration of the structural unit derived from the non-conjugated polyene (C) is 0.07% to 10% by mass with respect to all structural units constituting the copolymer (S), 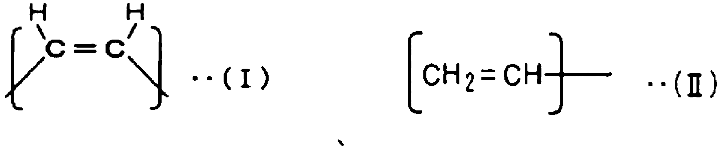 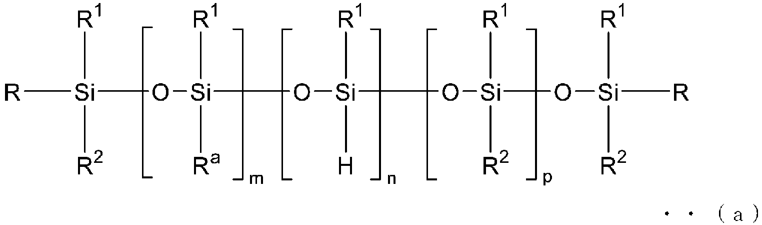
   in Formula (a), n and p are each independently 0 or a positive number, m is a number in a range of 1 to 20, a sum of n, m, and p is 5 to 50, a plurality of R¹'s and R²'s are each independently a monovalent alkyl group, R^{a} is an aralkyl group, two R's are each independently a group selected from the group consisting of R¹, R², a hydrogen atom, and R^{a}, and the structural units may be arranged in blocks or randomly, provided that in a case where n = 1, at least one of the two R's is a hydrogen atom, and in a case where n = 0, both the two R's are hydrogen atoms.
[18] The production method of the copolymer composition according to [17],
   in which, with respect to 100 parts by mass of the copolymer (S), the hydrosilyl group-containing compound (Y) is used in an amount of 0.1 to 100 parts by mass, and the platinum catalyst is used in an amount of 0.001 to 10 parts by mass.
[19] The production method of the copolymer composition according to [17] or [18],
   in which, in the case of obtaining the second-stage blending material, the second-stage blending material is obtained by further adding a reaction inhibitor to the first-stage blending material and kneading the mixture at 10°C to 130°C for 1 to 30 minutes.
[20] The production method of the copolymer composition according to [19],
   in which the reaction inhibitor is used in an amount of 0.05 to 5 parts by mass with respect to 100 parts by mass of the copolymer (S).
[21] A crosslinked molded body obtained by crosslinking the copolymer composition obtained by the production method according to any one of [17] to [20].
[22] A production method of a crosslinked molded body, including:
   obtaining a kneaded product consisting of the copolymer composition according to any one of [1] to [5], [8], [10], [12], [14], and [15], by melt-kneading the copolymer (S), the hydrosilyl group-containing compound (Y), and the platinum catalyst;
   performing primary crosslinking by press-molding the kneaded product at 120°C to 200°C for 1 to 20 minutes to obtain a primary molded body; and
   performing secondary crosslinking by heating the primary molded body in a heat medium at 120°C to 160°C for 10 to 24 hours,
   in which the copolymer (S) has a structural unit derived from an ethylene (A), a structural unit derived from an α-olefin (B) having 3 to 20 carbon atoms, and a structural unit derived from a non-conjugated polyene (C) including, in a molecule, a total of two or more partial structures of at least one type selected from Formula (I) and Formula (II), and satisfies the following requirement (i) and the following requirement (ii),
   the hydrosilyl group-containing compound (Y) is an organohydrogenpolysiloxane represented by Formula (a), which has at least one silicon atom-bonded aralkyl group and at least two silicon atom-bonded hydrogen atoms in a molecule,
   the requirement (i) is that [A]/[B], which is a ratio of a number of moles [A] of the structural unit derived from the ethylene (A) to a number of moles [B] of the structural unit derived from the α-olefin (B) having 3 to 20 carbon atoms, is 40/60 to 99.9/0.1,
   the requirement (ii) is that a mass percent concentration of the structural unit derived from the non-conjugated polyene (C) is 0.07% to 10% by mass with respect to all structural units constituting the copolymer (S), 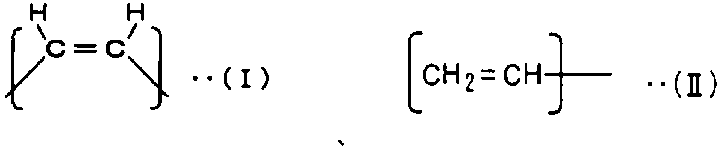 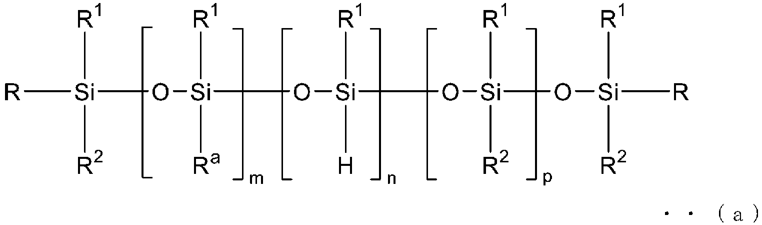
   in Formula (a), n and p are each independently 0 or a positive number, m is a number in a range of 1 to 20, a sum of n, m, and p is 5 to 50, a plurality of R¹'s and R²'s are each independently a monovalent alkyl group, R^{a} is an aralkyl group, two R's are each independently a group selected from the group consisting of R¹, R², a hydrogen atom, and R^{a}, and the structural units may be arranged in blocks or randomly, provided that in a case where n = 1, at least one of the two R's is a hydrogen atom, and in a case where n = 0, both the two R's are hydrogen atoms.
[23] The production method of a crosslinked molded body according to [22],
   in which, with respect to 100 parts by mass of the copolymer (S), the hydrosilyl group-containing compound (Y) is used in an amount of 0.1 to 100 parts by mass, and the platinum catalyst is used in an amount of 0.001 to 10 parts by mass.
[24] The production method of a crosslinked molded body according to [22] or [23],
   in which, in the case of obtaining the kneaded product, the kneaded product is obtained by further adding a reaction inhibitor to the kneaded product and melt-kneading the mixture.
[25] The production method of a crosslinked molded body according to [24],
   in which the reaction inhibitor is used in an amount of 0.05 to 5 parts by mass with respect to 100 parts by mass of the copolymer (S).
[26] The copolymer composition, the production method of the copolymer composition, the foam molded body, the production method of a foam molded body, the crosslinked molded body, or the production method of a crosslinked molded body according to any one of [1] to [25],
   in which a content of the copolymer (S) is preferably 10% to 50% by mass, more preferably 15% to 45% by mass, and still more preferably 20% to 40% by mass with respect to the total mass of the copolymer composition.
[27] The copolymer composition, the production method of the copolymer composition, the foam molded body, the production method of a foam molded body, the crosslinked molded body, or the production method of a crosslinked molded body according to any one of [1] to [26],
   in which a content of the structural unit derived from the ethylene (A) is preferably 50% to 80% by mass, more preferably 60% to 75% by mass, and still more preferably 65% to 72% by mass with respect to the total mass of the copolymer (S).
[28] The copolymer composition, the production method of the copolymer composition, the foam molded body, the production method of a foam molded body, the crosslinked molded body, or the production method of a crosslinked molded body according to any one of [1] to [27],
   in which a content of the structural unit derived from the α-olefin (B) having 3 to 20 carbon atoms is preferably 20% to 50% by mass, more preferably 25% to 40% by mass, and still more preferably 28% to 35% by mass with respect to the total mass of the copolymer (S).
[29] The copolymer composition, the production method of the copolymer composition, the foam molded body, the production method of a foam molded body, the crosslinked molded body, or the production method of a crosslinked molded body according to any one of [1] to [28],
   in which a content of the structural unit derived from the non-conjugated polyene (C) is preferably 0.1 % to 8.0% by mass, more preferably 0.5% to 5.0% by mass, still more preferably 1.0% to 3.0% by mass, and particularly preferably 1.2% to 2.0% by mass with respect to the total mass of the copolymer (S).
[30] The copolymer composition, the production method of the copolymer composition, the foam molded body, the production method of a foam molded body, the crosslinked molded body, or the production method of a crosslinked molded body according to any one of [1] to [29],
   in which the molar ratio is preferably 50/50 to 90/10, more preferably 55/45 to 85/15, still more preferably 55/45 to 78/22, and particularly preferably 63/37 to 76/24.
[31] The copolymer composition, the production method of the copolymer composition, the foam molded body, the production method of a foam molded body, the crosslinked molded body, or the production method of a crosslinked molded body according to any one of [1] to [30],
   in which the α-olefin (B) having 3 to 20 carbon atoms is preferably at least one selected from the group consisting of propylene, 1-butene, 1-pentene, 1-hexene, 4-methyl-1-pentene, 1-heptene, 1-octene, 1-decene, 1-dodecene, 1-tetradecene, 1-hexadecene, and 1-eicosene, is more preferably at least one selected from the group consisting of propylene, 1-butene, 1-hexene, and 1-octene, and is still more preferably propylene.
[32] The copolymer composition, the production method of the copolymer composition, the foam molded body, the production method of a foam molded body, the crosslinked molded body, or the production method of a crosslinked molded body according to any one of [1] to [31],
   in which the non-conjugated polyene (C) preferably includes at least one selected from the group consisting of 5-vinyl-2-norbornene (VNB), norbornadiene, 1,4-hexadiene, and dicyclopentadiene, more preferably includes VNB, and is still more preferably VNB.
[33] The copolymer composition, the production method of the copolymer composition, the foam molded body, the production method of a foam molded body, the crosslinked molded body, or the production method of a crosslinked molded body according to any one of [1] to [32],
   in which the weight-average molecular weight of the copolymer (S) is preferably 10,000 to 600,000, more preferably 30,000 to 500,000, still more preferably 50,000 to 400,000, and particularly preferably 60,000 to 200,000.
[34] The copolymer composition, the production method of the copolymer composition, the foam molded body, the production method of a foam molded body, the crosslinked molded body, or the production method of a crosslinked molded body according to any one of [1] to [33],
   in which a content of the hydrosilyl group-containing compound (Y) is preferably 0.3% to 5.0% by mass, more preferably 0.5% to 3.0% by mass, and still more preferably 0.7% to 2.5% by mass with respect to the total mass of the copolymer composition.
[35] The copolymer composition, the production method of the copolymer composition, the foam molded body, the production method of a foam molded body, the crosslinked molded body, or the production method of a crosslinked molded body according to any one of [1] to [34],
   in which a content of the aralkyl group is preferably 5% to 20% by mass, more preferably 8% to 18% by mass, and still more preferably 10% to 15% by mass with respect to the total mass of the hydrosilyl group-containing compound (Y).
[36] The copolymer composition, the production method of the copolymer composition, the foam molded body, the production method of a foam molded body, the crosslinked molded body, or the production method of a crosslinked molded body according to any one of [1] to [35],
   in which the aralkyl group is preferably at least one selected from the group consisting of a benzyl group, a phenylethyl group, a phenylpropyl group, and a phenylbutyl group, more preferably a linear or branched phenylpropyl group, and still more preferably -CH₂-CH(CH₃)-C₆H₅.
[37] The copolymer composition, the production method of the copolymer composition, the foam molded body, the production method of a foam molded body, the crosslinked molded body, or the production method of a crosslinked molded body according to any one of [1] to [36],
   in which a content of the alkyl group is preferably 15% to 40% by mass, more preferably 20% to 38% by mass, and still more preferably 25% to 35% by mass with respect to the total mass of the hydrosilyl group-containing compound (Y).
[38] The copolymer composition, the production method of the copolymer composition, the foam molded body, the production method of a foam molded body, the crosslinked molded body, or the production method of a crosslinked molded body according to any one of [1] to [37],
   in which the alkyl group is preferably an alkyl group having 1 to 20 carbon atoms, more preferably an alkyl group having 1 to 10 carbon atoms, still more preferably an alkyl group having 1 to 6 carbon atoms, and particularly preferably a methyl group.
[39] The copolymer composition, the production method of the copolymer composition, the foam molded body, the production method of a foam molded body, the crosslinked molded body, or the production method of a crosslinked molded body according to any one of [1] to [38],
   in which m in Formula (a) is preferably 1 to 10, more preferably 2 to 8, and still more preferably 3 to 6.
[40] The copolymer composition, the production method of the copolymer composition, the foam molded body, the production method of a foam molded body, the crosslinked molded body, or the production method of a crosslinked molded body according to any one of [1] to [39],
   in which n in Formula (a) is preferably 0 to 10, more preferably 2 to 9, and still more preferably 4 to 8.
[41] The copolymer composition, the production method of the copolymer composition, the foam molded body, the production method of a foam molded body, the crosslinked molded body, or the production method of a crosslinked molded body according to any one of [1] to [40],
   in which p in Formula (a) is preferably 0 to 10, more preferably 0 to 5, and still more preferably 0.
[42] The copolymer composition, the production method of the copolymer composition, the foam molded body, the production method of a foam molded body, the crosslinked molded body, or the production method of a crosslinked molded body according to any one of [1] to [41],
   in which the two R's in Formula (a) are each independently preferably an alkyl group having 1 to 20 carbon atoms, more preferably an alkyl group having 1 to 10 carbon atoms, still more preferably an alkyl group having 1 to 6 carbon atoms, and particularly preferably a methyl group.
[43] The copolymer composition, the production method of the copolymer composition, the foam molded body, the production method of a foam molded body, the crosslinked molded body, or the production method of a crosslinked molded body according to any one of [1] to [42],
   in which a content of the platinum catalyst is preferably 0.01% to 1.0% by mass, more preferably 0.02% to 0.5% by mass, and still more preferably 0.03% to 0.1% by mass with respect to the total mass of the copolymer composition.
[44] The copolymer composition, the production method of the copolymer composition, the foam molded body, the production method of a foam molded body, the crosslinked molded body, or the production method of a crosslinked molded body according to any one of [1] to [43],
   in which the platinum catalyst is preferably at least one selected from the group consisting of solid platinum (platinum black), chloroplatinic acid, a platinum-olefin complex, a platinum-alcohol complex, and a platinum catalyst in which these platinum catalysts are supported on a carrier, and more preferably at least one selected from the group consisting of a complex of chloroplatinic acid and 1,3,5,7-tetravinyl-1,3,5,7-tetramethylcyclotetrasiloxane and a complex of chloroplatinic acid and 1,3-divinyltetramethyldisiloxane.
[45] The copolymer composition, the production method of the copolymer composition, the foam molded body, the production method of a foam molded body, the crosslinked molded body, or the production method of a crosslinked molded body according to any one of [1] to [44],
   in which the copolymer composition further contains a baking soda-based foaming agent.
[46] The copolymer composition, the production method of the copolymer composition, the foam molded body, the production method of a foam molded body, the crosslinked molded body, or the production method of a crosslinked molded body according to any one of [1] to [45],
   in which a content of a baking soda-based foaming agent is preferably 0.1 % to 2.0% by mass, more preferably 0.3% to 1.5% by mass, and still more preferably 0.7% to 1.0% by mass with respect to the total mass of the copolymer composition.
[47] The copolymer composition, the production method of the copolymer composition, the foam molded body, the production method of a foam molded body, the crosslinked molded body, or the production method of a crosslinked molded body according to any one of [1] to [46],
   in which the copolymer composition further contains a reaction inhibitor.
[48] The copolymer composition, the production method of the copolymer composition, the foam molded body, the production method of a foam molded body, the crosslinked molded body, or the production method of a crosslinked molded body according to any one of [1] to [47],
   in which a content of a reaction inhibitor is preferably 0.005% to 0.3% by mass, more preferably 0.008% to 0.2% by mass, and still more preferably 0.01% to 0.15% by mass with respect to the total mass of the copolymer composition.
[49] The copolymer composition, the production method of the copolymer composition, the foam molded body, the production method of a foam molded body, the crosslinked molded body, or the production method of a crosslinked molded body according to any one of [1] to [48],
   in which the copolymer composition further contains a hindered phenol-based antioxidant.
[50] The copolymer composition, the production method of the copolymer composition, the foam molded body, the production method of a foam molded body, the crosslinked molded body, or the production method of a crosslinked molded body according to any one of [1] to [49],
   in which a content of a hindered phenol-based antioxidant is preferably 0.1 % to 3.0% by mass, more preferably 0.3% to 2.0% by mass, and still more preferably 0.5% to 1.0% by mass with respect to the total mass of the copolymer composition.
[51] The copolymer composition, the production method of the copolymer composition, the foam molded body, the production method of a foam molded body, the crosslinked molded body, or the production method of a crosslinked molded body according to any one of [1] to [50],
   in which the copolymer composition further contains carbon black.
[52] The copolymer composition, the production method of the copolymer composition, the foam molded body, the production method of a foam molded body, the crosslinked molded body, or the production method of a crosslinked molded body according to any one of [1] to [51],
   in which a content of carbon black is preferably 1% to 50% by mass, more preferably 3% to 45% by mass, and still more preferably 5% to 40% by mass with respect to the total mass of the copolymer composition.
[53] The copolymer composition, the production method of the copolymer composition, the foam molded body, the production method of a foam molded body, the crosslinked molded body, or the production method of a crosslinked molded body according to any one of [1] to [52],
   in which the copolymer composition further contains paraffinic process oil.
[54] The copolymer composition, the production method of the copolymer composition, the foam molded body, the production method of a foam molded body, the crosslinked molded body, or the production method of a crosslinked molded body according to any one of [1] to [53],
   in which a content of paraffinic process oil is preferably 1% to 90% by mass, more preferably 3% to 50% by mass, and still more preferably 5% to 35% by mass with respect to the total mass of the copolymer composition.
[55] The copolymer composition, the production method of the copolymer composition, the foam molded body, the production method of a foam molded body, the crosslinked molded body, or the production method of a crosslinked molded body according to any one of [1] to [54],
   in which the copolymer composition further contains an organic peroxide.
[56] The copolymer composition, the production method of the copolymer composition, the foam molded body, the production method of a foam molded body, the crosslinked molded body, or the production method of a crosslinked molded body according to any one of [1] to [55],
   in which a content of an organic peroxide is preferably 0.1% to 5.0% by mass, more preferably 0.3% to 4.0% by mass, and still more preferably 0.5% to 3.0% by mass with respect to the total mass of the copolymer composition.
[57] The copolymer composition, the production method of the copolymer composition, the foam molded body, the production method of a foam molded body, the crosslinked molded body, or the production method of a crosslinked molded body according to any one of [1] to [56],
   in which the copolymer composition further contains a reinforcing agent.
[58] The copolymer composition, the production method of the copolymer composition, the foam molded body, the production method of a foam molded body, the crosslinked molded body, or the production method of a crosslinked molded body according to any one of [1] to [57],
   in which a content of a reinforcing agent is preferably 1% to 30% by mass, more preferably 3% to 25% by mass, and still more preferably 5% to 20% by mass with respect to the total mass of the copolymer composition.
[59] The copolymer composition, the production method of the copolymer composition, the foam molded body, the production method of a foam molded body, the crosslinked molded body, or the production method of a crosslinked molded body according to any one of [1] to [58],
   in which the copolymer composition further contains a moisture absorbent.
[60] The copolymer composition, the production method of the copolymer composition, the foam molded body, the production method of a foam molded body, the crosslinked molded body, or the production method of a crosslinked molded body according to any one of [1] to [59],
   in which a content of a moisture absorbent is preferably 0.5% to 3.0% by mass, more preferably 0.8% to 2.5% by mass, and still more preferably 1.0% to 2.0% by mass with respect to the total mass of the copolymer composition.
[61] The copolymer composition, the production method of the copolymer composition, the foam molded body, the production method of a foam molded body, the crosslinked molded body, or the production method of a crosslinked molded body according to any one of [1] to [60],
   in which a content of a solvent in the copolymer composition is preferably 0% to 5% by mass, more preferably 0% to 1% by mass, and still more preferably substantially 0% by mass with respect to the total mass of the copolymer composition.
[62] The copolymer composition, the production method of the copolymer composition, the foam molded body, the production method of a foam molded body, the crosslinked molded body, or the production method of a crosslinked molded body according to any one of [1] to [61],
   in which the [A]/[B] is preferably 50/50 to 90/10, more preferably 55/45 to 85/15, still more preferably 55/45 to 78/22, and particularly preferably 63/37 to 76/24.
[63] The production method of the copolymer composition according to any one of [17] to [20] and [26] to [62],
   in which the case of obtaining the first-stage blending material is preferably performed under conditions of 100°C to 170°C for 3 to 8 minutes, and more preferably performed under conditions of 120°C to 160°C for 4 to 7 minutes.
[64] The production method of the copolymer composition according to any one of [17] to [20] and [26] to [63],
   in which the case of obtaining the second-stage blending material is preferably performed under conditions of 10°C to 100°C for 1 to 10 minutes, more preferably performed under conditions of 30°C to 80°C for 3 to 8 minutes, and still more preferably performed under conditions of 40°C to 60°C for 4 to 7 minutes.
[65] The production method of a foam molded body according to any one of [7], and [26] to [64],
   in which the case of melt-extruding is preferably performed under conditions of 30°C or higher and lower than 150°C for 5 to 30 minutes, more preferably performed under conditions of 40°C to 140°C for 5 to 20 minutes, and still more preferably performed under conditions of 50°C to 130°C for 7 to 15 minutes.
[66] The production method of a foam molded body according to any one of [7], and [26] to [65],
   in which the case of crosslinking is preferably performed under conditions of 150°C to 200°C for 1 to 30 minutes, more preferably performed under conditions of 160°C to 195°C for 5 to 20 minutes, and still more preferably performed under conditions of 170°C to 190°C for 7 to 15 minutes.
[67] The production method of a crosslinked molded body according to any one of [22] to [62],
   in which the case of obtaining the kneaded product is preferably performed under conditions of lower than 150°C for 5 to 30 minutes, more preferably performed under conditions of 40°C to 140°C for 5 to 20 minutes, and still more preferably performed under conditions of 50°C to 130°C for 7 to 15 minutes.
[68] The copolymer composition, the production method of the copolymer composition, the foam molded body, the production method of a foam molded body, the crosslinked molded body, or the production method of a crosslinked molded body according to any one of [1] to [67],
   in which an iodine value of the copolymer (S) is preferably 1 to 10, more preferably 2 to 5, and still more preferably 3 to 3.5.
[69] The copolymer composition, the production method of the copolymer composition, the foam molded body, the production method of a foam molded body, the crosslinked molded body, or the production method of a crosslinked molded body according to any one of [1] to [68],
   in which, in the copolymer composition, the number of silicon atom-bonded hydrogen atoms in one molecule of the hydrosilyl group-containing compound (Y) is preferably 2 to 10, more preferably 3 to 8, and still more preferably 5 to 7.
[70] The copolymer composition, the production method of the copolymer composition, the foam molded body, the production method of a foam molded body, the crosslinked molded body, or the production method of a crosslinked molded body according to any one of [1] to [69],
   in which, in the copolymer composition, the number of aralkyl groups in one molecule of the hydrosilyl group-containing compound (Y) is preferably 2 to 10, more preferably 3 to 8, and still more preferably 4 or 5.
[71] The copolymer composition, the production method of the copolymer composition, the foam molded body, the production method of a foam molded body, the crosslinked molded body, or the production method of a crosslinked molded body according to any one of [1] to [70],
   in which the copolymer (S) preferably has at least one partial structure of at least one kind selected from Formula (I) and Formula (II) described above in the molecule, and more preferably has two or more partial structures thereof.

### [Advantageous Effects of Invention]

According to the present invention, it is possible to provide a copolymer composition containing an ethylene/α-olefin/non-conjugated polyene copolymer having excellent physical properties, processability, and the like of a molded body to be obtained and a production method of the copolymer composition; a foam molded body obtained from the copolymer composition and a production method of the foam molded body; and a crosslinked molded body and a production method of the crosslinked molded body.

### [Description of Embodiments]

### <First aspect>

The copolymer composition according to the first aspect of the present invention contains a copolymer (S), a hydrosilyl group-containing compound (Y), and a platinum catalyst.

### [Copolymer (S)]

The copolymer (S) according to the present aspect has a structural unit derived from an ethylene (A), a structural unit derived from an α-olefin (B) having 3 to 20 carbon atoms, and a structural unit derived from a non-conjugated polyene (C). The copolymer composition according to the present aspect may contain two or more kinds of the copolymers (S).

With respect to all structural units constituting the copolymer (S), a mass percent concentration of the total of the structural unit derived from the ethylene (A), the structural unit derived from the α-olefin (B) having 3 to 20 carbon atoms, and the structural unit derived from the non-conjugated polyene (C) is preferably 100% by mass.

The copolymer (S) according to the present aspect satisfies the following requirement (i) and requirement (ii).
(i) [A]/[B], which is a ratio of the number of moles [A] of the structural unit derived from the ethylene (A) to the number of moles [B] of the structural unit derived from the α-olefin (B) having 3 to 20 carbon atoms, is 40/60 to 99.910.1
(ii) a mass percent concentration of the structural unit derived from the non-conjugated polyene (C) is 0.07% to 10% by mass with respect to all structural units constituting the copolymer (S)

As the α-olefin (B) having 3 to 20 carbon atoms (hereinafter, may be simply referred to as "α-olefin (B)"), for example, propylene, 1-butene, 1 -pentene, 1-hexene, 4-methyl-1-pentene, 1-heptene, 1-octene, 1-decene, 1-dodecene, 1-tetradecene, 1-hexadecene, and 1-eicosene are exemplary examples.

Among these, α-olefins having 3 to 8 carbon atoms, such as propylene, 1-butene, 1-hexene, and 1-octene, are preferable, and propylene is particularly preferable. Such an α-olefin is preferable because the raw material cost is relatively low, the obtained copolymer (S) exhibits excellent mechanical properties, and a molded body having rubber elasticity can be obtained. These α-olefins may be used alone or in combination of two or more kinds thereof.

The non-conjugated polyene (C) is a non-conjugated polyene including, in a molecule, a total of two or more partial structures of at least one type selected from Formula (1) and Formula (11). Since the above-described copolymer (S) is crosslinked by a hydrosilylation reaction with the hydrosilyl group-containing compound (Y), the copolymer (S) has at least one, preferably two or more, carbon-carbon double bond in the molecule. In particular, the copolymer (S) preferably has at least one partial structure selected from Formula (I) and Formula (II), derived from the non-conjugated polyene (C), in the molecule, and more preferably has two or more of the partial structures.

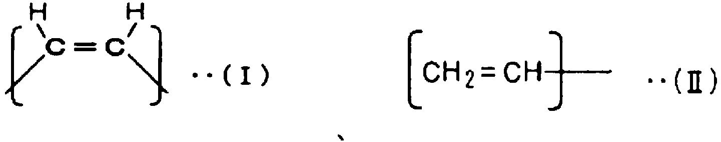

As the non-conjugated polyene (C), 5-vinyl-2-norbornene (VNB), norbornadiene, 1,4-hexadiene, and dicyclopentadiene are exemplary examples. Among these, from the viewpoint that VNB is easily available and has favorable hydrosilyl crosslinking, and it is easy to improve heat resistance of a polymer composition, it is preferable that the non-conjugated polyene (C) includes VNB and it is more preferable that the non-conjugated polyene (C) is VNB. The non-conjugated polyene (C) may be used alone or in combination of two or more kinds thereof.

The copolymer (S) according to the present aspect may further include a structural unit (CX) derived from a non-conjugated polyene (CX) having only one partial structure selected from the group consisting of General Formulae (I) and (II) described above in a molecule, as long as the effect for the present aspect is not impaired.

As the non-conjugated polyene (CX), 5-ethylidene-2-norbornene (ENB), 5-methylene-2-norbornene, 5-(2-propenyl)-2-norbornene, 5-(3-butene)-2-norbornene, 5-(1-methyl-2-propenyl)-2-norbornene, 5-(4-pentenyl)-2-norbornene, 5-(1-methyl-3-butene)-2-norbornene, 5-(5-hexenyl)-2-norbomene, 5-(1-methyl-4-pentenyl)-2-norbornene, 5-(2,3-dimethyl-3-butene)-2-norbornene, 5-(2-ethyl-3-butene)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, and 5-(1,2,3-trimethyl-4-pentenyl)-2-norbornene are exemplary examples.

Among these, from the viewpoint that ENB is easily available and it is easy to control a crosslinking rate during hydrosilyl crosslinking and to obtain favorable mechanical properties, ENB is preferable. The non-conjugated polyene (CX) may be used alone or in combination of two or more kinds thereof.

In a case where the copolymer (S) according to the present aspect includes a structural unit derived from the non-conjugated polyene (CX), a mass percent concentration of the structural unit is preferably 0% to 20% by mass, more preferably 0% to 8% by mass, and still more preferably 0.01% to 8% by mass with respect to all structural units constituting the copolymer (S).

The requirement (i) identifies that (i) [A]/[B], which is a ratio of the number of moles [A] of the structural unit derived from the ethylene (A) to the number of moles [B] of the structural unit derived from the α-olefin (B) in the copolymer (S) according to the present aspect, satisfies 40/60 to 99.9/0.1.

The [A]/[B] is preferably 50/50 to 90/10, more preferably 55/45 to 85/15, and still more preferably 55/45 to 78/22. In a case where the copolymer (S) satisfies the requirement (i), a foam body obtained by hydrosilyl-crosslinking the copolymer (S) exhibits excellent rubber elasticity, and is excellent in mechanical strength and flexibility, which is preferable.

The ratio [A]/[B] of the number of moles [A] of the structural unit derived from the ethylene (A) to the number of moles [B] of the structural unit derived from the α-olefin (B) in the copolymer (S) can be obtained by ¹³C-NMR.

The requirement (ii) identifies that the mass percent concentration of the structural unit derived from the non-conjugated polyene (C) in the copolymer (S) is 0.07% to 10% by mass with respect to all structural units constituting the copolymer (S).

The mass percent concentration of the structural unit derived from the non-conjugated polyene (C) is preferably 0.1% to 8.0% by mass and more preferably 0.5% to 5.0% by mass.

The total content of the structural unit derived from the ethylene (A), the structural unit derived from the α-olefin (B), and the structural unit derived from the non-conjugated polyene (C) in the copolymer (S) does not exceed 100% by mass with respect to the total mass of the copolymer (S).

In the copolymer (S), by satisfying the requirement (ii), a foam body obtained from the copolymer composition according to the present aspect has sufficient hardness and excellent mechanical properties, which is preferable. In addition, in a case where the copolymer (S) is hydrosilyl-crosslinked, the copolymer (S) exhibits a fast crosslinking rate, and thus a foam body can be efficiently produced, which is preferable.

The mass percent concentration of the structural unit derived from the non-conjugated polyene (C) in the copolymer (S) can be obtained by ¹³C-NMR. The content of the structural unit derived from the ethylene (A) and the content of the structural unit derived from the α-olefin (B) having 3 to 20 carbon atoms in the copolymer (S) can also be obtained by the same method using ¹³C-NMR.

It is preferable that the copolymer (S) according to the present aspect further satisfies the following requirements (iii) to (v), in addition to the above-described requirements (i) and (ii). Hereinafter, a copolymer (S) satisfying all of the requirements (i) to (v) may be referred to as a copolymer (S1).

(iii) (n_{C}) obtained by the following expression (1) is 4.5 or more and 40 or less $\begin{matrix}\left({n}_{C}\right) = \left(Mw\right) \times \left\{\left(Mass percent concentration of \left(C\right)/100\right.\right\} / Molecular weight of \\ \left(C\right)\end{matrix}$

In the expression (1), (Mw) is a weight-average molecular weight of the copolymer (S), the mass percent concentration of (C) is a content (% by mass) of the structural unit derived from the non-conjugated polyene (C) to the total mass of the structural units constituting the copolymer (S), and the molecular weight of (C) is a molecular weight of the non-conjugated polyene (C).

(iv) ratio P (η*_{(ω = 0.1)}/η*_{(ω = 100)}) between a complex viscosity η*_{(ω = 0.1)} (Pa·sec) at a frequency ω = 0.1 rad/sec to a complex viscosity /η*_{(ω = 100)} (Pa·sec) at a frequency ω = 100 rad/sec, which are obtained by linear viscoelasticity measurement (190°C) using a rheometer, and an intrinsic viscosity [η], and a mass percent concentration of the structural unit derived from the non-conjugated polyene (C) (content (% by mass) with respect to a total mass of structural units constituting the copolymer (S) derived from the non-conjugated polyene (C)) satisfy the following expression (2) $P / \left({\left[η\right]}^{2 / 9}\right) \leq the mass percent concentration of \left(C\right) \times 6$

(v) number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3) ${LCB}_{1000C} \leq 1 - 0.07 \times Ln \left(Mw\right)$

The requirement (iii) identifies that the range of (nc) obtained by the expression (1) is 4.5 or more and 40 or less. $\begin{matrix}\left({n}_{C}\right) = \left(Mw\right) \times \left\{\left(Mass percent concentration of \left(C\right)/100\right.\right\} / Molecular weight of \\ \left(C\right)\end{matrix}$

In the expression (1), (Mw) is a weight-average molecular weight of the copolymer (S), the mass percent concentration of (C) is a content (% by mass) of the structural unit derived from the non-conjugated polyene (C) to the total mass of the structural units constituting the copolymer (S), and the molecular weight of (C) is a molecular weight of the non-conjugated polyene (C).

(Mw) is a weight-average molecular weight in terms of polystyrene measured by gel permeation chromatography (GPC).

(n_{C}) is preferably 4.5 or more and 40 or less, and more preferably 4.5 or more and 35 or less.

(n_{C}) obtained by the above expression (1) is the number of structural units derived from the non-conjugated polyene (C) per weight-average molecular weight (Mw) of the copolymer (S).

In a case where (n_{C}) is equal to or more than the lower limit value, a sufficient crosslinking rate is easily obtained during hydrosilyl crosslinking. In addition, in a case of being equal to or less than the upper limit value, excessive crosslinking is less likely to occur, and the obtained foam body exhibits more excellent mechanical properties.

In a case where the requirement (iii) is satisfied, the copolymer (S) has a low content of long-chain branch, has a high crosslinking rate of hydroxy crosslinking, is excellent in balance of physical properties of the obtained foam body, such as mechanical properties, and is less likely to cause post-crosslinking, particularly, is excellent in heat aging resistance, which is preferable.

In a case where the copolymer (S) includes the structural unit (CX), (n_{C + cx}) obtained by the following expression (1') is preferably 4.5 or more and 40 or less, and more preferably 4.5 or more and 35 or less. $\left({n}_{C + cx}\right) = \left(Mw\right) \times \left[\begin{matrix}\left\{Mass percent concentration of \left(C\right)/100\right\} / Molecular weight \\ of \left(C\right) + \left\{Mass percent concentration of \left(CX\right)/100\right\} / Molecular weight of \left(CX\right)\end{matrix}\right]$

(n_{C + cx}) obtained by the above expression (1') is the total number of the number of structural units derived from the non-conjugated polyene (C) and the number of structural units derived from the non-conjugated polyene (CX) per weight-average molecular weight (Mw) of the copolymer (S).

The requirement (iv) identifies that, in the copolymer (S), the ratio P (/η*_{(ω = 0.1})/η*_{(ω = 100)}) between a complex viscosity η*_{(ω = 0.1)} (Pa·sec) at a frequency ω = 0.1 rad/sec to a complex viscosity η*_{(ω = 100)} (Pa-sec) at a frequency ω = 100 rad/sec, which are obtained by a linear viscoelasticity measurement (190°C) using a rheometer, and an intrinsic viscosity [η], and the mass percent concentration of the structural unit derived from the non-conjugated polyene (C) (content: % by mass) with respect to a total mass of structural units constituting the copolymer (S) derived from the non-conjugated polyene (C)) satisfy the following expression (2). $P / \left({\left[η\right]}^{2.9}\right) \leq Mass percent concentration of \left(C\right) \times 6$

As the rheometer, a viscoelasticity measuring device Ares (manufactured by Rheometric Scientific) is used, and measurement is performed by changing the frequency at 190°C and a strain of 1.0%.

The intrinsic viscosity [η] is a value measured in decalin at 135°C.

It is more preferable that the copolymer (S) satisfies the following expression (2'). $P / \left({\left[η\right]}^{2.9}\right) \leq Mass percent concentration of \left(C\right) \times 5.7$

The ratio P (η*_{(ω = 0.1})/η*_{(ω = 100)}) represents frequency dependence of the viscosity, and P/([η]^{2.9}) on the left side of the expression (2) and the expression (2') has a tendency to indicate a high value in a case where there are many long-chain branches, although there is an influence of short-chain branches, molecular weight, and the like.

In general, in the ethylene/α-olefin/non-conjugated polyene copolymer, as the structural unit derived from the non-conjugated polyene is more contained, the long-chain branches are more contained. However, it is considered that the copolymer (S) according to the present aspect can satisfy the above expression (2) because the copolymer (S) has fewer long-chain branches than the ethylene/α-olefin/non-conjugated polyene copolymer known in the related art.

The requirement (v) identifies that, in the copolymer (S), the number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3). ${LCB}_{1000C} \leq 1 - 0.07 \times Ln \left(Mw\right)$

According to the above expression (3), the upper limit value of the content of long-chain branches per unit carbon number of the copolymer (S) is specified. That is, the requirement (v) means that the proportion of long-chain branches of the copolymer (S) is small.

By satisfying the requirement (v), the copolymer (S) has excellent curing characteristics during hydrosilyl crosslinking. In addition, a foam body formed of the copolymer (S) has excellent heat aging resistance.

It is more preferable that the copolymer (S) satisfies the following expression (3'). ${LCB}_{1000 C} \leq 1 - 0.071 \times Ln \left(Mw\right)$

Mw and (LCB_{1000C}) in the above expression (3) and expression (3) are values obtained by a structural analysis method using 3D-GPC. Specifically, a 3D-high-temperature GPC device PL-GPC220 type (manufactured by Polymer Laboratories) is used for obtaining an absolute molecular weight distribution, and at the same time, an intrinsic viscosity is obtained with a viscometer. The main measurement conditions are as follows.
Detector: differential refractometer/GPC device built-in
2-Angle light scattering photometer PD2040 (manufactured by Precison Detectors)
Bridge-type viscometer PL-BV400 type (manufactured by Polymer Laboratories Ltd.)
Column: two TSKgel GMH_{HR}-H(S)HT + one TSKgel GMH_{HR}-M(S); (both are inner diameter of 7.8 mmϕ and length of 300 mm per one column)
Temperature: 140°C
Mobile phase: 1,2,4-trichlorobenzene (containing 0.025% BHT)
Injection volume: 0.5 mL
Sample concentration: ca 1.5 mg/mL
Sample filtration: filtration with a sintered filter having a pore size of 1.0 µm

A dn/dc value required for determining the absolute molecular weight is determined for each sample, from a dn/dc value of the standard polystyrene (molecular weight: 190,000) of 0.053 and the response intensity of the differential refractometer per unit injection mass.

A long-chain branching parameter g'i for each eluted component is calculated from a relationship between the intrinsic viscosity obtained from the viscometer and the absolute molecular weight obtained from the light scattering photometer, by the expression (v-1).$g {′}^{i} = \frac{{\left[η\right]}^{i .br}}{{\left[η\right]}^{i .lin}}$
- [*η*]i.br :: Measured intrinsic viscosity of i-th slice component
- [*η*]i.lin: Intrinsic viscosity assuming that i-th slice component does not have long-chain branched structure and only has short-chain branched structure

Here, a relational expression of [η] = KM^{v}; v = 0.725 is applied.

In addition, average values of g's are calculated from the following expressions (v-2), (v-3), and (v-4). Trendline which is assumed to have only short-chain branches is determined for each sample. $Number-average long-chain branch parameter g {′}^{n} = \frac{\sum \left({C}^{i}/{M}^{i}\times g{′}^{i}\right)}{\sum \left({C}^{i}/{M}^{i}\right)}$ $Weight-average long-chain branch parameter g {′}^{w} = \frac{\sum \left({C}^{i}\times g{′}^{i}\right)}{\sum {C}^{i}}$ $z-average long-chain branch parameter g {′}^{z} = \frac{\sum \left({C}^{i}\times {M}^{{i}^{2}}\times g{′}^{i}\right)}{\sum \left({C}^{i}\times {M}^{{i}^{2}}\right)}$
Cⁱ ; Concentration of each eluted component
Mⁱ : Absolute molecular weight of each eluted component

Furthermore, using the g'w, the number of branch points BrNo per molecule chain, the number of long-chain branches LCB_{1000C} per 1,000 carbon atoms, and a degree of branching λ per unit molecular weight are calculated. For the calculation of BrNo, the expression (v-5) of Zimm-Stockmayer is used, and for the calculation of LCB_{1000C} and λ, the expressions (v-6) and (v-7) are used. g is a long-chain branching parameter obtained from a radius of gyration Rg, and the following simple correlation is performed between g and g' obtained from the intrinsic viscosity. Various values of ε in the expression have been proposed depending on the shape of the molecule. Here, the calculation is performed assuming ε = 1 (that is, g' = g).$g {′}^{w} = \frac{1}{\sqrt{\sqrt{1 + BrNo/7} + 4 \times BrNo/9 π}}$$λ = BrNo/M$ ${LCB}_{1000 C} = λ \times 14000$

In the expression (V-7), 14,000 represents the molecular weight of 1,000 methylene (CH₂) units.

The intrinsic viscosity [η] of the copolymer (S) is preferably 0.1 to 5 dL/g, more preferably 0.5 to 5.0 dL/g, and still more preferably 0.5 to 4.0 dL/g.

The weight-average molecular weight (Mw) of the copolymer (S) is preferably 10,000 to 600,000, more preferably 30,000 to 500,000, and still more preferably 50,000 to 400,000.

In the present aspect, a production method of the copolymer (S) is not particularly limited, but the copolymer (S) is preferably obtained by copolymerizing monomers in the presence of a metallocene compound, and more preferably obtained by copolymerizing monomers in the presence of a catalyst system containing a metallocene compound.

Specifically, for example, the copolymer (S) can be produced by a method described in PCT International Publication No. WO2015/122495.

### [Hydrosilyl group-containing compound (Y)]

The hydrosilyl group-containing compound (Y) in the present invention is an organohydrogenpolysiloxane represented by Formula (a), which has at least one silicon atom-bonded aralkyl group and at least two silicon atom-bonded hydrogen atoms in a molecule.

The copolymer composition according to the present aspect may contain two or more kinds of the hydrosilyl group-containing compounds (Y).

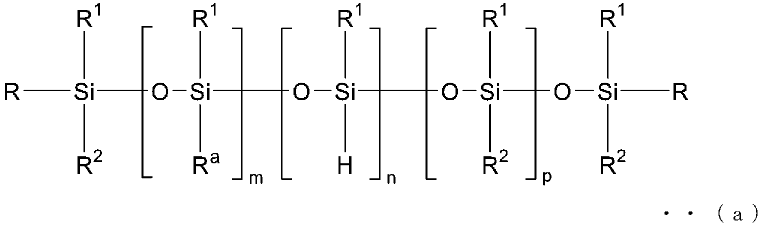

In Formula (a), n and p are 0 or a positive number, m is a number in a range of 1 to 20, a sum of n, m, and p is 5 to 50, R¹ and R² are each independently a monovalent alkyl group, and may be the same or different from each other, R^{a} is an aralkyl group, and R is a group selected from R¹, R², a hydrogen atom, and R^{a}, Here, in a case where n = 1, at least one R is a hydrogen atom, and in a case where n = 0, both R's are hydrogen atoms.

Such a hydrosilyl group-containing compound (Y) is a linear organohydrogenpolysiloxane having a relatively small degree of siloxane polymerization and having at least one silicon atom-bonded aralkyl group and at least two silicon atom-bonded hydrogen atoms in the molecule.

By selectively using the hydrosilyl group-containing compound (Y) in combination with the copolymer (S), it is possible to obtain a molded body particularly excellent in physical properties such as scorch resistance, moldability, elongation at break, and compression molding strain of the obtained molded product, and in particular, applicability to weather strip sponge materials and the like is improved.

In Formula (a), m is the number of diorganosilyloxy units having the silicon atom-bonded aralkyl group; and is a number in a range of 1 to 20, may be a number in a range of 2 to 10, and particularly preferably a number in a range of 3 to 6.

In Formula (a), n is the number of organohydrogensiloxane units having the silicon-bonded hydrogen atom in the side chain; and may be 0 or 1. In a case where n = 1, at least one of R's is a hydrogen atom, and in a case where n = 0, both R's are hydrogen atoms, and the structure has at least two silicon atom-bonded hydrogen atoms in the molecule.

Even in a case where n is a number other than 0 or 1, it is not hindered that one or both of R's at both ends of the molecular chain are the silicon atom-bonded hydrogen atoms. Furthermore, n is preferably a number other than 0 or 1, and more preferably a number which satisfies n ≥ m. More specifically, n may be a number in a range of 3 to 10, and is particularly preferably a number in a range of 3 to 9.

In Formula (a), p is the number of diorganosiloxy units not including the aralkyl group or the silicon atom-bonded hydrogen atom, and may be 0 or may be in a range of a number obtained by subtracting the values of n and m from the total degree of polymerization of the diorganosiloxane unit, which is represented by a value of the sum of the values of n, m, and p described later. For example, p may be a number in a range of 0 to 12, a number in a range of 0 to 10, a number in a range of 0 to 5, or 0 to 2, and is preferably 0 to 2.

The hydrosilyl group-containing compound (Y) has a relatively small degree of siloxane polymerization, and the sum of the values of n, m, and p is 5 to 50, preferably 5 to 20, and may be 5 to 15.

The hydrosilyl group-containing compound (Y) which is a crosslinking agent in the present invention is particularly preferably a compound in which m is a number in a range of 3 to 6, n is a number in a range of 3 to 9, and p is a number in a range of 0 to 2.

In Formula (a), R may be any group selected from R¹, R², a hydrogen atom, and R^{a}. However, in a case where n = 0 or 1, both or one of R's is a hydrogen atom.

R¹ and R² in the formula are each a monovalent alkyl group, and may be the same or different from each other, in which a part of carbon atom-bonded hydrogen atoms may be substituted with a halogen atom. Such an alkyl group may be an alkyl group having 1 to 20 carbon atoms, and industrially, it may be a methyl group.

In Formula (a), R^{a} is an aralkyl group, and may be an aralkyl group having 7 to 20 carbon atoms, preferably an aralkyl group having 7 to 15 carbon atoms. As the aralkyl group, a benzyl group, a phenylethyl group, a phenylpropyl group, a phenylbutyl group, and the like are exemplary examples, and an aralkyl group which includes at least one branched unit represented by -CH(CH₃)- in an alkylene group between an aryl group such as a phenyl group and a silicon atom is particularly preferable. In the present invention, it is particularly preferable that R^{a} is an aralkyl group represented by -CH₂-CH(CH₃)-C₆H₅.

The aralkyl group is a characteristic functional group that imparts usefulness as a crosslinking agent to the hydrosilyl group-containing compound (Y), and in particular, in a case where the aralkyl group is present together with the silicon atom-bonded hydrogen atom in the component in which n, m, and p are within the above-described range, the physical properties of the obtained molded product are significantly improved.

### [Platinum catalyst]

A platinum catalyst for hydrosilyl crosslinking has been widely used in a hydrosilylation crosslinking reaction accompanied by an addition reaction of a silicon atom-bonded hydrogen atom to a carbon-carbon double bond. The platinum catalyst for hydrosilyl crosslinking is an addition reaction catalyst, and the platinum catalyst can be used without particular limitation as long as the platinum catalyst promotes an addition reaction (hydrosilylation reaction of an alkene) between the alkenyl group of the copolymer (S) and the hydrosilyl group of the hydrosilyl group-containing compound (Y).

Specific platinum catalysts may be known platinum catalysts which are typically used for addition-curing type curing; and a fine powder metal platinum catalyst described in United States Patent No. 2970150, a chloroplatinic acid catalyst described in United States Patent No. 2823218, a complex compound of platinum and hydrocarbon, described in United States Patent No. 3159601 and United States Patent No. 3159662, a complex compound of chloroplatinic acid and olefin, described in United States Patent No. 3516946, and a complex compound of platinum and vinylsiloxane, described in United States Patent No. 3775452 and United States Patent No. 3814780, are exemplary examples.

More specifically, solid platinum (platinum black), chloroplatinic acid, a platinum-olefin complex, a platinum-alcohol complex, and a platinum catalyst in which these platinum catalysts are supported on a carrier such as alumina and silica are exemplary examples.

The copolymer composition according to the present aspect may contain two or more kinds of the platinum catalysts.

### [Foaming agent]

The copolymer composition according to the present aspect may contain a foaming agent. As the foaming agent, a baking soda-based foaming agent, azodicarbonamide (ADCA), N,N'-dinitropentamethylenetetramine (DPT), and 4,4'-oxybisbenzenesulfonylhydrazide (OBSH) are exemplary examples. Among these, a baking soda-based foaming agent is preferable because it is possible to reduce the specific gravity and increase the crosslinking density of the foam molded body.

### [Reaction inhibitor]

The copolymer composition according to the present aspect may contain a reaction inhibitor. The reaction inhibitor is a compound having a function of suppressing a crosslinking reaction (hydrosilylation addition reaction to an alkene) between the alkenyl group of the copolymer (S) and the hydrosilyl group of the hydrosilyl group-containing compound (Y). From the viewpoint of stably improving processability of the composition during kneading and molding, it is preferable to blend the reaction inhibitor.

As the reaction inhibitor, for example, benzotriazole; acetylene alcohols such as 1-hexyn-3-ol, 3-methyl-1-butyn-3-ol, 3,6-dimethyl-4-octyn-3,6-diol, 2,4,7,9-tetramethyl-5-decyne-4,7-diol, 1-ethynylcyclohexanol, and 3,5-dimethyl-1-hexyn-3-ol; acrylonitrile; amide compounds such as N,N-diallylacetamide, N,N-diallylbenzamide, N,N,N',N'-tetraallyl-o-phthalic acid diamide, N,N,N',N'-tetraallyl-m-phthalic acid diamide, and N,N,N',N',tetraallyl-p-phthalic acid diamide; and other organic peroxides such as sulfur, phosphorus, nitrogen, amine compounds, sulfur compounds, phosphorus compounds, tin, tin compounds, tetramethyl tetravinylcyclotetracyloxane, and hydroperoxides are specific exemplary examples.

Among these compounds, 3,5-dimethyl-1-hexyn-3-ol is particularly preferable.

The copolymer composition according to the present aspect may contain two or more kinds of the reaction inhibitors.

### [Antioxidant]

The copolymer composition according to the present aspect may contain an antioxidant. As the antioxidant, a hindered phenol-based antioxidant is preferable.

By containing the hindered phenol-based antioxidant in the copolymer composition according to the present aspect, it is possible to obtain a foam molded body having high water absorption and excellent compressive permanent strain.

The copolymer composition according to the present aspect may contain two or more kinds of the antioxidants.

As the hindered phenol-based antioxidant, 2,4,6-tris(3',5'-di-tert-butyl-4'-hydroxybenzyl)mesitylene (manufactured by ADEKA Corporation, trade name: ADEKA Stab AO-330, melting point: 243°C to 245°C), 1,3,5-tris(3,5-di-tert-butyl-4-hydroxybenzyl)-1,3,5-triazine-2,4,6(1H,3H,5H)-trione (manufactured by ADEKA Corporation, trade name: ADEKA Stab AO-20, melting point: 220°C to 222°C), 4,4'-butylidenebis(6-tert-butyl-m-cresol) (manufactured by ADEKA Corporation, trade name: ADEKA Stab AO-40, melting point: 210°C to 214°C), N,N'-bis[3-(3,5-di-tert-butyl-4-hydroxyphenyl)propionyl}hydrazine (manufactured by BASF Japan Ltd., trade name: Irganox MD1024, melting point: 224°C to 229°C), pentaerythritol tetrakis[3-(3,5-di-tert-butyl-4-hydroxyphenyl)propionate] (manufactured by BASF Japan Ltd., trade name: Irganox 1010, melting point: 110°C to 130°C), dibutylhydroxytoluene, and 2,5-di-tert-butylhydroquinone (manufactured by OUCHI SHINKO CHEMICAL INDUSTRIAL CO., LTD., trade name: Nocrac NS-7, melting point: 200°C or higher) are exemplary examples.

### [Anti-aging agent]

The copolymer composition according to the present aspect may contain an anti-aging agent.

As the anti-aging agent, a known anti-aging agent used in a general rubber composition can be used. Specifically, a sulfur-based anti-aging agent, an amine-based anti-aging agent, and the like are exemplary examples.

The anti-aging agent may be used alone, but it is preferable to use two or more kinds in combination in terms of maintaining heat aging resistance for a long time at a high temperature.

The sulfur-based anti-aging agent can be used in a range of preferably 0.2 to 10 parts by mass, more preferably 0.2 to 8 parts by mass, and particularly preferably 0.2 to 6 parts by mass with respect to 100 parts by mass of the copolymer (S). In a case where the sulfur-based anti-aging agent is used within the above-described range, the effect of improving the heat aging resistance is large and the crosslinking of the copolymer composition is not inhibited, which is preferable.

The amine-based anti-aging agent is used in a range of preferably 0.05 to 5 parts by mass, more preferably 0.1 to 4 parts by mass, and particularly preferably 0.2 to 3 parts by mass with respect to 100 parts by mass of the copolymer (S). In a case where the amine-based anti-aging agent is used within the above-described range, the effect of improving the heat aging resistance is large and the crosslinking of the copolymer composition is not inhibited, which is preferable.

### [Reinforcing agent]

The copolymer composition according to the present aspect may contain a reinforcing agent in order to improve physical properties such as tensile strength at break and tensile elongation at break.

The reinforcing agent is a known reinforcing agent blended in a rubber composition, and specifically, carbon black, carbon black surface-treated with a silane coupling agent, silica, calcium carbonate, activated calcium carbonate, fine talc, and precipitated silica are exemplary examples.

The copolymer composition according to the present aspect may contain two or more kinds of the reinforcing agents.

### [Softening agent]

The copolymer composition according to the present aspect may contain a softening agent.

The softening agent is a known softening agent blended in a rubber composition. Specifically, petroleum-based softening agents such as process oil, lubricating oil, paraffin oil, liquid paraffin, petroleum asphalt, and vaseline; coal tar-based softening agents such as coal tar; fatty oil-based softening agents such as castor oil, linseed oil, rapeseed oil, soybean oil, and palm oil; waxes such as beeswax and carnauba wax; naphthenic acid, pine oil, rosin, or derivatives thereof; synthetic polymer substances such as terpene resin, petroleum resin, and coumarone-indene resin; ester-based softening agents such as dioctyl phthalate and dioctyl adipate; and other softening agents such as microcrystalline wax, liquid polybutadiene, modified liquid polybutadiene, hydrocarbon-based synthetic lubricating oil, tall oil, and sub (factice) are exemplary examples. Among these, a petroleum-based softening agent is preferable, and paraffinic process oil is particularly preferable.

The copolymer composition according to the present aspect may contain two or more kinds of the softening agents.

### [Moisture absorbent]

The copolymer composition according to the present aspect may contain a moisture absorbent.

As the moisture absorbent, for example, calcium oxide, silica gel, sodium sulfate, molecular sieve, zeolite, and white carbon are exemplary examples. Among these, calcium oxide is preferable. A blending amount of the moisture absorbent is preferably 0.5 to 15 parts by weight, more preferably 1.0 to 12 parts by weight, and still more preferably 1.0 to 10 parts by weight with respect to 100 parts by weight of the copolymer (S).

The copolymer composition according to the present aspect may contain two or more kinds of the moisture absorbents.

### [Organic peroxide]

The copolymer composition according to the present aspect may contain an organic peroxide.

As the organic peroxide, for example, dicumyl peroxide (DCP), di-tert-butyl peroxide, 2,5-di-(tert-butylperoxy)hexane, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxybenzoate, tert-butylperoxyisopropyl carbonate, diacetyl peroxide, lauroyl peroxide, and tert-butylcumyl peroxide are exemplary examples.

### [Crosslinking aid]

The copolymer composition according to the present aspect may contain a crosslinking aid together with the organic peroxide.

As the crosslinking aid, specifically, sulfur; quinone dioxime-based compounds such as p-quinone dioxime; methacrylate-based compounds such as polyethylene glycol dimethacrylate; allyl-based compounds such as diallyl phthalate and triallyl cyanurate; maleimide-based compounds; and divinylbenzene are exemplary examples. Such a crosslinking aid is used in an amount of preferably 0.5 to 2 moles and more preferably approximately an equimolar amount with respect to 1 mol of the organic peroxide used.

### [Filling agent]

The copolymer composition according to the present aspect may contain a filling agent in order to reduce the blending cost.

As the filling agent, for example, talc, clay, and the like are exemplary examples. These filling agents may be used alone or in combination of two or more kinds thereof. Such a filling agent is used in a range of preferably 1 to 500 parts by mass, more preferably 1 to 400 parts by mass, and still more preferably 1 to 300 parts by mass with respect to 100 parts by mass of the copolymer (S). In a case where the blending amount of the filling agent is within the above-described range, it is possible to improve the mechanical properties of the obtained molded body, such as tensile strength, tear strength, and wear resistance.

### [Processing aid]

The copolymer composition according to the present aspect may contain a processing aid.

As the processing aid, agents generally blended with rubber as a processing aid can be widely used. Specifically, ricinoleic acid, stearic acid, palmitic acid, lauric acid, barium stearate, zinc stearate, calcium stearate, zinc laurate, and esters are exemplary examples. These processing aids may be used alone or in combination of two or more kinds thereof. The processing aid can be appropriately blended in an amount of preferably 30 parts by mass or less, more preferably 25 parts by mass or less, and still more preferably 20 parts by mass or less with respect to 100 parts by mass of the copolymer (S). In a case where the blending amount of the processing aid is within the above-described range, the processability such as kneading processability, extrusion processability, and injection moldability is excellent.

### [Activator]

The copolymer composition according to the present aspect may contain an activator.

As the activator, for example, glycols such as polyethylene glycol and diethylene glycol; and amines such as di-n-butylamine and triethanolamine are exemplary examples. These activators may be used alone or in combination of two or more kinds thereof. The activator can be appropriately blended in a range of preferably 0.2 to 15 parts by mass, more preferably 0.3 to 10 parts by mass, and still more preferably 0.5 to 8 parts by mass with respect to 100 parts by mass of the copolymer (S).

### [Other blending agents]

In addition to the above-described components, a known rubber blending agent, for example, a metal salt of an α,β-unsaturated organic acid, a crosslinking accelerator, a processing aid, a plasticizer, a tackifier, or the like can be appropriately blended in the copolymer composition according to the present aspect, as long as the objects of the present aspect are not impaired.

### [Other resins]

The copolymer composition according to the present aspect may contain a resin or rubber other than the copolymer (S), as long as the effects of the present aspect are not impaired. The resin or rubber other than the copolymer (S) is blended preferably 50 parts by mass or less and more preferably 30 parts by mass or less with respect to 100 parts by mass of the copolymer (S), and it is preferable not to blend the resin or rubber.

As the resin other than the copolymer (S), general-purpose resins such as polyethylene, polypropylene, and polystyrene are exemplary examples.

As the rubber, silicone rubber, ethylene-propylene random copolymer rubber (EPR), natural rubber, styrene-butadiene rubber, isoprene rubber, butadiene rubber, and chloroprene rubber are exemplary examples.

### [Blending]

In the copolymer composition according to the present aspect, a blending amount of the hydrosilyl group-containing compound (Y) is preferably 0.1 to 100 parts by mass, more preferably 0.1 to 75 parts by mass, still more preferably 0.1 to 50 parts by mass, even more preferably 0.2 to 30 parts by mass, even still more preferably 0.2 to 20 parts by mass, particularly preferably 0.5 to 10 parts by mass, and most preferably 0.5 to 5 parts by mass with respect to 100 parts by mass of the copolymer (S).

In the copolymer composition according to the present aspect, a blending amount of the platinum catalyst is preferably 0.001 to 10 parts by mass, more preferably 0.005 to 5.0 parts by mass, still more preferably 0.01 to 3.0 parts by mass, even more preferably 0.02 to 1.0 parts by mass, even still more preferably 0.03 to 0.7 parts by mass, particularly preferably 0.05 to 0.6 parts by mass, and most preferably 0.1 to 0.5 parts by mass with respect to 100 parts by mass of the copolymer (S).

### [Operational Effects]

In the copolymer composition according to the present aspect, since the crosslinking reaction is suppressed at a relatively low temperature (for example, 50°C to 130°C) during kneading-molding processing, it is possible to suppress a scorch phenomenon (burning or an unexpected early crosslinking reaction) due to the action of heat during processing or storage. In addition, at a crosslinking temperature (for example, 150°C to 200°C), crosslinking characteristics that the crosslinking can be carried out in a short time are also excellent. Therefore, by adopting various known molding methods, it is possible to perform molding at a higher speed than in the case of the copolymer composition in the related art.

### <Second aspect>

The copolymer composition according to the second aspect of the present invention contains a copolymer (S), a hydrosilyl group-containing compound (Y), a platinum catalyst, and a baking soda-based foaming agent.

The copolymer composition according to the second aspect of the present invention may further contain a reaction inhibitor. In addition, it may contain a hindered phenol-based antioxidant.

In addition, the foam molded body according to the second aspect of the present invention is a molded body including a foam body obtained by crosslinking and foaming the copolymer composition according to the second aspect.

In addition, a production method of a foam molded body according to the second aspect of the present invention is a production method of a foam molded body, including melt-extruding the copolymer composition according to the second aspect and crosslinking the copolymer composition in a hot air vulcanization tank.

### [Copolymer (S)]

The copolymer (S) in the present aspect is the same as the copolymer (S) in the first aspect, and a preferred aspect thereof is also the same as the first aspect.

That is, the copolymer (S) has the structural unit derived from the ethylene (A), the structural unit derived from the α-olefin (B) having 3 to 20 carbon atoms, and the structural unit derived from the non-conjugated polyene (C), which are described in the first aspect, and satisfies the above-described requirement (i) and the above-described requirement (ii).

The copolymer composition according to the present aspect may contain two or more kinds of the copolymers (S).

### [Hydrosilyl group-containing compound (Y)]

The hydrosilyl group-containing compound (Y) in the copolymer composition according to the present aspect is the same as the hydrosilyl group-containing compound (Y) in the first aspect.

That is, the hydrosilyl group-containing compound (Y) in the present aspect has the same structural feature as described in the first aspect.

A preferred aspect of the hydrosilyl group-containing compound (Y) in the present aspect is the same as the first aspect.

The copolymer composition according to the present aspect may contain two or more kinds of the hydrosilyl group-containing compounds (Y).

### [Platinum catalyst]

The platinum catalyst for hydrosilyl crosslinking in the present aspect is the same as the platinum catalyst for hydrosilyl crosslinking in the first aspect, and a preferred aspect thereof is also the same.

The copolymer composition according to the present aspect may contain two or more kinds of the platinum catalysts.

### [Baking soda-based foaming agent]

The baking soda-based foaming agent in the copolymer composition according to the present aspect is a baking soda-based foaming agent satisfying the following requirement (b).

(b) cumulative 10% unevenness degree in a number-based cumulative distribution curve of unevenness degree is 0.9 or less, and a cumulative 90% equivalent circle diameter in a number-based cumulative distribution curve of equivalent circle diameter is 43 µm or more

The copolymer composition according to the present aspect may contain two or more kinds of the baking soda-based foaming agents.

The unevenness degree in the requirement (b) is a ratio of an envelope peripheral length to a peripheral length, which are measured by a dynamic image analysis method using methyl ethyl ketone as a dispersion solvent. The peripheral length is a length of a projected contour of the particle, and the envelope peripheral length is a length around the figure which connects protrusions of the particle in the shortest distance.

In addition, the equivalent circle diameter is a diameter of a circle with an area equal to a projected area of particles.

The fact that the cumulative 10% unevenness degree is 0.9 or less means that a certain amount of particles having a small unevenness degree (large unevenness) are contained.

The fact that the cumulative 90% equivalent circle diameter is 43 µm or more means that a certain amount of particles having a large equivalent circle diameter are contained.

The peripheral length and the envelope peripheral length for obtaining the unevenness degree and the projected area of particles for obtaining the equivalent circle diameter are measured with a particle shape image analyzer P1TA3 (manufactured by SEISHIN ENTERPRISE Co., Ltd.) using MEK as a dispersion solvent and by a dynamic image analysis method (wet type, observation magnification: 4 times).

As a commercially available product of the baking soda-based foaming agent satisfying the requirement (b), Cellborn FE-507R (trade name) manufactured by EIWA CHEMICAL IND.CO.,LTD. is an exemplary example.

### [Blending agent and the like]

The reaction inhibitor, the antioxidant, the anti-aging agent, the reinforcing agent, the softening agent, the moisture absorbent, the organic peroxide, the crosslinking aid, the filling agent, the processing aid, the activator, other blending agents, and other resins can be appropriately blended in the same manner as in the first aspect.

### [Blending]

In the copolymer composition according to the present aspect, a preferred blending amount of the hydrosilyl group-containing compound (Y) is the same as that in the first aspect, with respect to 100 parts by mass of the copolymer (S).

In addition, in the copolymer composition according to the present aspect, a preferred blending amount of the platinum catalyst is the same as that in the first aspect, with respect to 100 parts by mass of the copolymer (S).

In the copolymer composition according to the present aspect, a blending amount of the baking soda-based foaming agent is preferably 0.001 to 10 parts by mass, more preferably 0.01 to 9 parts by mass, still more preferably 0.1 to 8 parts by mass, even more preferably 0.5 to 7.5 parts by mass, even still more preferably 1.0 to 7.0 parts by mass, particularly preferably 1.5 to 6.5 parts by mass, and most preferably 1.5 to 6.0 parts by mass with respect to 100 parts by mass of the copolymer (S).

In the copolymer composition according to the present aspect, a blending amount of the reaction inhibitor is preferably 0 to 2 parts by mass, more preferably 0 to 1.8 parts by mass, still more preferably 0 to 1.6 parts by mass, even more preferably 0 to 1.4 parts by mass, even still more preferably 0 to 1.2 parts by mass, particularly preferably 0 to 1.0 parts by mass, and most preferably 0 to 0.8 parts by mass with respect to 100 parts by mass of the copolymer (S).

In the copolymer composition according to the present aspect, a blending amount of the hindered phenol-based antioxidant is preferably 0.07 to 10 parts by mass, more preferably 1 to 8 parts by mass, and still more preferably 1 to 4 parts by mass with respect to 100 parts by mass of the copolymer (S).

In the copolymer composition according to the present aspect, a blending amount of the reinforcing agent is preferably 70 to 200 parts by mass and more preferably 70 to 150 parts by mass with respect to 100 parts by mass of the copolymer (S).

In the copolymer composition according to the present aspect, a blending amount of the softening agent is preferably 60 to 120 parts by mass and more preferably 60 to 110 parts by mass with respect to 100 parts by mass of the copolymer (S).

### [Foam molded body]

In order to obtain a molded body including a foam body obtained by crosslinking and foaming the copolymer composition according to the present aspect, a known processing method (molding method) of a general rubber blending material can be adopted. Specifically, the method is as follows.

For example, the composition can be prepared by kneading the copolymer (S) and other components at a temperature of 80°C to 170°C for 3 to 10 minutes using an internal mixer such as a Banbury mixer, a kneader, and an intermix; adding the hydrosilyl group-containing compound (Y), the platinum catalyst, the reaction inhibitor, the reinforcing agent, the softening agent, and the baking soda-based foaming agent in amounts within the above-described ranges; adding other blending agents, other rubbers, resins, or the like as necessary; and then kneading the mixture at a roll temperature of 50°C to 130°C for 5 to 30 minutes using rolls such as an open roll or using a kneader, followed by fractionation. In this manner, a composition having a ribbon shape or a sheet shape is usually obtained.

The obtained composition is preliminarily molded into a desired shape by various molding methods such as an extrusion molding machine, a calender roll, a press, an injection molding machine, and a transfer molding machine, or at the same time as the molding, the molded product is introduced into a vulcanization tank and heated to be crosslinked, whereby a foam molded body including a foam body obtained by crosslinking and foaming the copolymer composition can be obtained.

As the heating method, a known method can be used without limitation, but it is particularly preferable to heat at a temperature of 150°C to 200°C for 1 to 30 minutes using a heating furnace with a heating form such as hot air, a glass bead fluidized bed, extremely high frequency electromagnetic wave (UHF), steam, and LCM (thermoplastic salt tank). In the molding and crosslinking, a mold may or may not be used. In a case where the mold is not used, the rubber composition is usually continuously molded, crosslinked, and foamed.

The foam molded body obtained from the copolymer composition according to the present aspect can be used for various applications. Specifically, the foam molded body can be suitably used for applications such as a high-foam sealing material, an automobile sealing material, a civil engineering and construction sealing material, and various industrial sealing materials. In particular, the foam molded body is suitable for a weather strip sponge material (an expansion ratio is preferably 1.3 to 4.0 times), and is also suitable for a high-foam sponge material (an expansion ratio is preferably more than 3.0 times and 30 times or less) used for a sponge, a damper, or the like.

As the foam molded body, specifically, a weather strip sponge material such as a door sponge, an opening trim sponge, a hood seal sponge, and a trunk seal sponge; a high-foam sponge material such as a heat insulating sponge and a dam rubber are exemplary examples.

### [Operational Effects]

The foam molded body obtained from the copolymer composition according to the present aspect exhibits excellent sponge properties having a low specific gravity and a high water absorption. In addition, a compressive permanent strain is small.

The reason for this is not clear, but it is considered that, in a case where the copolymer composition according to the present aspect contains the baking soda-based foaming agent satisfying the requirement (b), the crosslinking reaction and the foaming agent decomposition reaction proceed simultaneously. In addition, this is considered to be because the crosslinking density is likely to increase.

### <Third aspect>

The copolymer composition according to the third aspect of the present invention contains a copolymer which is the copolymer (S1) described as the preferred aspect of the copolymer (S) in the first aspect and has an intrinsic viscosity [η] of 2.0 to 4.0 dL/g, a hydrosilyl group-containing compound (Y), a platinum catalyst, carbon black, paraffinic process oil, and a reaction inhibitor as necessary.

In addition, a Mooney viscosity "ML (1 + 4) 100°C" of a composition obtained by mixing components other than the hydrosilyl group-containing compound (Y), the platinum catalyst, and the reaction inhibitor, which is measured by a method in accordance with JIS K 6300-1: 2013, is 8 to 200.

In addition, the crosslinked molded body according to the third aspect of the present invention is obtained by crosslinking the copolymer composition according to the third aspect.

### [Copolymer (S)]

The copolymer (S) in the present aspect is the copolymer (S1) and has an intrinsic viscosity [η] in a specific range. That is, the copolymer (S) has the structural unit derived from the ethylene (A), the structural unit derived from the α-olefin (B) having 3 to 20 carbon atoms, and the structural unit derived from the non-conjugated polyene (C), which are described in the first aspect, satisfies the above-described requirement (i) and the above-described requirement (ii), satisfies the above-described requirements (iii) to (v), and has an intrinsic viscosity [η] of 2.0 to 4.0 dL/g.

In a case where the intrinsic viscosity [η] of the copolymer (S) is 2.0 to 4.0 dL/g, it is easy to adjust the Mooney viscosity "ML (1 + 4) 100°C" of the composition obtained by mixing the components other than the hydrosilyl group-containing compound (Y), the platinum catalyst, and the reaction inhibitor, which is measured by the method in accordance with JIS K 6300-1: 2013, to be in the range of 8 to 200.

The intrinsic viscosity [η] of the copolymer (S) in the present aspect is preferably 2.2 to 3.5 dL/g and more preferably 2.4 to 3.0 dL/g.

The copolymer (S) in the present aspect is the same as the copolymer (S) in the first aspect, including the preferred aspect, except that the copolymer (S) is the copolymer (S1) and the range of the intrinsic viscosity is specified.

The copolymer composition according to the present aspect may contain two or more kinds of the copolymers (S1) having an intrinsic viscosity [η] within the above-described range.

### [Hydrosilyl group-containing compound (Y)]

The hydrosilyl group-containing compound (Y) in the copolymer composition according to the present aspect is the same as the hydrosilyl group-containing compound (Y) in the first aspect.

That is, the hydrosilyl group-containing compound (Y) in the present aspect has the same structural feature as described in the first aspect.

A preferred aspect of the hydrosilyl group-containing compound (Y) in the present aspect is the same as the first aspect.

The copolymer composition according to the present aspect may contain two or more kinds of the hydrosilyl group-containing compounds (Y).

### [Platinum catalyst]

The platinum catalyst for hydrosilyl crosslinking in the present aspect is the same as the platinum catalyst for hydrosilyl crosslinking in the first aspect, and a preferred aspect thereof is also the same.

The copolymer composition according to the present aspect may contain two or more kinds of the platinum catalysts.

### [Reinforcing agent]

The copolymer composition according to the present aspect contains carbon black as a reinforcing agent. The copolymer composition according to the present aspect preferably contains 20% by mass or more of carbon black, more preferably contains 30% by mass or more of carbon black, and particularly preferably contains only carbon black, with respect to the entire reinforcing agent contained.

The carbon black may be surface-treated with a silane coupling agent.

### [Softening agent]

The copolymer composition according to the present aspect contains paraffinic process oil as a softening agent. The copolymer composition according to the present aspect preferably contains 5% by mass or more of paraffinic process oil, more preferably contains 10% by mass or more of paraffinic process oil, and particularly preferably contains only paraffinic process oil, with respect to the entire softening agent contained.

As a softening agent other than the paraffinic process oil, petroleum-based softening agents such as process oil, lubricating oil, paraffin oil, liquid paraffin, petroleum asphalt, and vaseline; coal tar-based softening agents such as coal tar; fatty oilbased softening agents such as castor oil, linseed oil, rapeseed oil, soybean oil, and palm oil; waxes such as beeswax and carnauba wax; naphthenic acid, pine oil, rosin, or derivatives thereof; synthetic polymer substances such as terpene resin, petroleum resin, and coumarone-indene resin; ester-based softening agents such as dioctyl phthalate and dioctyl adipate; and other softening agents such as microcrystalline wax, liquid polybutadiene, modified liquid polybutadiene, hydrocarbon-based synthetic lubricating oil, tall oil, and sub (factice) are exemplary examples.

### [Blending agent and the like]

The reaction inhibitor, the antioxidant, the anti-aging agent, the reinforcing agent other than the carbon black, the softening agent other than the paraffinic process oil, the moisture absorbent, the organic peroxide, the crosslinking aid, the filling agent, the processing aid, the activator, other blending agents, and other resins can be appropriately blended in the same manner as in the first aspect.

### [Blending]

In the copolymer composition according to the present aspect, a preferred blending amount of the hydrosilyl group-containing compound (Y) is the same as that in the first aspect, with respect to 100 parts by mass of the copolymer (S).

In addition, in the copolymer composition according to the present aspect, a preferred blending amount of the platinum catalyst is the same as that in the first aspect, with respect to 100 parts by mass of the copolymer (S).

In the copolymer composition according to the present aspect, a blending amount of the carbon black is 0.1 to 200 parts by mass, more preferably 20 to 200 parts by mass, and still more preferably 30 to 150 parts by mass with respect to 100 parts by mass of the copolymer (S).

In a case where the blending amount of the carbon black is equal to or more than the lower limit value, the mechanical strength is excellent. In a case where the blending amount of the carbon black is equal to or less than the upper limit value, the processability is excellent.

In the copolymer composition according to the present aspect, a blending amount of the paraffinic process oil is 0.1 to 200 parts by mass, more preferably 10 to 100 parts by mass, and still more preferably 20 to 80 parts by mass with respect to 100 parts by mass of the copolymer (S).

In a case where the blending amount of the paraffinic process oil is equal to or more than the lower limit value, the processability is excellent. In a case where the blending amount of the paraffinic process oil is equal to or less than the upper limit value, the mechanical strength is excellent.

### [Mooney viscosity]

The Mooney viscosity "ML (1 + 4) 100°C" of the composition obtained by mixing components other than the hydrosilyl group-containing compound (Y), the catalyst, and the reaction inhibitor from the copolymer composition according to the present aspect is 8 to 200. Here, M represents a Mooney unit, L represents a shape of a rotor, (1 + 4) represents preheating for 1 minute and rotation of the rotor for 4 minutes, and 100°C represents a measurement temperature. A Mooney viscometer SMV-202 (manufactured by Shimadzu Corporation) is used for the measurement.

The "ML (1 + 4) 100°C" of the mixed composition is preferably 20 to 150 and more preferably 40 to 100. In a case where "ML (1 + 4) 100°C" is equal to or more than the lower limit value, the kneading processability is excellent. In a case of being equal to or less than the upper limit value, the processability during molding, such as extrusion processability and injection moldability, is excellent.

### [Crosslinked molded body]

The copolymer composition according to the present aspect is preliminarily molded into a desired shape by various molding methods such as an extrusion molding machine, a calender roll, a press, an injection molding machine, and a transfer molding machine, or at the same time as the molding, the molded product is introduced into a vulcanization tank and heated to be crosslinked, whereby a crosslinked molded body obtained by crosslinking the copolymer composition can be obtained.

As the heating method, a known method can be used without limitation, but it is particularly preferable to heat at a temperature of 150°C to 200°C for 1 to 30 minutes using a heating furnace with a heating form such as hot air, a glass bead fluidized bed, extremely high frequency electromagnetic wave (UHF), steam, and LCM (thermoplastic salt tank). In the molding and crosslinking, a mold may or may not be used. In a case where the mold is not used, the copolymer composition is usually continuously molded and crosslinked.

The crosslinked molded body obtained from the copolymer composition according to the present aspect can be used for various applications. Specifically, the crosslinked molded body is suitably used for a weatherstrip sponge or the like.

### [Operational Effects]

The copolymer composition according to the present aspect is excellent in terms of moldability such as extrusion moldability, press moldability, and injection moldability, and processability such as roll processability. In addition, a crosslinked molded body obtained by crosslinking the copolymer composition is excellent in low-temperature characteristics (flexibility at low temperature, rubber elasticity, and the like), mechanical characteristics, heat resistance stability, and the like.

The reason for this is not clear, but it is considered to be high crosslink density and uniform crosslinked structure.

### <Fourth aspect>

The copolymer composition according to the fourth aspect of the present invention contains a copolymer which is the copolymer (S1) described as the preferred aspect of the copolymer (S) in the first aspect and has an intrinsic viscosity [η] of 0.5 dL/g or more and less than 2.0 dL/g, a hydrosilyl group-containing compound (Y), a platinum catalyst, and paraffinic process oil.

In addition, a "Mooney viscosity ML (1 + 4) 100°C" measured by a method in accordance with JIS K 6300-1: 2013 is 0.1 to 8.

In addition, the crosslinked molded body according to the fourth aspect of the present invention is obtained by crosslinking the copolymer composition according to the fourth aspect.

### [Copolymer (S)]

The copolymer (S) in the present aspect is the copolymer (S1) and has an intrinsic viscosity [η] in a specific range. That is, the copolymer (S) has the structural unit derived from the ethylene (A), the structural unit derived from the α-olefin (B) having 3 to 20 carbon atoms, and the structural unit derived from the non-conjugated polyene (C), which are described in the first aspect, satisfies the above-described requirement (i) and the above-described requirement (ii), satisfies the above-described requirements (iii) to (v), and has an intrinsic viscosity [η] of 0.5 dL/g or more and less than 2.0 dL/g.

In a case where the intrinsic viscosity [η] of the copolymer (S) is 0.5 dL/g or more and less than 2.0 dL/g, it is easy to adjust the Mooney viscosity "ML (1 + 4) 100°C" of the copolymer composition, which is measured by the method in accordance with JIS K 6300-1: 2013, to be in the range of 0.1 to 8.

The intrinsic viscosity [η] of the copolymer (S) in the present aspect is preferably 0.6 to 1.5 dL/g and more preferably 0.7 to 1.3 dL/g.

The copolymer (S) in the present aspect is the same as the copolymer (S) in the first aspect, including the preferred aspect, except that the copolymer (S) is the copolymer (S1) and the range of the intrinsic viscosity is specified.

The copolymer composition according to the present aspect may contain two or more kinds of the copolymers (S1) having an intrinsic viscosity [η] within the above-described range.

### [Hydrosilyl group-containing compound (Y)]

The hydrosilyl group-containing compound (Y) in the copolymer composition according to the present aspect is the same as the hydrosilyl group-containing compound (Y) in the first aspect.

That is, the hydrosilyl group-containing compound (Y) in the present aspect has the same structural feature as described in the first aspect.

A preferred aspect of the hydrosilyl group-containing compound (Y) in the present aspect is the same as the first aspect.

The copolymer composition according to the present aspect may contain two or more kinds of the hydrosilyl group-containing compounds (Y).

### [Platinum catalyst]

The platinum catalyst for hydrosilyl crosslinking in the present aspect is the same as the platinum catalyst for hydrosilyl crosslinking in the first aspect, and a preferred aspect thereof is also the same.

The copolymer composition according to the present aspect may contain two or more kinds of the platinum catalysts.

### [Softening agent]

The copolymer composition according to the present aspect contains paraffinic process oil as a softening agent. The copolymer composition according to the present aspect preferably contains 5% by mass or more of paraffinic process oil, more preferably contains 10% by mass or more of paraffinic process oil, and particularly preferably contains only paraffinic process oil, with respect to the entire softening agent contained.

As a softening agent other than the paraffinic process oil, petroleum-based softening agents such as process oil, lubricating oil, paraffin oil, liquid paraffin, petroleum asphalt, and vaseline; coal tar-based softening agents such as coal tar; fatty oilbased softening agents such as castor oil, linseed oil, rapeseed oil, soybean oil, and palm oil; waxes such as beeswax and carnauba wax; naphthenic acid, pine oil, rosin, or derivatives thereof; synthetic polymer substances such as terpene resin, petroleum resin, and coumarone-indene resin; ester-based softening agents such as dioctyl phthalate and dioctyl adipate; and other softening agents such as microcrystalline wax, liquid polybutadiene, modified liquid polybutadiene, hydrocarbon-based synthetic lubricating oil, tall oil, and sub (factice) are exemplary examples.

### [Blending agent and the like]

The reaction inhibitor, the antioxidant, the anti-aging agent, the reinforcing agent, the softening agent other than the paraffinic process oil, the moisture absorbent, the organic peroxide, the crosslinking aid, the filling agent, the processing aid, the activator, other blending agents, and other resins can be appropriately blended in the same manner as in the first aspect.

### [Blending]

In the copolymer composition according to the present aspect, a preferred blending amount of the hydrosilyl group-containing compound (Y) is the same as that in the first aspect, with respect to 100 parts by mass of the copolymer (S).

In addition, in the copolymer composition according to the present aspect, a preferred blending amount of the platinum catalyst is the same as that in the first aspect, with respect to 100 parts by mass of the copolymer (S).

In the copolymer composition according to the present aspect, a blending amount of the carbon black is 30 to 100 parts by mass, more preferably 30 to 90 parts by mass, and still more preferably 30 to 80 parts by mass with respect to 100 parts by mass of the copolymer (S).

In a case where the blending amount of the carbon black is within the above-described range, the balance between the processability and the mechanical strength is excellent.

In the copolymer composition according to the present aspect, a blending amount of the paraffinic process oil is 10 to 100 parts by mass, more preferably 20 to 90 parts by mass, and still more preferably 30 to 80 parts by mass with respect to 100 parts by mass of the copolymer (S).

In a case where the blending amount of the oil is equal to or more than the lower limit value, the processability is excellent. In a case where the blending amount of the paraffinic process oil is equal to or less than the upper limit value, the mechanical strength is excellent.

### [Mooney viscosity]

The Mooney viscosity "ML (1 + 4) 100°C" of the copolymer composition according to the present aspect is 0.1 to 8. Here, M represents a Mooney unit, L represents a shape of a rotor, (1 + 4) represents preheating for 1 minute and rotation of the rotor for 4 minutes, and 100°C represents a measurement temperature. A Mooney viscometer SMV-202 (manufactured by Shimadzu Corporation) is used for the measurement.

In a case where the "ML (1 + 4) 100°C" is within the above-described range, the composition can be easily formed into a desired shape by hand such as clay work.

### [Crosslinked molded body]

The copolymer composition according to the present aspect is preliminarily molded into a desired shape by various molding methods such as an extrusion molding machine, a calender roll, a press, an injection molding machine, and a transfer molding machine, or at the same time as the molding, the molded product is introduced into a vulcanization tank and heated to be crosslinked, whereby a crosslinked molded body obtained by crosslinking the copolymer composition can be obtained.

As the heating method, a known method can be used without limitation, but it is particularly preferable to heat at a temperature of 150°C to 200°C for 1 to 30 minutes using a heating furnace with a heating form such as hot air, a glass bead fluidized bed, extremely high frequency electromagnetic wave (UHF), steam, and LCM (thermoplastic salt tank). In the molding and crosslinking, a mold may or may not be used. In a case where the mold is not used, the copolymer composition is usually continuously molded and crosslinked.

The crosslinked molded body obtained from the copolymer composition according to the present aspect can be used for various applications. Specifically, the crosslinked molded body is suitably used for a golf club grip, a cane grip, a toothbrush grip, a tableware (spoon, fork, chopsticks) grip, a broom grip, a teacup grip, and the like.

### [Operational Effects]

With the copolymer composition according to the present aspect, the compressive permanent strain of a crosslinked molded body obtained by crosslinking the copolymer composition is small. In addition, in a case where the copolymer composition is crosslinked, since the copolymer composition has a hardness moldable by hand such as clay work, handmade molding is possible.

The reason why the compressive permanent strain is small is not clear, but it is considered to be high crosslink density and uniform crosslinked structure.

### <Fifth aspect>

The copolymer composition according to the fifth aspect of the present invention contains a copolymer which is the copolymer (S1) described as the preferred aspect of the copolymer (S) in the first aspect and has an intrinsic viscosity [η] of 0.5 dL/g or more and less than 2.0 dL/g, a hydrosilyl group-containing compound (Y), a platinum catalyst, carbon black, and paraffinic process oil.

In addition, a Brookfield rotational viscosity at 25°C, which is measured by a method in accordance with JIS K 7117: 1999, is 6,000 Pa·s or less.

In addition, the crosslinked molded body according to the fifth aspect of the present invention is obtained by crosslinking the copolymer composition according to the fifth aspect.

### [Copolymer (S)]

The copolymer (S) in the present aspect is the copolymer (S1) and has an intrinsic viscosity [η] in a specific range. That is, the copolymer (S) has the structural unit derived from the ethylene (A), the structural unit derived from the α-olefin (B) having 3 to 20 carbon atoms, and the structural unit derived from the non-conjugated polyene (C), which are described in the first aspect, satisfies the above-described requirement (i) and the above-described requirement (ii), satisfies the above-described requirements (iii) to (v), and has an intrinsic viscosity [η] of 0.5 dL/g or more and less than 2.0 dL/g.

In a case where the intrinsic viscosity [η] of the copolymer (S) is 0.5 dL/g or more and less than 2.0 dL/g, it is easy to adjust the Brookfield rotational viscosity of the copolymer composition at 25°C, which is measured by the method in accordance with JIS K 7117: 1999, to be 6,000 Pa·s or less.

The intrinsic viscosity [η] of the copolymer (S) in the present aspect is preferably 0.6 to 1.5 dL/g and more preferably 0.7 to 1.3 dL/g.

The copolymer (S) in the present aspect is the same as the copolymer (S) in the first aspect, including the preferred aspect, except that the copolymer (S) is the copolymer (S1) and the range of the intrinsic viscosity is specified.

The copolymer composition according to the present aspect may contain two or more kinds of the copolymers (S1) having an intrinsic viscosity [η] within the above-described range.

### [Hydrosilyl group-containing compound (Y)]

The hydrosilyl group-containing compound (Y) in the copolymer composition according to the present aspect is the same as the hydrosilyl group-containing compound (Y) in the first aspect.

That is, the hydrosilyl group-containing compound (Y) in the present aspect has the same structural feature as described in the first aspect.

A preferred aspect of the hydrosilyl group-containing compound (Y) in the present aspect is the same as the first aspect.

The copolymer composition according to the present aspect may contain two or more kinds of the hydrosilyl group-containing compounds (Y).

### [Platinum catalyst]

The platinum catalyst for hydrosilyl crosslinking in the present aspect is the same as the platinum catalyst for hydrosilyl crosslinking in the first aspect, and a preferred aspect thereof is also the same.

The copolymer composition according to the present aspect may contain two or more kinds of the platinum catalysts.

### [Reinforcing agent]

The copolymer composition according to the present aspect contains carbon black as a reinforcing agent. The copolymer composition according to the present aspect preferably contains 5% by mass or more of carbon black, more preferably contains 10% by mass or more of carbon black, and particularly preferably contains only carbon black, with respect to the entire reinforcing agent contained.

The carbon black may be surface-treated with a silane coupling agent.

### [Softening agent]

The copolymer composition according to the present aspect contains paraffinic process oil as a softening agent. The copolymer composition according to the present aspect preferably contains 5% by mass or more of paraffinic process oil, more preferably contains 10% by mass or more of paraffinic process oil, and particularly preferably contains only paraffinic process oil, with respect to the entire softening agent contained.

As a softening agent other than the paraffinic process oil, petroleum-based softening agents such as process oil, lubricating oil, paraffin oil, liquid paraffin, petroleum asphalt, and vaseline; coal tar-based softening agents such as coal tar; fatty oilbased softening agents such as castor oil, linseed oil, rapeseed oil, soybean oil, and palm oil; waxes such as beeswax and carnauba wax; naphthenic acid, pine oil, rosin, or derivatives thereof; synthetic polymer substances such as terpene resin, petroleum resin, and coumarone-indene resin; ester-based softening agents such as dioctyl phthalate and dioctyl adipate; and other softening agents such as microcrystalline wax, liquid polybutadiene, modified liquid polybutadiene, hydrocarbon-based synthetic lubricating oil, tall oil, and sub (factice) are exemplary examples.

### [Blending agent and the like]

The reaction inhibitor, the antioxidant, the anti-aging agent, the reinforcing agent other than the carbon black, the softening agent other than the paraffinic process oil, the moisture absorbent, the organic peroxide, the crosslinking aid, the filling agent, the processing aid, the activator, other blending agents, and other resins can be appropriately blended in the same manner as in the first aspect.

### [Blending]

In the copolymer composition according to the present aspect, a preferred blending amount of the hydrosilyl group-containing compound (Y) is the same as that in the first aspect, with respect to 100 parts by mass of the copolymer (S).

In addition, in the copolymer composition according to the present aspect, a preferred blending amount of the platinum catalyst is the same as that in the first aspect, with respect to 100 parts by mass of the copolymer (S).

In the copolymer composition according to the present aspect, a blending amount of the carbon black is 0.1 to 200 parts by mass, more preferably 5 to 200 parts by mass, and still more preferably 10 to 180 parts by mass with respect to 100 parts by mass of the copolymer (S).

In a case where the blending amount of the carbon black is within the above-described range, the balance between the fluidity, the mechanical strength, and the compressive permanent strain is excellent.

In the copolymer composition according to the present aspect, a blending amount of the paraffinic process oil is 100 to 400 parts by mass, more preferably 200 to 365 parts by mass, and still more preferably 245 to 325 parts by mass with respect to 100 parts by mass of the copolymer (S).

In a case where the blending amount of the paraffinic process oil is within the above-described range, the balance between the fluidity, the mechanical strength, and the compressive permanent strain is excellent.

### [Brookfield rotational viscosity]

The Brookfield rotational viscosity (B-type viscosity) of the copolymer composition according to the present aspect at 25°C, which is measured by the method in accordance with JIS K 7117: 1999, is 6,000 Pa·s or less.

The brookfield rotational viscosity is preferably 50 to 5,800 Pa·s and more preferably 50 to 5,600 Pa·s. In a case where the Brookfield rotational viscosity is within the above-described range, the fluidity is excellent.

A Brookfield rotational viscometer Model DV-11 (manufactured by Brookfield Engineering Laboratories, Inc.) is used for the measurement.

### [Crosslinked molded body]

The copolymer composition according to the present aspect is preliminarily molded into a desired shape by various molding methods such as an extrusion molding machine, a calender roll, a press, an injection molding machine, and a transfer molding machine, or at the same time as the molding, the molded product is introduced into a vulcanization tank and heated to be crosslinked, whereby a crosslinked molded body obtained by crosslinking the copolymer composition can be obtained.

As the heating method, a known method can be used without limitation, but it is particularly preferable to heat at a temperature of 150°C to 200°C for 1 to 30 minutes using a heating furnace with a heating form such as hot air, a glass bead fluidized bed, extremely high frequency electromagnetic wave (UHF), steam, and LCM (thermoplastic salt tank). In the molding and crosslinking, a mold may or may not be used. In a case where the mold is not used, the copolymer composition is usually continuously molded and crosslinked.

The crosslinked molded body obtained from the copolymer composition according to the present aspect can be used for various applications. Specifically, the crosslinked molded body is suitably used for a potting material, a rubber coating, and the like.

### [Operational Effects]

With the copolymer composition according to the present aspect, a crosslinked molded body obtained by crosslinking the copolymer composition has excellent rubber physical properties.

The reason for this is not clear, but it is considered to be uniform crosslinked structure.

### <Sixth aspect>

The copolymer composition according to the sixth aspect of the present invention contains a copolymer which is the copolymer (S1) described as the preferred aspect of the copolymer (S) in the first aspect, a hydrosilyl group-containing compound (Y), a platinum catalyst, a reaction inhibitor, and an organic peroxide.

The "part by mass" in the present specification and Claims is part by mass in terms of solid content excluding a solvent.

In addition, a numerical range represented by "to" means a numerical range in which numerical values before and after "to" are the lower limit value and the upper limit value.

### [Copolymer (S)]

The copolymer (S) according to the present aspect has a structural unit derived from an ethylene (A), a structural unit derived from an α-olefin (B) having 3 to 20 carbon atoms, and a structural unit derived from a non-conjugated polyene (C).

With respect to all structural units constituting the copolymer (S), a mass percent concentration of the total of the structural unit derived from the ethylene (A), the structural unit derived from the α-olefin (B) having 3 to 20 carbon atoms, and the structural unit derived from the non-conjugated polyene (C) is preferably 80% by mass or more, more preferably 90% by mass or more, still more preferably 92% by mass or more, and particularly preferably 100% by mass.

As the α-olefin (B) having 3 to 20 carbon atoms (hereinafter, may be simply referred to as "α-olefin (B)"), for example, propylene, 1-butene, 1-pentene, 1-hexene, 4-methyl-1-pentene, 1-heptene, 1-octene, 1-decene, 1-dodecene, 1-tetradecene, 1-hexadecene, and 1 -eicosene are exemplary examples.

Among these, α-olefins having 3 to 8 carbon atoms, such as propylene, 1-butene, 1-hexene, and 1-octene, are preferable, and propylene is particularly preferable. Such an α-olefin is preferable because the raw material cost is relatively low, the obtained copolymer (S) exhibits excellent mechanical properties, and a molded body having rubber elasticity can be obtained. These α-olefins may be used alone or in combination of two or more kinds thereof.

The non-conjugated polyene (C) is a non-conjugated polyene including, in a molecule, a total of two or more partial structures of at least one type selected from Formula (1) and Formula (II).

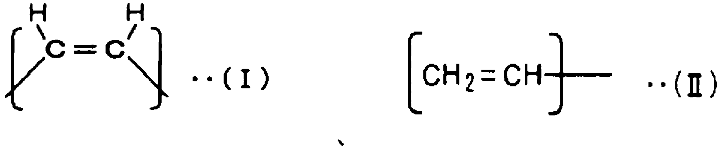

As the non-conjugated polyene (C), 5-vinyl-2-norbornene (VNB), norbornadiene, 1,4-hexadiene, and dicyclopentadiene are exemplary examples. Among these, from the viewpoint that VNB is easily available and has favorable hydrosilyl crosslinking, and it is easy to improve heat resistance of a polymer composition, it is preferable that the non-conjugated polyene (C) includes VNB and it is more preferable that the non-conjugated polyene (C) is VNB. The non-conjugated polyene (C) may be used alone or in combination of two or more kinds thereof.

The copolymer (S) according to the present aspect may further include a structural unit (CX) derived from a non-conjugated polyene (CX) having only one partial structure selected from the group consisting of General Formulae (1) and (11) described above in a molecule, as long as the effect for the present aspect is not impaired.

As the non-conjugated polyene (CX), 5-ethylidene-2-norbornene (ENB), 5-methylene-2-norbornene, 5-(2-propenyl)-2-norbornene, 5-(3-butene)-2-norbornene, 5-(1-methyl-2-propenyl)-2-norbornene, 5-(4-pentenyl)-2-norbornene, 5-(1-methyl-3-butene)-2-norbornene, 5-(5-hexenyl)-2-norbornene, 5-(1-methyl-4-pentenyl)-2-norbornene, 5-(2,3-dimethyl-3-butene)-2-norbomene, 5-(2-ethyl-3-butene)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, and 5-(1,2,3-trimethyl-4-pentenyl)-2-norbornene are exemplary examples.

Among these, from the viewpoint that ENB is easily available and it is easy to control a crosslinking rate during hydrosilyl crosslinking and to obtain favorable mechanical properties, ENB is preferable. The non-conjugated polyene (CX) may be used alone or in combination of two or more kinds thereof.

In a case where the copolymer (S) according to the present aspect includes a structural unit derived from the non-conjugated polyene (CX), a mass percent concentration of the structural unit is preferably 0% to 20% by mass, more preferably 0% to 10% by mass, and still more preferably 0.01% to 8% by mass with respect to all structural units constituting the copolymer (S).

The copolymer (S) in the present aspect satisfies the following requirements (i) to (v).
(i) [A]/[B], which is a ratio of the number of moles [A] of the structural unit derived from the ethylene (A) to the number of moles [B] of the structural unit derived from the α-olefin (B) having 3 to 20 carbon atoms, is 40/60 to 99.9/0.1
(ii) a mass percent concentration of the structural unit derived from the non-conjugated polyene (C) is 0.07% to 10% by mass with respect to all structural units constituting the copolymer (S)
(iii) (n_{C}) obtained by the following expression (1) is 4.5 or more and 40 or less $\begin{matrix}\left({n}_{C}\right) = \left(Mw\right) \times \left\{\left(Mass percent concentration of \left(C\right)/100\right.\right\} / Molecular weight of \\ \left(C\right)\end{matrix}$ In the expression (1), (Mw) is a weight-average molecular weight of the copolymer (S), the mass percent concentration of (C) is a content (% by mass) of the structural unit derived from the non-conjugated polyene (C) to the total mass of the structural units constituting the copolymer (S), and the molecular weight of (C) is a molecular weight of the non-conjugated polyene (C).
(iv) ratio P (η^{*}_{(ω = 0.1)}/η^{*}_{(ω = 100)}) between a complex viscosity η^{*}_{(ω = 0.1)} (Pa·sec) at a frequency ω = 0.1 rad/sec to a complex viscosity η^{*}_{(ω = 100)} (Pa·sec) at a frequency ω = 100 rad/sec, which are obtained by a linear viscoelasticity measurement (190°C) using a rheometer, and an intrinsic viscosity [η], and a mass percent concentration of the structural unit derived from the non-conjugated polyene (C) (content (% by mass) with respect to a total mass of structural units constituting the copolymer (S) derived from the non-conjugated polyene (C)) satisfy the following expression (2) $P/ \left({\left[η\right]}^{2.9}\right) \leq the mass percent concentration of \left(C\right) \times 6$
(v) number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3) ${LCB}_{1000C} \leq 1 - 0.07 \times Ln \left(Mw\right)$

The requirement (i) identifies that (i) [A]/[B], which is a ratio of the number of moles [A] of the structural unit derived from the ethylene (A) to the number of moles [B] of the structural unit derived from the α-olefin (B) in the copolymer (S) according to the present aspect, satisfies 40/60 to 99.9/0.1.

The [A]/[B] is preferably 50/50 to 90/10, more preferably 55/45 to 85/15, and still more preferably 55/45 to 78/22. In a case where the copolymer (S) satisfies the requirement (i), a molded body obtained by hydrosilyl-crosslinking the copolymer (S) exhibits excellent rubber elasticity, and is excellent in mechanical strength and flexibility, which is preferable.

The ratio [A]/[B] of the number of moles [A] of the structural unit derived from the ethylene (A) to the number of moles [B] of the structural unit derived from the α-olefin (B) in the copolymer (S) can be obtained by ¹³C-NMR.

The requirement (ii) identifies that the mass percent concentration of the structural unit derived from the non-conjugated polyene (C) in the copolymer (S) is 0.07% to 10% by mass with respect to all structural units constituting the copolymer (S).

The mass percent concentration of the structural unit derived from the non-conjugated polyene (C) is preferably 0.1% to 8.0% by mass and more preferably 0.5% to 5.0% by mass.

In the copolymer (S), by satisfying the requirement (ii), a crosslinked molded body obtained from the copolymer composition according to the present aspect has sufficient hardness and excellent mechanical properties, which is preferable. In addition, in a case where the copolymer (S) is hydrosilyl-crosslinked, the copolymer (S) exhibits a fast crosslinking rate, and thus a crosslinked molded body can be efficiently produced, which is preferable.

The mass percent concentration of the structural unit derived from the non-conjugated polyene (C) in the copolymer (S) can be obtained by ¹³C-NMR.

It is preferable that the mass percent concentration of the structural unit derived from the non-conjugated polyene (C) and the weight-average molecular weight (Mw) of the copolymer (S) satisfies the following expression (4). $6 - 0.45 \times Ln \left(Mw\right) \leq Mass percent concentration of \left(C\right)$

The requirement (iii) identifies that the range of (nc) obtained by the expression (1) is 4.5 or more and 40 or less. $\begin{matrix}\left({n}_{C}\right) = \left(Mw\right) \times \left\{\left(Mass percent concentration of \left(C\right)/100\right.\right\} / Molecular weight of \\ \left(C\right)\end{matrix}$

In the expression (1), (Mw) is a weight-average molecular weight of the copolymer (S), the mass percent concentration of (C) is a content (% by mass) of the above-described structural unit derived from the non-conjugated polyene (C) to the total mass of the structural units constituting the copolymer (S), and the molecular weight of (C) is a molecular weight of the non-conjugated polyene (C).

(Mw) is a weight-average molecular weight in terms of polystyrene measured by gel permeation chromatography (GPC).

(n_{C}) is preferably 4.5 or more and 40 or less, and more preferably 4.5 or more and 35 or less.

(n_{C}) obtained by the above expression (1) is the number of structural units derived from the non-conjugated polyene (C) per weight-average molecular weight (Mw) of the copolymer (S).

In a case where (n_{C}) is equal to or more than the lower limit value, a sufficient crosslinking rate is easily obtained during hydrosilyl crosslinking. In addition, in a case of being equal to or less than the upper limit value, excessive crosslinking is less likely to occur, and the obtained crosslinked molded body exhibits more excellent mechanical properties.

In a case where the requirement (iii) is satisfied, the copolymer (S) has a low content of long-chain branch, has a high crosslinking rate of hydroxy crosslinking, is excellent in balance of physical properties of the obtained crosslinked molded body, such as mechanical properties, and is less likely to cause post-crosslinking, particularly, is excellent in heat aging resistance, which is preferable.

In a case where the copolymer (S) includes the structural unit (CX), (n_{C + cx}) obtained by the following expression (1') is preferably 4.5 or more and 40 or less, and more preferably 4.5 or more and 35 or less. (nC + cx) = (Mw) × [{Mass percent concentration of (C)/100}/Molecular weight of (C) + {Mass percent concentration of (CX)/100}/Molecular weight of (CX)] ...

(n_{C + cx}) obtained by the above expression (1') is the total number of the number of structural units derived from the non-conjugated polyene (C) and the number of structural units derived from the non-conjugated polyene (CX) per weight-average molecular weight (Mw) of the copolymer (S).

The requirement (iv) identifies that, in the copolymer (S), the ratio P (η^{*}_{(ω = 0.1)}/η^{*}_{(ω = 100)}) between a complex viscosity η^{*}_{(ω = 0.1)} (Pa·sec) at a frequency ω = 0.1 rad/sec to a complex viscosity η^{*}_{(ω = 100)} (Pa-sec) at a frequency ω = 100 rad/sec, which are obtained by a linear viscoelasticity measurement (190°C) using a rheometer, and an intrinsic viscosity [η], and the mass percent concentration of the structural unit derived from the non-conjugated polyene (C) (content: % by mass) with respect to a total mass of structural units constituting the copolymer (S) derived from the non-conjugated polyene (C)) satisfy the following expression (2). $P / \left({\left[η\right]}^{2.9}\right) \leq Mass percent concentration of \left(C\right) \times 6$

As the rheometer, a viscoelasticity measuring device Ares (manufactured by Rheometric Scientific) is used, and measurement is performed by changing the frequency at 190°C and a strain of 1.0%.

The intrinsic viscosity [η] is a value measured in decalin at 135°C.

It is more preferable that the copolymer (S) satisfies the following expression (2'). $P / \left({\left[η\right]}^{2.9}\right) \leq Mass percent concentration of \left(C\right) \times 5.7$

The ratio P (η^{*}_{(ω = 0.1)}/η^{*}_{(ω = 100)}) represents frequency dependence of the viscosity, and P/([η]^{2.9}) on the left side of the expression (2) and the expression (2') has a tendency to indicate a high value in a case where there are many long-chain branches, although there is an influence of short-chain branches, molecular weight, and the like.

In general, in the ethylene/α-olefin/non-conjugated polyene copolymer, as the structural unit derived from the non-conjugated polyene is more contained, the long-chain branches are more contained. However, it is considered that the copolymer (S) according to the present aspect can satisfy the above expression (2) because the copolymer (S) has fewer long-chain branches than the ethylene/α-olefin/non-conjugated polyene copolymer known in the related art.

The requirement (v) identifies that, in the copolymer (S), the number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3). ${LCB}_{1000C} \leq 1 - 0.07 \times Ln \left(Mw\right)$

According to the above expression (3), the upper limit value of the content of long-chain branches per unit carbon number of the copolymer (S) is specified. That is, the requirement (v) means that the proportion of long-chain branches of the copolymer (S) is small.

By satisfying the requirement (v), the copolymer (S) has excellent curing characteristics during hydrosilyl crosslinking. In addition, a crosslinked molded body formed of the copolymer (S) has excellent heat aging resistance.

It is more preferable that the copolymer (S) satisfies the following expression (3'). ${LCB}_{1000C} \leq 1 - 0.071 \times Ln \left(Mw\right)$

Mw and (LCB_{1000C}) in the above expression (3) and expression (3) are values obtained by a structural analysis method using 3D-GPC. Specifically, a 3D-high-temperature GPC device PL-GPC220 type (manufactured by Polymer Laboratories) is used for obtaining an absolute molecular weight distribution, and at the same time, an intrinsic viscosity is obtained with a viscometer. The main measurement conditions are as follows.
Detector: differential refractometer/GPC device built-in
2-Angle light scattering photometer PD2040 (manufactured by Precision Detectors)
Bridge-type viscometer PL-BV400 type (manufactured by Polymer Laboratories Ltd.)
Column: two TSKgel GMH_{HR}-H(S)HT + one TSKgel GMH_{HR}-M(S); (both are inner diameter of 7.8 mmϕ and length of 300 mm per one column)
Temperature: 140°C
Mobile phase: 1,2,4-trichlorobenzene (containing 0.025% BHT)
Injection volume: 0.5 mL
Sample concentration: ca 1.5 mg/mL
Sample filtration: filtration with a sintered filter having a pore size of 1.0 µm

A dn/dc value required for determining the absolute molecular weight is determined for each sample, from a dn/dc value of the standard polystyrene (molecular weight: 190,000) of 0.053 and the response intensity of the differential refractometer per unit injection mass.

A long-chain branching parameter g'i for each eluted component is calculated from a relationship between the intrinsic viscosity obtained from the viscometer and the absolute molecular weight obtained from the light scattering photometer, by the expression (v-1).$g {′}^{i} = \frac{\left[η\right] i . br}{\left[η\right] i . lin}$
- [*η*]i.br:: Measured intrinsic viscosity of i-th slice component
- [*η*]i.lin: Intrinsic viscosity assuming that i-th slice component does not have long-chain branched structure and only has short-chain branched structure

Here, a relational expression of [η] = KM^{v}; v = 0.725 is applied.

In addition, average values of g's are calculated from the following expressions (v-2), (v-3), and (v-4). Trendline which is assumed to have only short-chain branches is determined for each sample. $Number-average long-chain branch parameter g {′}^{n} = \frac{\sum \left({C}^{i}/{M}^{i}\times g{′}^{i}\right)}{\sum \left({C}^{i}/{M}^{i}\right)}$ $Weight-average long-chain branch parameter g {′}^{w} = \frac{\sum \left({C}^{i}\times g{′}^{i}\right)}{\sum {C}^{i}}$ $z-average long-chain branch parameter g {′}^{z} = \frac{\sum \left({C}^{i}\times {M}^{{i}^{2}}\times g{′}^{i}\right)}{\sum \left({C}^{i}\times {M}^{{i}^{2}}\right)}$
Cⁱ : Concentrahon of each eluted component
Mⁱ : Absolute molecular weight of each eluted component

Furthermore, using the g'w, the number of branch points BrNo per molecule chain, the number of long-chain branches LCB_{1000C} per 1,000 carbon atoms, and a degree of branching λ per unit molecular weight are calculated. For the calculation of BrNo, the expression (v-5) of Zimm-Stockmayer is used, and for the calculation of LCB_{1000C} and λ, the expressions (v-6) and (v-7) are used. g is a long-chain branching parameter obtained from a radius of gyration Rg, and the following simple correlation is performed between g and g' obtained from the intrinsic viscosity. Various values of ε in the expression have been proposed depending on the shape of the molecule. Here, the calculation is performed assuming ε = 1 (that is, g' = g).$g {′}^{w} = \frac{1}{\sqrt{\sqrt{1 + BrNo/7} + 4 \times BrNo/9 π}}$$λ = BrNo/M$ ${LCB}_{1000 C} = λ \times 14000$

In the expression (V-7), 14,000 represents the molecular weight of 1,000 methylene (CH²) units.

The intrinsic viscosity [η] of the copolymer (S) is preferably 0.1 to 5 dL/g, more preferably 0.5 to 5.0 dL/g, and still more preferably 0.5 to 4.0 dL/g.

The weight-average molecular weight (Mw) of the copolymer (S) is preferably 10,000 to 600,000, more preferably 30,000 to 500,000, and still more preferably 50,000 to 400,000.

It is also preferable that the copolymer (S) in the present aspect satisfies the following requirement (vi) represented by the following expression (5). (vi) Log {η*(ω = 0.01)}/Log {η*(ω = 10)} ≤ 0.0753 × {Apparent iodine value derived from non-conjugated polyene (C)} + 1.42 ...

In the expression (5), η^{*}_{(ω = 0.01)} is a complex viscosity η^{*} (Pa-sec) at a frequency ω = 0.01 rad/s, which is obtained by a linear viscoelastic measurement (190°C) using a rheometer.

In addition, η^{*}_{(ω = 10)} is a complex viscosity η^{*} (Pa-sec) at a frequency ω = 10 rad/s, which is obtained by a linear viscoelastic measurement (190°C) using a rheometer.

Here, the η^{*}_{(ω = 0.01)} and η^{*}_{(ω = 10)} are obtained in the same manner as the complex viscosity η^{*}_{(ω = 0.1)} and the complex viscosity η^{*}_{(ω = 100)} in the requirement (iv), except for the measurement frequency.

In the expression (5), the apparent iodine value derived from the non-conjugated polyene (C) is obtained by the following expression. Apparent iodine value derived from (C) = Weight fraction of (C) × 253.81/Molecular weight of (C)

In the above expression (5), the left side represents shear rate dependence which is an index of the long-chain branch amount, and the right side represents an index of the content of the non-conjugated polyene (C), which is not consumed as the long-chain branch during polymerization.

In a case where the requirement (vi) is satisfied, the degree of long-chain branch is not too high, which is preferable. The fact that the requirement (vi) is not satisfied means that a proportion of copolymerized non-conjugated polyenes (C) consumed for the formation of long-chain branches is large.

The copolymer composition according to the present aspect may contain two or more kinds of the copolymers (S). For example, two or more kinds of the copolymers (S) having different (a) molar ratios of ethylene/α-olefin having 3 to 20 carbon atoms, (b) iodine values, or (c) intrinsic viscosities [η] can be mixed and used. In particular, in (c), mixing of a low-intrinsic viscosity component and a high-intrinsic viscosity component is an exemplary example.

In the present aspect, a production method of the copolymer (S) is not particularly limited, but the copolymer (S) is preferably obtained by copolymerizing monomers in the presence of a metallocene compound, and more preferably obtained by copolymerizing monomers in the presence of a catalyst system containing a metallocene compound.

Specifically, for example, the copolymer (S) can be produced by a method described in PCT International Publication No. WO2015/122495.

### [Hydrosilyl group-containing compound (Y)]

The hydrosilyl group-containing compound (Y) in the present invention is an organohydrogenpolysiloxane represented by Formula (a), which has at least one silicon atom-bonded aralkyl group and at least two silicon atom-bonded hydrogen atoms in a molecule.

The copolymer composition according to the present aspect may contain two or more kinds of the hydrosilyl group-containing compounds (Y).

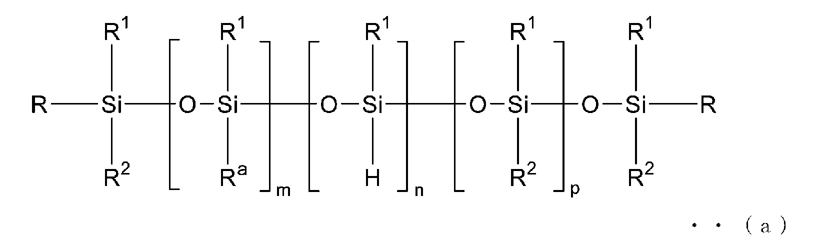

In Formula (a), n and p are 0 or a positive number, m is a number in a range of 1 to 20, a sum of n, m, and p is 5 to 50, R¹ and R² are each independently a monovalent alkyl group, and may be the same or different from each other, R^{a} is an aralkyl group, and R is a group selected from R¹, R², a hydrogen atom, and R^{a}, Here, in a case where n = 1, at least one R is a hydrogen atom, and in a case where n = 0, both R's are hydrogen atoms.

Such a hydrosilyl group-containing compound (Y) is a linear organohydrogenpolysiloxane having a relatively small degree of siloxane polymerization and having at least one silicon atom-bonded aralkyl group and at least two silicon atom-bonded hydrogen atoms in the molecule.

By selectively using the hydrosilyl group-containing compound (Y) in combination with the copolymer (S), it is possible to obtain a molded body particularly excellent in physical properties such as scorch resistance, moldability, elongation at break, and compression molding strain of the obtained molded product, and in particular, applicability to weather strip sponge materials and the like is improved.

In Formula (a), m is the number of diorganosilyloxy units having the silicon atom-bonded aralkyl group; and is a number in a range of 1 to 20, may be a number in a range of 2 to 10, and particularly preferably a number in a range of 3 to 6.

In Formula (a), n is the number of organohydrogensiloxane units having the silicon atom-bonded hydrogen atom in the side chain; and may be 0 or 1. In a case where n = 1, at least one of R's is a hydrogen atom, and in a case where n = 0, both R's are hydrogen atoms, and the structure has at least two silicon atom-bonded hydrogen atoms in the molecule.

Even in a case where n is a number other than 0 or 1, it is not hindered that one or both of R's at both ends of the molecular chain are the silicon atom-bonded hydrogen atoms. Furthermore, n is preferably a number other than 0 or 1, and more preferably a number which satisfies n ≥ m. More specifically, n may be a number in a range of 3 to 10, and is particularly preferably a number in a range of 3 to 9.

In Formula (a), p is the number of diorganosiloxy units not including the aralkyl group or the silicon atom-bonded hydrogen atom, and may be 0 or may be in a range of a number obtained by subtracting the values of n and m from the total degree of polymerization of the diorganosiloxane unit, which is represented by a value of the sum of the values of n, m, and p described later. For example, p may be a number in a range of 0 to 12, a number in a range of 0 to 10, a number in a range of 0 to 5, or 0 to 2, and is preferably 0 to 2.

The hydrosilyl group-containing compound (Y) has a relatively small degree of siloxane polymerization, and the sum of the values of n, m, and p is 5 to 50, preferably 5 to 20, and may be 5 to 15.

The hydrosilyl group-containing compound (Y) which is a crosslinking agent in the present invention is particularly preferably a compound in which m is a number in a range of 3 to 6, n is a number in a range of 3 to 9, and p is a number in a range of 0 to 2.

In Formula (a), R may be any group selected from R¹, R², a hydrogen atom, and R^{a}. However, in a case where n = 0 or 1, both or one of R's is a hydrogen atom.

R¹ and R² in the formula are each a monovalent alkyl group, and may be the same or different from each other, in which a part of carbon atom-bonded hydrogen atoms may be substituted with a halogen atom. Such an alkyl group may be an alkyl group having 1 to 20 carbon atoms, and industrially, it may be a methyl group.

In Formula (a), R^{a} is an aralkyl group, and may be an aralkyl group having 7 to 20 carbon atoms, preferably an aralkyl group having 7 to 15 carbon atoms. As the aralkyl group, a benzyl group, a phenylethyl group, a phenylpropyl group, a phenylbutyl group, and the like are exemplary examples, and it is particularly preferable to include at least one branched unit represented by -CH(CH₃)- in an alkylene structure between an aryl group such as a phenyl group and a silicon atom. In the present invention, it is particularly preferable that R^{a} is an aralkyl group represented by -CH₂-CH(CH₃)-C₆H₅.

The aralkyl group is a characteristic functional group that imparts usefulness as a crosslinking agent to the hydrosilyl group-containing compound (Y), and in particular, in a case where the aralkyl group is present together with the silicon atom-bonded hydrogen atom in the component in which n, m, and p are within the above-described range, the physical properties of the obtained molded product are significantly improved.

In the copolymer composition according to the present aspect, a blending amount of the hydrosilyl group-containing compound (Y) is preferably 0.01 to 10 parts by mass, more preferably 0.1 to 10 parts by mass, and still more preferably 0.1 to 8 parts by mass with respect to 100 parts by mass of the copolymer (S).

### [Platinum catalyst]

The platinum catalyst for hydrosilyl crosslinking is an addition reaction catalyst, and the platinum catalyst can be used without particular limitation as long as the platinum catalyst promotes an addition reaction (hydrosilylation reaction of an alkene) between the alkenyl group of the copolymer (S) and the hydrosilyl group of the hydrosilyl group-containing compound (Y).

Specific platinum catalysts may be known platinum catalysts which are typically used for addition-curing type curing; and a fine powder metal platinum catalyst described in United States Patent No. 2970150, a chloroplatinic acid catalyst described in United States Patent No. 2823218, a complex compound of platinum and hydrocarbon, described in United States Patent No. 3159601 and United States Patent No. 3159662, a complex compound of chloroplatinic acid and olefin, described in United States Patent No. 3516946, and a complex compound of platinum and vinylsiloxane, described in United States Patent No. 3775452 and United States Patent No. 3814780, are exemplary examples.

More specifically, solid platinum (platinum black), chloroplatinic acid, a platinum-olefin complex, a platinum-alcohol complex, and a platinum catalyst in which a platinum carrier supported on a carrier such as alumina and silica are exemplary examples.

The copolymer composition according to the present aspect may contain two or more kinds of the platinum catalysts.

In the copolymer composition according to the present aspect, a blending amount of the platinum catalyst is preferably 0.001 to 1 part by mass, more preferably 0.005 to 1 part by mass, and still more preferably 0.005 to 0.8 parts by mass with respect to 100 parts by mass of the copolymer (S).

### [Organic peroxide (Z)]

As the organic peroxide (Z), for example, dicumyl peroxide (DCP), di-tert-butyl peroxide, 2,5-di-(tert-butylperoxy)hexane, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxybenzoate, tert-butylperoxyisopropyl carbonate, diacetyl peroxide, lauroyl peroxide, and tert-butylcumyl peroxide are exemplary examples.

The organic peroxide (Z) is preferably an organic peroxide in which a decomposition product generated during the crosslinking is a low-molecular-weight compound and a vapor pressure thereof is sufficiently high. In a case where such an organic peroxide (Z) is used, the obtained crosslinked molded body is less likely to have an odor remaining.

In the present specification and the scope of Claims, a blending amount of the organic peroxide (Z) is a blending amount converted to a purity of 100% by mass. The organic peroxide is usually available at a purity of approximately 40% by mass, for convenience of handling. In a case of a product having a purity of 40% by mass, a value obtained by multiplying the mass of the product by 0.4 is the blending amount of the organic peroxide.

In the copolymer composition according to the present aspect, the blending amount of the organic peroxide (Z) is 0.2 to 6 parts by mass, preferably 0.2 to 4.8 parts by mass and more preferably 0.2 to 4 parts by mass with respect to 100 parts by mass of the copolymer (S).

In the copolymer composition according to the present aspect, the total blending amount of the hydrosilyl group-containing compound (Y) and the organic peroxide (Z) is preferably 0.01 to 0.15 equivalents, more preferably 0.01 to 0.1 equivalents, and still more preferably 0.02 to 0.1 equivalents with respect to 100 parts by mass of the copolymer (S).

In the copolymer composition according to the present aspect, an equivalent ratio [Y/Z] of the blending amount of the hydrosilyl group-containing compound (Y) and the blending amount of the organic peroxide (Z) is preferably 23/77 to 99/1 and more preferably 47/53 to 99/1.

### [Reaction inhibitor]

The copolymer composition according to the present aspect preferably contains a reaction inhibitor. The reaction inhibitor is a compound having a function of suppressing a crosslinking reaction (hydrosilylation addition reaction to an alkene) between the alkenyl group of the copolymer (S) and the hydrosilyl group of the hydrosilyl group-containing compound (Y). From the viewpoint of stably improving processability of the composition during kneading and molding, it is preferable to blend the reaction inhibitor.

As the reaction inhibitor, for example, benzotriazole; acetylene alcohols such as 1-hexyn-3-ol, 3-methyl-1-butyn-3-ol, 3,6-dimethyl-4-octyn-3,6-diol, 2,4,7,9-tetramethyl-5-decyne-4,7-diol, 1-ethynylcyclohexanol, and 3,5-dimethyl-1-hexyn-3-ol; acrylonitrile; amide compounds such as N,N-diallylacetamide, N,N-diallylbenzamide, N,N,N',N'-tetraallyl-o-phthalic acid diamide, N,N,N',N'-tetraallyl-m-phthalic acid diamide, and N,N,N',N',tetraallyl-p-phthalic acid diamide; and other organic peroxides such as sulfur, phosphorus, nitrogen, amine compounds, sulfur compounds, phosphorus compounds, tin, tin compounds, and tetramethyl tetravinylcyclo-tetracyloxane are specific exemplary examples.

Among these compounds, 3,5-dimethyl-1-hexyn-3-ol is particularly preferable.

The copolymer composition according to the present aspect may contain two or more kinds of the reaction inhibitors.

In the copolymer composition according to the present aspect, a blending amount of the reaction inhibitor is preferably 0.001 to 5 parts by mass, more preferably 0.005 to 1 part by mass, and still more preferably 0.005 to 0.8 parts by mass with respect to 100 parts by mass of the copolymer (S).

### [Antioxidant]

The copolymer composition according to the present aspect may contain an antioxidant. As the antioxidant, a hindered phenol-based antioxidant is preferable.

By containing the hindered phenol-based antioxidant in the copolymer composition according to the present aspect, it is possible to obtain a crosslinked molded body having high water absorption and excellent compressive permanent strain.

The copolymer composition according to the present aspect may contain two or more kinds of the antioxidants.

As the hindered phenol-based antioxidant, 2,4,6-tris(3',5'-di-tert-butyl-4'-hydroxybenzyl)mesitylene [(manufactured by ADEKA Corporation, trade name: ADEKA Stab AO-330, melting point: 243°C to 245°C), 1,3,5-tris(3,5-di-tert-butyl-4-hydroxybenzyl)-1,3,5-triazine-2,4,6(1H,3H,SH)-trione (manufactured by ADEKA Corporation, trade name: ADEKA Stab AO-20, melting point: 220°C to 222°C), 4,4'-butylidenebis(6-tert-butyl-m-cresol) (manufactured by ADEKA Corporation, trade name: ADEKA Stab AO-40, melting point: 210°C to 214°C), N,N'-bis{3-(3,5-di-tert-butyl-4-hydroxyphenyl)propionyl}hydrazine (manufactured by BASF Japan Ltd., trade name: Irganox MD1024, melting point: 224°C to 229°C), pentaerythritol tetrakis[3-(3,5-di-tert-butyl-4-hydroxyphenyl)propionate] (manufactured by BASF Japan Ltd., trade name: Irganox 1010, melting point: 110°C to 130°C), dibutylhydroxytoluene, and 2,5-di-tert-butylhydroquinone (manufactured by OUCHI SHINKO CHEMICAL INDUSTRIAL CO., LTD., trade name: Nocrac NS-7, melting point: 200°C or higher) are exemplary examples.

In a case where the copolymer composition according to the present aspect contains the antioxidant, a blending amount of the antioxidant is preferably 0.001 to 10 parts by mass, more preferably 0.005 to 10 parts by mass, still more preferably 0.1 to 10 parts by mass, and particularly preferably 0.5 to 8 parts by mass with respect to 100 parts by mass of the copolymer (S).

### [Anti-aging agent]

The copolymer composition according to the present aspect may contain an anti-aging agent.

As the anti-aging agent, a known anti-aging agent used in a general rubber composition can be used. Specifically, a sulfur-based anti-aging agent, a phenol-based anti-aging agent, an amine-based anti-aging agent, and the like are exemplary examples.

The anti-aging agent may be used alone, but it is preferable to use two or more kinds in combination in terms of maintaining heat aging resistance for a long time at a high temperature.

In a case where the copolymer composition according to the present aspect contains the sulfur-based anti-aging agent, the sulfur-based aging inhibitor can be used in a range of preferably 0.2 to 10 parts by mass, more preferably 0.2 to 8 parts by mass, and particularly preferably 0.2 to 6 parts by mass with respect to 100 parts by mass of the copolymer (S). In a case where the sulfur-based anti-aging agent is used within the above-described range, the effect of improving the heat aging resistance is large.

In a case where the copolymer composition according to the present aspect contains the phenol-based anti-aging agent, the sulfur-based aging inhibitor can be used in a range of preferably 0.2 to 5 parts by mass, more preferably 0.5 to 4 parts by mass, and particularly preferably 0.5 to 3 parts by mass with respect to 100 parts by mass of the copolymer (S). In a case where the phenol-based anti-aging agent is used within the above-described range, the effect of improving the heat aging resistance is large.

In a case where the copolymer composition according to the present aspect contains the amine-based anti-aging agent, the sulfur-based aging inhibitor can be used in a range of preferably 0.05 to 5 parts by mass, more preferably 0.1 to 4 parts by mass, and particularly preferably 0.2 to 3 parts by mass with respect to 100 parts by mass of the copolymer (S). In a case where the amine-based anti-aging agent is used within the above-described range, the effect of improving the heat aging resistance is large.

### [Reinforcing agent]

The copolymer composition according to the present aspect may contain a reinforcing agent in order to improve physical properties such as tensile strength at break and tensile elongation at break.

The reinforcing agent is a known reinforcing agent blended in a rubber composition, and specifically, carbon black, carbon black surface-treated with a silane coupling agent, silica, calcium carbonate, activated calcium carbonate, fine talc, and precipitated silica are exemplary examples.

The copolymer composition according to the present aspect may contain two or more kinds of the reinforcing agents.

Among these, the carbon black is preferably contained. In a case where the carbon black is contained, the processability of the copolymer composition is improved, and a copolymer composition in which mechanical properties such as tensile strength, tear strength, and wear resistance are improved can be obtained.

As the carbon black, for example, known carbon blacks such as Asahi #50HG, Asahi #55G, and Asahi #60UG (all manufactured by ASAHI CARBON CO., LTD.), and SEAST SVH, SEAST V, and SEAST G-SO (all manufactured by Tokai Carbon Co., Ltd.) can be used. These can be used alone or in combination. In addition, a product surface-treated with a silane coupling agent or the like can also be used.

In a case where the copolymer composition according to the present aspect contains the carbon black, the carbon black can be used in a range of preferably 1 to 200 parts by mass, more preferably 5 to 150 parts by mass, and particularly preferably 10 to 100 parts by mass with respect to 100 parts by mass of the copolymer (S). In a case where the blending amount of the carbon black is within the above-described range, it is possible to obtain a copolymer composition having an excellent dynamic magnification (dynamic elastic modulus/static elastic modulus), processability, mechanical properties, and the like.

### [Softening agent]

The copolymer composition according to the present aspect may contain a softening agent.

The softening agent is a known softening agent blended in a rubber composition. Specifically, petroleum-based softening agents such as process oil, lubricating oil, paraffin oil, liquid paraffin, petroleum asphalt, and vaseline; coal tar-based softening agents such as coal tar; fatty oil-based softening agents such as castor oil, linseed oil, rapeseed oil, soybean oil, and palm oil; waxes such as beeswax and carnauba wax; naphthenic acid, pine oil, rosin, or derivatives thereof; synthetic polymer substances such as terpene resin, petroleum resin, and coumarone-indene resin; ester-based softening agents such as dioctyl phthalate and dioctyl adipate; and other softening agents such as microcrystalline wax, liquid polybutadiene, modified liquid polybutadiene, hydrocarbon-based synthetic lubricating oil, tall oil, and sub (factice) are exemplary examples. Among these, a petroleum-based softening agent is preferable, and paraffinic process oil is particularly preferable.

The copolymer composition according to the present aspect may contain two or more kinds of the softening agents.

In a case where the copolymer composition according to the present aspect contains the softening agent, the softening agent can be used in a range of preferably 5 to 150 parts by mass, more preferably 10 to 150 parts by mass, and particularly preferably 10 to 120 parts by mass with respect to 100 parts by mass of the copolymer (S). In a case where the blending amount of the softening agent is within the above-described range, it is possible to obtain a copolymer composition having less tackiness and excellent processability, heat aging resistance, mechanical properties, and the like.

### [Moisture absorbent]

The copolymer composition according to the present aspect may contain a moisture absorbent.

As the moisture absorbent, for example, calcium oxide, silica gel, sodium sulfate, molecular sieve, zeolite, and white carbon are exemplary examples. Among these, calcium oxide is preferable. A blending amount of the moisture absorbent is preferably 0.5 to 15 parts by weight, more preferably 1.0 to 12 parts by weight, and still more preferably 1.0 to 10 parts by weight with respect to 100 parts by weight of the copolymer (S).

The copolymer composition according to the present aspect may contain two or more kinds of the moisture absorbents.

### [Crosslinking aid]

The copolymer composition according to the present aspect may contain a crosslinking aid.

As the crosslinking aid, specifically, sulfur; quinone dioxime-based compounds such as p-quinone dioxime; methacrylate-based compounds such as polyethylene glycol dimethacrylate; allyl-based compounds such as diallyl phthalate and triallyl cyanurate; maleimide-based compounds; and divinylbenzene are exemplary examples. Such a crosslinking aid is used in an amount of preferably 0.5 to 2 moles and more preferably approximately an equimolar amount with respect to 1 mol of the organic peroxide used.

### [Filling agent]

The copolymer composition according to the present aspect may contain a filling agent in order to reduce the blending cost.

As the filling agent, for example, talc, clay, and the like are exemplary examples. These filling agents may be used alone or in combination of two or more kinds thereof. Such a filling agent is used in a range of preferably 1 to 500 parts by mass, more preferably 1 to 400 parts by mass, and still more preferably 1 to 300 parts by mass with respect to 100 parts by mass of the copolymer (S). In a case where the blending amount of the filling agent is within the above-described range, it is possible to improve the mechanical properties of the obtained molded body, such as tensile strength, tear strength, and wear resistance.

### [Processing aid]

The copolymer composition according to the present aspect may contain a processing aid.

As the processing aid, agents generally blended with rubber as a processing aid can be widely used. Specifically, ricinoleic acid, stearic acid, palmitic acid, lauric acid, barium stearate, zinc stearate, calcium stearate, zinc laurate, and esters are exemplary examples. These processing aids may be used alone or in combination of two or more kinds thereof.

The processing aid can be appropriately blended in an amount of preferably 30 parts by mass or less, more preferably 25 parts by mass or less, and still more preferably 20 parts by mass or less with respect to 100 parts by mass of the copolymer (S). In a case where the blending amount of the processing aid is within the above-described range, the processability such as kneading processability, extrusion processability, and injection moldability is excellent.

### [Activator]

The copolymer composition according to the present aspect may contain an activator.

As the activator, for example, glycols such as polyethylene glycol and diethylene glycol; and amines such as di-n-butylamine and triethanolamine are exemplary examples. These activators may be used alone or in combination of two or more kinds thereof. The activator can be appropriately blended in a range of preferably 0.2 to 15 parts by mass, more preferably 0.3 to 10 parts by mass, and still more preferably 0.5 to 8 parts by mass with respect to 100 parts by mass of the copolymer (S).

### [Foaming agent]

The copolymer composition according to the present aspect may contain a foaming agent.

As the foaming agent, a baking soda-based foaming agent, azodicarbonamide (ADCA), N,N'-dinitropentamethylenetetramine (DPT), and 4,4'-oxybisbenzenesulfonylhydrazide (OBSH) are exemplary examples. Among these, a baking soda-based foaming agent is preferable because it is possible to reduce the specific gravity and increase the crosslinking density of the foam molded body.

In a case where the copolymer composition according to the present aspect contains the foaming agent, a blending amount of the foaming agent is preferably 0.001 to 10 parts by mass, more preferably 0.005 to 10 parts by mass, still more preferably 0.1 to 10 parts by mass, and particularly preferably 0.2 to 10 parts by mass with respect to 100 parts by mass of the copolymer (S).

### [Other blending agents]

In addition to the above-described components, a known rubber blending agent, for example, a metal salt of an α,β-unsaturated organic acid, a crosslinking accelerator, a plasticizer, a tackifier, or the like can be appropriately blended in the copolymer composition according to the present aspect, as long as the objects of the present aspect are not impaired.

### [Other resins]

The copolymer composition according to the present aspect may contain a resin or rubber other than the copolymer (S), as long as the effects of the present aspect are not impaired. The resin or rubber other than the copolymer (S) is blended preferably 50 parts by mass or less and more preferably 30 parts by mass or less with respect to 100 parts by mass of the copolymer (S), and it is preferable not to blend the resin or rubber.

As the resin other than the copolymer (S), general-purpose resins such as polyethylene, polypropylene, and polystyrene are exemplary examples.

As the rubber, silicone rubber, ethylene-propylene random copolymer rubber (EPR), natural rubber, styrene-butadiene rubber, isoprene rubber, butadiene rubber, and chloroprene rubber are exemplary examples.

### [Production of copolymer composition]

In order to obtain the copolymer composition according to the present aspect, a known method as a general rubber composition can be adopted. Specifically, the method is as follows.

For example, the composition can be prepared by kneading the copolymer (S) and other components at a temperature of 80°C to 170°C for 3 to 10 minutes using an internal mixer such as a Banbury mixer, a kneader, and an intermix; adding the hydrosilyl group-containing compound (Y), the platinum catalyst, and the reaction inhibitor, the reinforcing agent, the softening agent, and the like as necessary in amounts within the above-described ranges; adding other blending agents, other rubbers, resins, or the like as necessary; and then kneading the mixture at a roll temperature of 50°C to 130°C for 5 to 30 minutes using rolls such as an open roll or using a kneader, followed by fractionation. In this manner, a copolymer composition having a ribbon shape or a sheet shape is usually obtained.

In order to obtain the copolymer composition according to the present aspect, it is also preferable to knead the copolymer (S), the hydrosilyl group-containing compound (Y), and other components as necessary (first kneading), and then to add the platinum catalyst for hydrosilyl crosslinking, the reaction inhibitor, the organic peroxide, and other components as necessary to the obtained kneaded product and to knead the mixture (second kneading).

The organic peroxide may be added in the first kneading or the second kneading.

Specifically, it is possible to adopt a method of kneading the copolymer (S), the hydrosilyl group-containing compound (Y), and other components as necessary at 80°C to 170°C for 1 to 10 minutes, preferably at 110°C to 170°C for 3 to 8 minutes (first kneading), adding the platinum catalyst for hydrosilyl crosslinking, the reaction inhibitor, and other components as necessary to the obtained kneaded product, and then kneading the mixture at 10°C to 100°C for 1 to 10 minutes, preferably at 20°C to 80°C for 3 to 7 minutes (second kneading).

In a case where the reinforcing agent, the softening agent, or the like is added, the reinforcing agent, the softening agent, or the like may be added in any of the first kneading and the second kneading, but is preferably added in the first kneading.

In a case where other rubber blending agents, for example, the metal salt of an α,β-unsaturated organic acid, the moisture absorbent, the anti-aging agent, the filling agent, the processing aid, the activator, the plasticizer, and the tackifier are added, it is preferable to add the blending agent in the first kneading, and it is preferable to add the crosslinking aid, the crosslinking accelerator, and the foaming agent in the second kneading.

As a kneading device used for the first kneading, various known kneading devices can be used as long as the device can perform the process at a high temperature. Specifically, a Banbury mixer, a kneader, and an extruder are exemplary examples.

As a kneading device used for the second kneading, a roll, a kneader, or an extruder, which is easy to control the temperature, is an exemplary example.

By performing the kneading in two stages of the first kneading and the second kneading, the copolymer (S) and the hydrosilyl group-containing compound (Y) can be kneaded at a high temperature in the first kneading. Therefore, moisture which acts as a crosslinking inhibitor substance of the hydrosilyl group-containing compound (Y) can be removed in a short time. Accordingly, it is possible to obtain the copolymer composition without increasing the amount of the hydrosilyl group-containing compound (Y), and thus the production cost can be reduced.

In addition, in a case where the kneading of each component is performed by being divided into the first kneading and the second kneading, the kneading time can be shortened as compared with a case where all the components are performed without being divided. In addition, by adding the platinum catalyst for hydrosilyl crosslinking, the reaction inhibitor, and the organic peroxide during the second kneading, it is possible to suppress the progress of crosslinking during the first kneading, and thus the temperature during the first kneading can be increased, and the moisture can be removed in a shorter time.

### [Operational Effects]

In the copolymer composition according to the present aspect, since the crosslinking reaction is suppressed at a relatively low temperature (for example, 50°C to 130°C) during kneading-molding processing, it is possible to suppress a scorch phenomenon (burning or an unexpected early crosslinking reaction) due to the action of heat during processing or storage.

On the other hand, at the crosslinking temperature (for example, 150°C to 200°C), the crosslinking can be performed in a sufficiently short time. Therefore, the copolymer composition according to the present aspect has excellent storage stability and productivity.

### <Crosslinked molded body>

The crosslinked molded body according to one aspect of the present invention is a crosslinked molded body obtained by crosslinking the copolymer composition according to the embodiment of the present invention.

The crosslinked molded body can be obtained by, for example, preliminarily molding the copolymer composition according to the embodiment of the present invention into a desired shape by a molding method using various molding methods such as an extrusion molding machine, a calender roll, a press molding machine, an injection molding machine, and a transfer molding machine, or at the same time as the molding, introducing the molded product into a vulcanization tank and heating to be crosslinked. In a case where the copolymer composition according to the embodiment of the present invention contains a foaming agent, foaming proceeds together with the crosslinking, and a foamed crosslinked molded body (foam molded body) is obtained.

As the heating method, a known method can be used without limitation, but it is particularly preferable to heat at a temperature of 150°C to 200°C for 1 to 30 minutes using a heating furnace with a heating form such as a far-infrared heating furnace, hot air, a glass bead fluidized bed, extremely high frequency electromagnetic wave (UHF), steam, and LCM (thermoplastic salt tank). In the molding and crosslinking, a mold may or may not be used. In a case where the mold is not used, the rubber composition is usually continuously molded and crosslinked.

It is also preferable to obtain a primary molded body by press-molding the copolymer composition according to the embodiment of the present invention to perform primary crosslinking and taking out the primary molded body from a mold, and to perform secondary crosslinking on the obtained primary molded body in a heat medium.

Specifically, a method of performing primary crosslinking by press-molding the copolymer composition according to the embodiment of the present invention at 120°C to 200°C for 1 to 20 minutes, preferably at 150°C to 200°C for 10 to 18 minutes, and taking out the molded body from a mold to obtain a primary molded body, and performing secondary crosslinking on the obtained primary molded body in a heat medium at 120°C to 160°C for 10 to 24 hours, preferably at 140°C to 160°C for 15 to 20 minutes can be adopted.

The heat medium used for the secondary crosslinking is air, steam, paraffinic process oil, a molten salt, or the like.

In a case where the primary crosslinking is performed by press molding, the copolymer composition is not heated to a high temperature due to shear heat generation. Therefore, it is possible to suppress generation of low-molecular-weight siloxane and deterioration of the polymer.

In addition, in the press molding in which the crosslinking is performed in a sealed state, a certain amount of the generated low-molecular-weight siloxane remains in the inside of the crosslinked body, but thereafter, the low-molecular-weight siloxane is volatilized by performing the secondary crosslinking in the heat medium, and it is possible to obtain a crosslinked body having a small amount of the low-molecular-weight siloxane.

The crosslinked molded body according to the present aspect can be used for various applications. Specifically, the crosslinked molded body is suitably used for a tire rubber, an O-ring, an industrial roll, a packing (for example, a capacitor packing), a gasket, a belt (for example, a heat insulating belt, a copier belt, a conveyor belt), a hose (for example, a water hose, a brake reservoir hose, a radiator hose, an air hose) such as a hose for an automobile, a vibration-proof rubber, a vibration-proof material or a shock absorbing material (for example, an engine mount, a motor mount), a muffler hanger, a sponge (for example, a weather strip sponge, a heat insulating sponge, a protect sponge, a slightly foamed sponge), a cable (an ignition cable, a cab tire cable, a high tension cable), an electric wire coating material (a high voltage electric wire coating material, a low voltage electric wire coating material, a marine electric wire coating material), a glass run channel, a color skin material, a paper supply roll, and a roofing sheet.

### [Operational Effects]

The crosslinked molded body obtained from the copolymer composition according to the embodiment of the present invention has a large tensile elongation at break and excellent rubber physical properties.

### <Seventh aspect>

The production method of a copolymer composition according to the seventh aspect of the present invention characterized by kneading a copolymer (S) and a hydrosilyl group-containing compound (Y) at 80°C to 170°C for 1 to 10 minutes, preferably at a temperature of 110°C to 170°C for 4 to 8 minutes (first kneading); and then adding a platinum catalyst for hydrosilyl crosslinking to the obtained kneaded product and kneading the mixture at 10°C to 130°C for 1 to 30 minutes, preferably at 10°C to 100°C for 1 to 10 minutes and more preferably at a temperature of 20°C to 80°C for 3 to 7 minutes (second kneading). In the above-described second kneading, a reaction inhibitor may be further added and kneaded.

The production method according to the present aspect can be applied to the production of the copolymer compositions of the first to sixth aspects.

In addition, the crosslinked molded body according to the eighth aspect of the present invention is a molded body obtained by crosslinking the copolymer composition obtained by the production method according to the seventh aspect.

### [Copolymer (S)]

The copolymer (S) used in the production method of the present aspect is the same as the copolymer (S) in the first aspect.

That is, the copolymer (S) in the present aspect has the structural unit derived from the ethylene (A), the structural unit derived from the α-olefin (B) having 3 to 20 carbon atoms, and the structural unit derived from the non-conjugated polyene (C), which are described in the first aspect, and satisfies the above-described requirement (i) and the above-described requirement (ii).

A preferred aspect of the copolymer (S) in the present aspect is the same as the first aspect.

In the production method of the copolymer composition according to the present aspect, two or more kinds of the copolymers (S) may be used.

### [Hydrosilyl group-containing compound (Y)]

The hydrosilyl group-containing compound (Y) used in the production method according to the present aspect is the same as the hydrosilyl group-containing compound (Y) in the first aspect.

That is, the hydrosilyl group-containing compound (Y) in the present aspect has the same structural feature as described in the first aspect.

A preferred aspect of the hydrosilyl group-containing compound (Y) in the present aspect is the same as the first aspect.

In the production method of the copolymer composition according to the present aspect, two or more kinds of the hydrosilyl group-containing compounds (Y) may be used.

### [Platinum catalyst]

The platinum catalyst for hydrosilyl crosslinking used in the production method according to the present aspect is the same as the platinum catalyst for hydrosilyl crosslinking in the first aspect, and a preferred aspect thereof is also the same.

In the production method according to the present aspect, two or more kinds of the platinum catalysts may be used.

### [Reaction inhibitor]

The reaction inhibitor used in the production method according to the present aspect is the same as the reaction inhibitor in the first aspect, and a preferred aspect thereof is the same.

In the production method according to the present aspect, two or more kinds of the reaction inhibitors may be used.

### [Blending agent and the like]

The antioxidant, the anti-aging agent, the reinforcing agent, the softening agent, the moisture absorbent, the organic peroxide, the crosslinking aid, the filling agent, the processing aid, the activator, other blending agents, and other resins can be appropriately blended in the same manner as in the first aspect.

### [Blending]

The hydrosilyl group-containing compound (Y) used in the first kneading is preferably 0.1 to 30 parts by mass, more preferably 0.1 to 25 parts by mass, still more preferably 0.1 to 20 parts by mass, even more preferably 0.1 to 15 parts by mass, even still more preferably 0.1 to 10 parts by mass, further more preferably 1 to 10 parts by mass, particularly preferably 2 to 10 parts by mass, and most preferably 3 to 10 parts by mass with respect to 100 parts by mass of the copolymer (S).

The platinum catalyst used in the second kneading is preferably 0.001 to 10 parts by mass, more preferably 0.005 to 5.0 parts by mass, still more preferably 0.01 to 3.0 parts by mass, even more preferably 0.02 to 1.0 parts by mass, even still more preferably 0.03 to 0.7 parts by mass, particularly preferably 0.05 to 0.6 parts by mass, and most preferably 0.1 to 0.5 parts by mass with respect to 100 parts by mass of the copolymer (S).

The reaction inhibitor used in the second kneading is more preferably 0.005 to 5.0 parts by mass, still more preferably 0.01 to 3.0 parts by mass, even more preferably 0.02 to 1.0 parts by mass, even still more preferably 0.03 to 0.7 parts by mass, particularly preferably 0.05 to 0.6 parts by mass, and most preferably 0.1 to 0.5 parts by mass with respect to 100 parts by mass of the copolymer (S).

### [Kneading]

As a kneading device used for the first kneading, various known kneading devices can be used as long as the device can perform the process at a high temperature. Specifically, a Banbury mixer, a kneader, and an extruder are exemplary examples.

As a kneading device used for the second kneading, a roll, a kneader, or an extruder, which is easy to control the temperature, is an exemplary example.

In a case where the reinforcing agent, the softening agent, or the like is added, the reinforcing agent, the softening agent, or the like may be added in any of the first kneading and the second kneading, but is preferably added in the first kneading.

In a case where other rubber blending agents, for example, the organic peroxide, the metal salt of an α,β-unsaturated organic acid, the moisture absorbent, the anti-aging agent, the crosslinking aid, the crosslinking accelerator, the filling agent, the processing aid, the activator, the plasticizer, the tackifier, the foaming agent are added, the blending agent may be added in either the first kneading or the second kneading.

### [Crosslinked molded body]

The copolymer composition obtained by the production method according to the present aspect is preliminarily molded into a desired shape by various molding methods such as an extrusion molding machine, a calender roll, a press, an injection molding machine, and a transfer molding machine, or at the same time as the molding, the molded product is introduced into a vulcanization tank and heated to be crosslinked, whereby a crosslinked molded body obtained by crosslinking the copolymer composition can be obtained.

As the heating method, a known method can be used without limitation, but it is particularly preferable to heat at a temperature of 150°C to 200°C for 1 to 30 minutes using a heating furnace with a heating form such as hot air, a glass bead fluidized bed, extremely high frequency electromagnetic wave (UHF), steam, and LCM (thermoplastic salt tank). In the molding and crosslinking, a mold may or may not be used. In a case where the mold is not used, the copolymer composition is usually continuously molded and crosslinked.

The crosslinked molded body obtained from the copolymer composition obtained by the production method according to the present aspect can be used for various applications. Specifically, the crosslinked molded body is suitably used for a tire rubber, an O-ring, an industrial roll, a packing (for example, a capacitor packing), a gasket, a belt (for example, a heat insulating belt, a copier belt, a conveyor belt), a hose (for example, a water hose, a brake reservoir hose, a radiator hose, an air hose) such as a hose for an automobile, a vibration-proof rubber, a vibration-proof material or a shock absorbing material (for example, an engine mount, a motor mount), a muffler hanger, a sponge (for example, a weather strip sponge, a heat insulating sponge, a protect sponge, a slightly foamed sponge), a cable (an ignition cable, a cab tire cable, a high tension cable), an electric wire coating material (a high voltage electric wire coating material, a low voltage electric wire coating material, a marine electric wire coating material), a glass run channel, a color skin material, a paper supply roll, and a roofing sheet.

### [Operational Effects]

In the crosslinked molded body according to the present aspect, the copolymer (S) and the hydrosilyl group-containing compound (Y) are kneaded at a high temperature in the first kneading. Therefore, moisture which acts as a crosslinking inhibitor substance of the hydrosilyl group-containing compound (Y) can be removed in a short time. Accordingly, it is possible to obtain the copolymer composition without increasing the amount of the hydrosilyl group-containing compound (Y), and thus the production cost can be reduced.

In the production method according to the present aspect, since the kneading of each component is performed by being divided into the first kneading and the second kneading, the kneading time can be shortened as compared with a case where all the components are performed without being divided into the first kneading and the second kneading. In addition, by adding the platinum catalyst for hydrosilyl crosslinking and the reaction inhibitor during the second kneading, it is possible to suppress the progress of crosslinking during the first kneading, and thus the temperature during the first kneading can be increased, and the moisture can be removed in a shorter time.

The crosslinked molded body obtained by crosslinking the copolymer composition obtained by the production method according to the present aspect has a small compressive permanent strain. The reason for this is not clear, but it is considered to be high crosslink density and uniform crosslinked structure.

### <Eighth aspect>

The production method of a copolymer composition according to the eighth aspect of the present invention is a production method of a crosslinked molded body, in which a copolymer (S), a hydrosilyl group-containing compound (Y), and a platinum catalyst are melt-kneaded, primary crosslinking is performed by press-molding the mixture at 120°C to 200°C for 1 to 20 minutes, preferably at 150°C to 200°C for 10 to 18 minutes, the molded body is taken out from a mold to obtain a primary molded body, and secondary crosslinking is performed on the obtained primary molded body in a heat medium at 120°C to 160°C for 10 to 24 hours, preferably at 140°C to 160°C for 15 to 20 minutes. A reaction inhibitor may be further added to the copolymer (S), the hydrosilyl group-containing compound (Y), and the platinum catalyst, and then the melt-kneading may be performed.

The heat medium used for the secondary crosslinking is air, steam, paraffinic process oil, a molten salt, or the like.

The production method according to the present aspect can be applied to a production of a crosslinked molded body using the copolymer compositions of the first to sixth aspects.

### [Copolymer (S)]

The copolymer (S) used in the production method of the present aspect is the same as the copolymer (S) in the first aspect.

That is, the copolymer (S) in the present aspect has the structural unit derived from the ethylene (A), the structural unit derived from the α-olefin (B) having 3 to 20 carbon atoms, and the structural unit derived from the non-conjugated polyene (C), which are described in the first aspect, and satisfies the above-described requirement (i) and the above-described requirement (ii).

A preferred aspect of the copolymer (S) in the present aspect is the same as the first aspect.

In the production method of the copolymer composition according to the present aspect, two or more kinds of the copolymers (S) may be used.

### [Hydrosilyl group-containing compound (Y)]

The hydrosilyl group-containing compound (Y) used in the production method according to the present aspect is the same as the hydrosilyl group-containing compound (Y) in the first aspect.

That is, the hydrosilyl group-containing compound (Y) in the present aspect has the same structural feature as described in the first aspect.

A preferred aspect of the hydrosilyl group-containing compound (Y) in the present aspect is the same as the first aspect.

In the production method of the copolymer composition according to the present aspect, two or more kinds of the hydrosilyl group-containing compounds (Y) may be used.

### [Platinum catalyst]

The platinum catalyst for hydrosilyl crosslinking used in the production method according to the present aspect is the same as the platinum catalyst for hydrosilyl crosslinking in the first aspect, and a preferred aspect thereof is also the same.

In the production method according to the present aspect, two or more kinds of the platinum catalysts may be used.

### [Reaction inhibitor]

The reaction inhibitor used in the production method according to the present aspect is the same as the reaction inhibitor in the first aspect, and a preferred aspect thereof is the same.

In the production method according to the present aspect, two or more kinds of the reaction inhibitors may be used.

### [Blending agent and the like]

The antioxidant, the anti-aging agent, the reinforcing agent, the softening agent, the moisture absorbent, the organic peroxide, the crosslinking aid, the filling agent, the processing aid, the activator, other blending agents, and other resins can be appropriately blended in the same manner as in the first aspect.

### [Blending]

The hydrosilyl group-containing compound (Y) used in the production method of the crosslinked molded body according to the present aspect is preferably 0.1 to 30 parts by mass and more preferably 3 to 10 parts by mass with respect to 100 parts by mass of the copolymer (S).

The platinum catalyst is preferably 0.001 to 10 parts by mass and more preferably 0.1 to 0.5 parts by mass with respect to 100 parts by mass of the copolymer (S).

The reaction inhibitor is preferably 0 to 2 parts by mass and more preferably 0 to 0.8 parts by mass with respect to 100 parts by mass of the copolymer (S).

### [Kneading]

As a kneading device used for the kneading in the production method of the crosslinked molded body according to the present aspect, various known kneading devices can be used as long as the device can be treated at a high temperature. Specifically, internal mixers such as a Banbury mixer, a kneader, and an intermix are exemplary examples.

### [Crosslinked molded body]

The crosslinked molded body obtained by the production method according to the present aspect can be used for various applications. Specifically, the crosslinked molded body is suitably used for a tire rubber, an O-ring, an industrial roll, a packing (for example, a capacitor packing), a gasket, a belt (for example, a heat insulating belt, a copier belt, a conveyor belt), a hose (for example, a water hose, a brake reservoir hose, a radiator hose, an air hose) such as a hose for an automobile, a vibration-proof rubber, a vibration-proof material or a shock absorbing material (for example, an engine mount, a motor mount), a muffler hanger, a sponge (for example, a weather strip sponge, a heat insulating sponge, a protect sponge, a slightly foamed sponge), a cable (an ignition cable, a cab tire cable, a high tension cable), an electric wire coating material (a high voltage electric wire coating material, a low voltage electric wire coating material, a marine electric wire coating material), a glass run channel, a color skin material, a paper supply roll, and a roofing sheet.

### [Operational Effects]

In the production method according to the present aspect, since the primary crosslinking is performed by press molding, the copolymer composition is not heated to a high temperature due to shear heat generation. Therefore, it is possible to suppress generation of low-molecular-weight siloxane and deterioration of the polymer.

In a case where the primary crosslinking is performed by injection molding, the crosslinked body is filled into a mold at a high speed when being injected into the mold from a nozzle in the injection molding, and thus the crosslinked body is heated to a very high temperature due to shear heat generation, and the generation of low-molecular-weight siloxane and the deterioration of the polymer are likely to proceed.

In addition, in the press molding of the primary crosslinking, since the crosslinking is performed in a sealed state, a certain amount of the generated low-molecular-weight siloxane remains in the inside of the crosslinked body. However, in the production method according to the present aspect, the low-molecular-weight siloxane is volatilized by performing the secondary crosslinking in the heat medium, and it is possible to obtain a crosslinked body having a small amount of the low-molecular-weight siloxane.

The crosslinked molded body obtained by the production method according to the present aspect has a small compressive permanent strain. The reason for this is not clear, but it is considered to be high crosslink density and uniform crosslinked structure.

In the copolymer composition according to the embodiment of the present invention, a Duro A hardness measured by a method described in Examples is preferably 70 or less, more preferably 3 to 65, and still more preferably 5 to 60.

In the copolymer composition according to the embodiment of the present invention, a Duro C hardness measured by a method described in Examples is preferably 50 or less, more preferably 10 to 40, and still more preferably 15 to 35.

In the copolymer composition according to the embodiment of the present invention, a tensile elongation EB (%) at break, measured by a method described in Examples, is preferably 600% or less, more preferably 100% to 600%, and still more preferably 150% to 500%.

In the copolymer composition according to the embodiment of the present invention, a tensile strength TB (MPa) at break, measured by a method described in Examples, is preferably 15 MPa or less, more preferably 0.5 to 15 MPa, and still more preferably 0.7 to 13 MPa.

In the copolymer composition according to the embodiment of the present invention, a tensile product calculated by a method described in Examples is preferably 5,000 or less, more preferably 100 to 5,000, and still more preferably 200 to 4,500.

In the copolymer composition according to the embodiment of the present invention, M25 measured by a method described in Examples is preferably 1.0 MPa or less, more preferably 0.03 to 0.60 MPa, and still more preferably 0.05 to 0.55 MPa.

In the copolymer composition according to the embodiment of the present invention, M50 measured by a method described in Examples is preferably 1.0 MPa or less, more preferably 0.05 to 0.90 MPa, and still more preferably 0.08 to 0.85 MPa.

In the copolymer composition according to the embodiment of the present invention, M100 measured by a method described in Examples is preferably 3.0 MPa or less, more preferably 0.05 to 2.5 MPa, and still more preferably 0.1 to 2.0 MPa.

In the copolymer composition according to the embodiment of the present invention, M200 measured by a method described in Examples is preferably 5.5 MPa or less, more preferably 0.1 to 5.0 MPa, and still more preferably 0.2 to 4.5 MPa.

In the copolymer composition according to the embodiment of the present invention, M300 measured by a method described in Examples is preferably 9.0 MPa or less, more preferably 0.3 to 8.5 MPa, and still more preferably 0.5 to 8.0 MPa.

In the copolymer composition according to the embodiment of the present invention, CS in a case of being heat-treated at 150°C for 22 hours under a compression rate of 25%, measured by a method described in Examples, is preferably 60% or less, more preferably 3% to 55%, and still more preferably 5% to 50%.

In the copolymer composition according to the embodiment of the present invention, CS in a case of being heat-treated at 120°C for 72 hours under a compression rate of 25%, measured by a method described in Examples, is preferably 20% or less, more preferably 3% to 18%, and still more preferably 5% to 15%.

In the copolymer composition according to the embodiment of the present invention, CS in a case of being heat-treated at 100°C for 22 hours under a compression rate of 50%, measured by a method described in Examples, is preferably 20% or less, more preferably 1% to 15%, and still more preferably 3% to 13%.

In the copolymer composition according to the embodiment of the present invention, CS in a case of being heat-treated at 70°C for 22 hours under a compression rate of 50%, measured by a method described in Examples, is preferably 30% or less, more preferably 1% to 25%, and still more preferably 3% to 20%.

In the copolymer composition according to the embodiment of the present invention, a specific gravity (megagram (Mg)/m³) measured by a method described in Examples is preferably 0.65 Mg/m³ or less, preferably 0.1 to 0.60 Mg/m³, and more preferably 0.2 to 0.55 Mg/m³.

In the copolymer composition according to the embodiment of the present invention, a water absorption measured by a method described in Examples is preferably 10% or more, more preferably 15% to 70%, and still more preferably 20% to 50%.

In the copolymer composition according to the embodiment of the present invention, a content (ppm) of low-molecular-weight components, measured by a method described in Examples, is preferably 10 ppm or less, more preferably 5 ppm or less, and still more preferably 3 ppm or less.

In the copolymer composition according to the embodiment of the present invention, a crosslinking density measured by a method described in Examples is preferably 0.1 × 10¹⁹ to 20 × 10¹⁹ pieces/cc, more preferably 0.3 × 10¹⁹ to 15 × 10¹⁹ pieces/cc, and still more preferably 0.5 × 10¹⁹ to 13 × 10¹⁹ pieces/cc.

In the copolymer composition according to the embodiment of the present invention, a B-type viscosity measured by a method described in Examples is preferably 500 to 7,000 Pa·s, more preferably 800 to 6,500 Pa·s, and still more preferably 1,000 to 6,000 Pa·s.

### [Examples]

Hereinafter, the present invention will be specifically described with reference to Examples, but the present invention is not limited to these Examples.

### <Measurement method>

Physical properties of uncrosslinked copolymer compositions and molded bodies, obtained in each of Examples, were evaluated by the following measurement methods.

### [Crosslinking behavior of copolymer composition]

Using the uncrosslinked copolymer composition in each of Examples, the following values were obtained from a crosslinking curve measured at a crosslinking temperature and a crosslinking time shown in each table according to JIS K6300-2. MDR2000 (manufactured by Alpha Technologies) was used for the measurement.
"S'ₘₐₓ" (dNm): maximum torque value S'ₘₐₓ
S'ₘᵢₙ" (dNm): minimum torque value S'ₘᵢₙ
"S'ₘₐₓ - S'ₘᵢₙ" (dNm): difference between the maximum torque value S'ₘₐₓ and the minimum torque value S'ₘᵢₙ
"tcx₁" (min): time from the minimum torque value S'ₘᵢₙ to a torque value corresponding to a sum of a torque value corresponding to x₁% of "S'ₘₐₓ - S'ₘᵢₙ" and the minimum torque value S'ₘᵢₙ; for example, "tc10" is a time from the minimum torque value S'ₘᵢₙ to a torque value corresponding to a sum of a torque value corresponding to 10% of "S'ₘₐₓ - S'ₘᵢₙ" and the minimum torque value S'ₘᵢₙ
"tsx₂" (min): time from the minimum torque value S'ₘᵢₙ to a torque value increased by x₂ (dNm); for example, "ts1" is a time from the minimum torque value S'ₘᵢₙ to a torque value increased by 1 (dNm)
"MCR" (dNm/min): maximum rate of torque change in the crosslinking curve

### [Hardness test (Duro A hardness)]

In accordance with JIS K 6253-3, a hardness (type A durometer, HA) of the sheet-shaped molded body was measured using six sheet-shaped rubber molded bodies having a smooth surface and having a thickness of 2 mm, and flat portions were stacked to have a thickness of approximately 12 mm. However, a test piece in which foreign substances were mixed, a test piece having air bubbles, and a test piece having scratches were not used. In addition, the dimension of the measurement surface of the test piece was set to a size that allowed a pressing needle tip to be measured at a position 12 mm or more away from an end of the test piece.

### [Hardness test (Duro C hardness)]

In accordance with JIS K 7312, using six sheet-shaped rubber molded bodies having a smooth surface and having a thickness of 2 mm, flat portions were stacked to have a thickness of approximately 6 mm under conditions of a spindle No. 7, 1 rpm, and 25°C. However, a test piece in which foreign substances were mixed, a test piece having air bubbles, and a test piece having scratches were not used. In addition, the dimension of the measurement surface of the test piece was set to a size that allowed a pressing needle tip to be measured at a position 12 mm or more away from an end of the test piece.

### [Tensile test]

A No. 3 dumbbell test piece described in JIS K 6251 (1993) was prepared by punching out the molded body of each of Examples, and a tensile test was performed using this test piece under conditions of a measurement temperature of 25°C and a tensile speed of 500 mm/min according to the method specified in the third item of JIS K 6251, and a modulus (MPa), a tensile strength TB (MPa) at break, and a tensile elongation EB (%) at break were measured. In addition, a product of TB and EB was defined as a tensile product.

The number after M indicating the modulus is an elongation rate, and for example, "M25" means a modulus in a case where the elongation rate is 25% (25% modulus).

### [Compressive permanent strain (CS) of tube-shaped molded body]

A tube-shaped molded body was cut in a length direction by 30 mm, and the obtained test piece was attached to a compressive permanent strain measurement mold. The test piece was compressed such that the height of the test piece was 1/2 of the height before the load was applied (compression ratio: 50%), set in a gear oven at a temperature shown in each table together with the mold, and heat-treated for a time shown in each table. Next, the test piece was taken out from the mold, allowed to cool for 30 minutes, and the height of the test piece was measured to calculate the compressive permanent strain (CS) (%) from the following calculation expression. $Compressive permanent strain \left(CS\right) \left(%\right) = \left\{\left(t0-t1\right)/\left(t0-t2\right)\right\} \times 100$
t0: height of the test piece before the test
t1: height after the heat treatment of the test piece and air cooling for 30 minutes
t2: height in a state of being attached to the measurement mold for the test piece

### [Compressive permanent strain (CS) of sheet-shaped molded body]

Five sheet-shaped molded bodies having a thickness of 2 mm were stacked, and the obtained test piece was attached to a compressive permanent strain measurement mold. The test piece was compressed such that the height of the test piece was 3/4 of the height before the load was applied (compression ratio: 25%), set in a gear oven at a temperature shown in each table together with the mold, and heat-treated for a time shown in each table. Next, the test piece was taken out from the mold, allowed to cool for 30 minutes, and the height of the test piece was measured to calculate the compressive permanent strain (CS) (%) from the following calculation expression. $Compressive permanent strain \left(CS\right) \left(%\right) = \left\{\left(t0-t1\right)/\left(t0-t2\right)\right\} \times 100$
t0: height of the test piece before the test
t1: height after the heat treatment of the test piece and air cooling for 30 minutes
t2: height in a state of being attached to the measurement mold for the test piece

### [Specific gravity of foam molded body]

A specific gravity of the foam molded body was measured according to an underwater substitution method (JIS K 6268) using a 20 mm × 20 mm test piece from a tube-shaped foam molded body obtained by crosslinking with hot air.

### [Water absorption of foam molded body]

A 20 mm × 20 mm test piece was punched out from the hot air-crosslinked tube-shaped foam molded body, and the surface was wiped with alcohol to remove dirt. The test piece was depressurized to -625 mmHg at a position 50 mm below the water surface and held for 3 minutes. Subsequently, after 3 minutes had passed, the weight of the water-absorbed test piece was measured, and the water absorption was calculated from the following expression. $\left(Water absorption\right) = \left\{\left(W2-W1\right)/W1\right\}$
W1: weight (g) before immersion
W2: weight (g) after immersion

### [Content of low-molecular-weight components]

1.0 g of a sample collected from the molded body of each of Examples was precisely weighed into a 10 mL headspace vial, and after sealing, low-molecular-weight components were measured under the following headspace GC/MS conditions.
Static headspace GC/MS
Heating temperature/time: 190°C × 5 minutes, Quantification: quantification in terms of toluene
Analysis device (manufactured by Agilent Technologies, Inc.)
Headspace sampler: G1888 (manufactured by Agilent Technologies, Inc.)
GC/MS: HP6890N/NP5973
Column: HP-3MS 0.25 mm 30 mm; film thickness 0.25 µm

### [Crosslinking density]

A crosslinking density v was calculated from the Flory-Rehner equation (1) using the following equilibrium swelling. V_{R} in the equation (I) was obtained by extracting the crosslinked 2 mm sheet with toluene under the conditions of 37°C × 72 h. ${ν}^{\left[pieces/cc\right]} = \frac{{V}_{R} + Ln \left(1-{V}_{R}\right) + μ {{V}_{R}}^{2}}{- {V}_{D} \left({{V}_{R}}^{1 / 3}-{V}_{R}/2\right)} \times A$
**V_{R}** : Volume fraction of pure rubber in swollen crosslinked rubber
**V₀** : Molecular volume of solvent (toluene) (108.15cc@37°C)
***µ*** : Rubber-solvent interaction constant (EPDM-toluene: 0.49)
**A** : Avogadro's number

### [Crosslinking rate of copolymer composition]

Using the uncrosslinked copolymer composition in each of Examples, the following values were obtained from the crosslinking curve measured when heated at a predetermined crosslinking temperature according to JIS K6300-2. MDR2000 (manufactured by Alpha Technologies) was used for the measurement.
"S'ₘₐₓ" (dNm): maximum torque value S'ₘₐₓ
"S'ₘᵢₙ" (dNm): minimum torque value S'ₘᵢₙ
"S'ₘₐₓ - S'ₘᵢₙ" (dNm): difference between the maximum torque value S'ₘₐₓ and the minimum torque value S'ₘᵢₙ
"125°C (TS1) minute": time from the minimum torque value S'min to a torque value increased by 1 (dNm) with the start of measurement as a reference under a conditioned temperature of 125°C
"180°C (Tc90) minute": time until a torque value corresponding to 90% of "S'max - S'min" with the start of measurement as a reference under a conditioned temperature of 180°C

### [Odor]

The uncrosslinked copolymer composition in each of Examples was press-molded at 50°C for 10 minutes to obtain a sheet-shaped molded body having a smooth surface and a thickness of 3 mm. The molded body was placed in a gear oven at 240°C and heated for 6 minutes to perform crosslinking, thereby obtaining a crosslinked molded body of each of Examples.

Odor of the obtained crosslinked molded body of each of Examples was evaluated according to the following standard.
O: there was no unpleasant odor
X: there was unpleasant odor

### [Surface stickiness]

The uncrosslinked copolymer composition in each of Examples was press-molded at 50°C for 10 minutes to obtain a sheet-shaped molded body having a smooth surface and a thickness of 3 mm. The molded body was placed in a gear oven at 240°C and heated for 6 minutes to perform crosslinking, thereby obtaining a crosslinked molded body of each of Examples.

The surface of the obtained crosslinked molded body of each of Examples was touched with a finger and evaluated according to the following standard.
O: no stickiness when touched by hand
X: stickiness when touched by hand

### [Scratch resistance]

The uncrosslinked copolymer composition in each of Examples was press-molded at 50°C for 10 minutes to obtain a sheet-shaped molded body having a smooth surface and a thickness of 3 mm. The molded body was placed in a gear oven at 240°C and heated for 6 minutes to perform crosslinking, thereby obtaining a crosslinked molded body of each of Examples.

The surface of the obtained crosslinked molded body of each of Examples was scratched with a brass rod having a tip with a diameter of 3 mm immediately after being taken out from the gear oven, and evaluated according to the following standard. The evaluation was performed by three panels, and the average thereof was obtained.
5: there was no scratch
4: there was very slight scratch
3: there was a slight scratch
2: there was a scratch
1: there was a clear scratch

### [Hardness test (Duro A hardness)]

The uncrosslinked copolymer composition in each of Examples was press-molded at 180°C for 10 minutes to obtain a sheet-shaped molded body having a thickness of 2 mm. The six obtained crosslinked molded bodies of each of Examples were stacked to form a test piece having a thickness of 12 mm, and a hardness (Duro-A) was measured according to JIS K 6253-3. The dimension of the measurement surface of the test piece was set to a size that allowed a pressing needle tip to be measured at a position 12 mm or more away from an end of the test piece.

### [Tensile test]

The uncrosslinked copolymer composition in each of Examples was press-molded at 180°C for 10 minutes to obtain a sheet-shaped molded body having a thickness of 2 mm. A No. 3 dumbbell test piece described in JIS K 6251 (1993) was prepared by punching out the obtained crosslinked molded body of each of Examples, and a tensile test was performed using this test piece under conditions of a measurement temperature of 23°C and a tensile speed of 500 mm/min according to the method specified in the third item of JIS K 6251, and a tensile strength TB (MPa) at break and a tensile elongation EB (%) at break were measured.

### [Compressive permanent strain (CS) of sheet-shaped molded body]

The uncrosslinked copolymer composition in each of Examples was crosslinked by heating at 180°C for 15 minutes using a press molding machine with a columnar mold set therein, and a crosslinked body having a diameter of 29 mm and a height (thickness) of 12.5 mm was used as a test piece according to JIS K 6262. The test piece was compressed by 25% with respect to the height (12.5 mm) of the test piece before applying the load, and set in a gear oven at 120°C for 72 hours for a heat treatment. Next, the test piece was taken out and left at room temperature for 30 minutes, and then the height of the test piece was measured to calculate the compressive permanent strain (%) by the following calculation expression. $Compressive permanent strain \left(%\right) = \left\{\left(t0-t1\right)/\left(t0-t2\right)\right\} \times 100$
t0: height of the test piece before the test
t1: height of the test piece after being treated under the above conditions and left at room temperature for 30 minutes
t2: height in a state of being attached to the measurement mold for the test piece

### <Copolymer>

The copolymer used in each of Examples was produced by the following production example. Numerical values of the copolymers obtained in each of the production examples with respect to the requirements (i) to requirement (v) are shown in Table 1.

### [Production Example 1: production of copolymer (S-1)]

A copolymer (S-1) was produced in the same manner as in Production Example 1 of Japanese Unexamined Patent Application, First Publication No. 2018-131527.

### [Production Example 2: production of copolymer (S-2)]

A copolymer (S-2) was produced by changing a hydrogen feed rate to 50 liters/hr in the production method of an ethylene/propylene/VNB copolymer, described in Example 1 (paragraphs [0386] to [0391]) of PCT International Publication No. WO2019/180802.

### [Production Example 3: production of copolymer (A-1)]

Using a stainless steel polymerizer having a substantial internal volume of 100 liters and equipped with a stirring blade (stirring rotation speed = 250 rpm), a ternary copolymerization of ethylene, propylene, and 5-vinyl-2-norbornene was continuously performed. Hexane at a rate of 60 liters per hour, ethylene at a rate of 3.0 kg per hour, propylene at a rate of 9.0 kg per hour, and VNB at a rate of 550 g per hour were continuously supplied from the polymerizer side to the liquid phase, and hydrogen at a rate of 50 liters, VOCl₃ as a catalyst at a rate of 95 mmol, Al(Et)₂Cl at a rate of 443 mmol, and Al(Et)_{1.5}Cl_{1.5} at a rate of 127 mmol were continuously supplied.

As a result, a copolymer (A-1) which was an ethylene/propylene/VNB random copolymer rubber was obtained in a uniform solution state.

Thereafter, a small amount of methanol was added to the polymerization solution continuously extracted from the lower part of the polymerizer to stop the polymerization reaction, and then the polymer was separated from the solvent by a steam stripping treatment and vacuum-dried at 55°C for 48 hours to produce a copolymer (A-1).

**[Table 1]**

| Copolymer | S-1 | S-2 | A-1 |
|---|---|---|---|
| (i) [A]/[B] ethylene/propylene [molar ratio] | 68/32 | 71.2/28.8 | 73/27 |
| (ii) VNB content [% by mass] | 1.6 | 1.5 | 7.1 |
| Mw | 178000 | 70200 | 7400 |
| (iii) Mw × VNB content/100/VNB molecular weight | 22.5 | 16.4 | 4.4 |
| Intrinsic viscosity [η] [dl/g] | 2.7 | 1.1 | 0.2 |
| P value [η*_{(ω = 0.1)}/η*_{(ω = 100)}] | 29.1 | 4.4 | 1.3 |
| (iv) P/([η]^{2.9}) | 1.7 | 3.3 | 136 |
| (iv) VNB content × 6 | 9.6 | 9.0 | 42.6 |
| (v) LCB_{1000C} | 0.14 | 0.15 | 0.40 |
| (v) 1 - 0.07 × Ln (Mw) | 0.15 | 0.22 | 0.38 |

### <Crosslinking agent>

Crosslinking agents used in each of Examples are as follows.

### [Crosslinking agent (Y-1-1)]

536 g of methylhydrogen polysiloxane represented by Formula (a-1-1) was charged into a reactor, and the methylhydrogen polysiloxane was heated to 40°C while stirring under a nitrogen flow.

0.4 g of a toluene solution (Pt concentration: 0.3 wt%) of a platinum-1,3,5,7-tetravinyl-1,3,5,7-tetramethylcyclotetrasiloxane complex was added thereto, and 265 g of α-methylstyrene was added dropwise thereto while maintaining a reaction temperature to 40°C to 90°C.

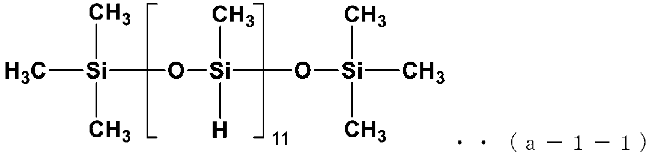

After completion of the dropwise addition, the stirring was continued at 85°C for 2 hours, and 0.5 g of the reaction solution was collected to confirm that the reaction rate of the Si-H group was approximately 36% by an alkali decomposition gas generation method (the remaining Si-H groups were decomposed by an ethanol/water solution of KOH, and the reaction rate of the Si-H groups was calculated from the volume of the generated hydrogen gas). Next, the reaction solution was heated to 135°C under reduced pressure to distill off a low-boiling fraction for 2 hours, thereby obtaining 673 g of a crosslinking agent (Y-1-1).

It was confirmed by ²⁹Si-NMR that the obtained crosslinking agent (Y-1-1) was the compound represented by Formula (a-1).

In a case where a viscosity of the obtained crosslinking agent (Y-1-1) was measured according to JIS-Z-8803 using an Ubbelohde viscometer at 25°C, and the viscosity was 26 mm²/s.

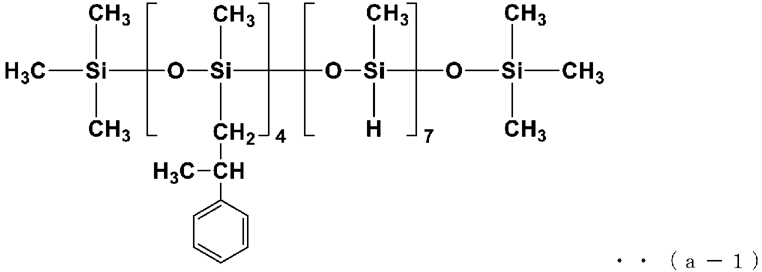

### [Crosslinking agent (Y-1-2)]

370 g of methylhydrogen polysiloxane represented by Formula (a-2-1) was charged into a reactor, and the methylhydrogen polysiloxane was heated to 80°C while stirring under a nitrogen flow. 0.45 g of a toluene solution (Pt concentration: 0.3 wt%) of a platinum-1,3,5,7-tetravinyl-1,3,5,7-tetramethylcyclotetrasiloxane complex was added thereto, and 280 g of α-methylstyrene was added dropwise thereto while maintaining a reaction temperature to 80°C to 120°C.

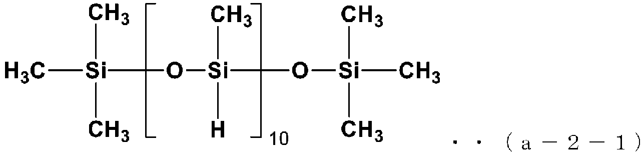

After completion of the dropwise addition, the stirring was continued at 145°C for 1 hour, and 0.5 g of the reaction solution was collected to confirm that the reaction rate of the Si-H group was approximately 50% by an alkali decomposition gas generation method (the remaining Si-H groups were decomposed by an ethanol/water solution of KOH, and the reaction rate of the Si-H groups was calculated from the volume of the generated hydrogen gas). Next, the reaction solution was heated to 145°C under reduced pressure to distill off a low-boiling fraction for 1 hour, thereby obtaining 600 g of a crosslinking agent (Y-1-2).

It was confirmed by ²⁹Si-NMR that the obtained crosslinking agent (Y-1-2) was the compound represented by Formula (a-2).

In a case where a viscosity of the obtained crosslinking agent (Y-1-2) was measured according to JIS-Z-8803 using an Ubbelohde viscometer at 25°C, and the viscosity was 72 mm²/s.

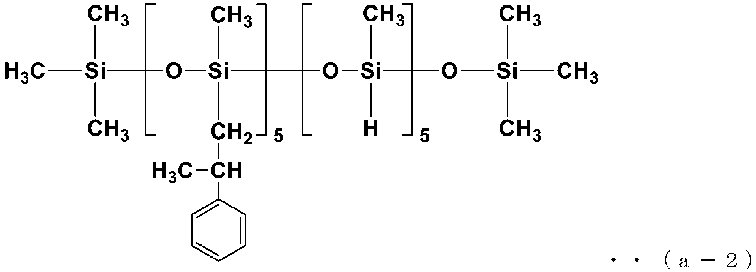

### [Crosslinking agent (Y-2)]

The crosslinking agent (Y-2) was a compound represented by Formula (a-3).

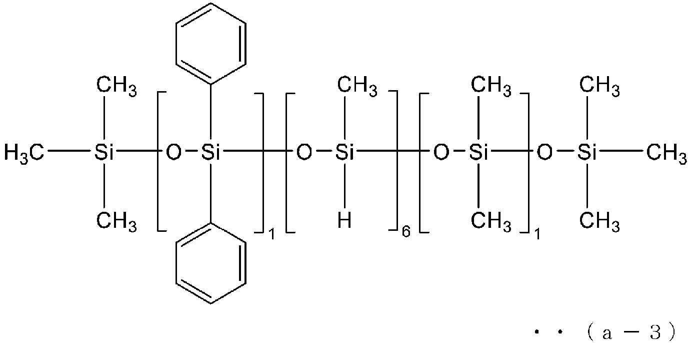

### <Other components>

Other components used in each of Examples are as follows.
Organic peroxide (Z-1): PERHEXA 25B-40 manufactured by NOF CORPORATION, 2,5-dimethyl-2,5-di(t-butylperoxy)hexane (purity: 40% by mass), 1 minute half-life temperature: 179.8°C
Organic peroxide (Z-2): PERCUMYL (registered trademark) D-40 manufactured by NOF CORPORATION, dicumyl peroxide (purity: 40% by mass), 1-minute half-life temperature: 175.2°C
Catalyst 1: complex of chloroplatinic acid and 1,3,5,7-tetravinyl-1,3,5,7-tetramethylcyclotetrasiloxane
Catalyst 2: manufactured by Toray Industries, Inc., SRX212 Catalyst, complex salt of chloroplatinic acid and 1,3-divinyltetramethyldisiloxane
Reaction inhibitor 1: ethyl-1-octyn-3-ol
Reaction inhibitor 2: manufactured by Nissin Chemical co., ltd., 1-ethynyl-1-cyclohexanol
Process oil 1: manufactured by Idemitsu Kosan Co., Ltd., Diana Process Oil PW-380, paraffinic process oil
Process oil 2: manufactured by Idemitsu Kosan Co., Ltd., Diana Process Oil PS-430, paraffinic process oil
Process oil 3: manufactured by Idemitsu Kosan Co., Ltd., Diana Process Oil PW-32, paraffinic process oil
Carbon black 1: manufactured by ASAHI CARBON CO., LTD., Asahi #60G
Carbon black 2: manufactured by ASAHI CARBON CO., LTD., Asahi #50HG
Carbon black 3: manufactured by ASAHI CARBON CO., LTD., Asahi #60UG, FEF carbon black
Heavy calcium carbonate: manufactured by Shiraishi Calcium Kaisha, Ltd., WHITON SB
Calcium carbonate: manufactured by Shiraishi Group, HAKUENKA CC
Precipitation silica: manufactured by Tosoh Silica Corporation, Nipsil VN3
Calcium oxide 1: manufactured by Inoue Calcium Corporation, VESTA PP
Calcium oxide 2: manufactured by Inoue Calcium Corporation, VESTA BS
Antioxidant: manufactured by BASF Japan Ltd., IRGANOX 1010
Titanium oxide: manufactured by Ishihara Sangyo Kaisha, Ltd., R-820
Blue complex oxide-based pigment: manufactured by Dainichiseika Color & Chemicals Mfg.Co.,Ltd., Dipyroxide Blue
Red pigment: manufactured by Sanyo Color Works, LTD., PIGMOTEX RED 102 E-T
Yellow pigment: manufactured by Sanyo Color Works, LTD., PIGMOTEX YELLOW 83 E-T
Calcined kaolin: manufactured by BASF Japan Ltd., TRANSLINK-37
Baking soda 1: manufactured by EIWA CHEMICAL IND.CO.,LTD., FE-507R
Baking soda 2: manufactured by EIWA CHEMICAL IND.CO.,LTD., FE-507
Values of the baking soda 1 and the baking soda 2 obtained from a number-based cumulative distribution curve of unevenness degree and a number-based cumulative distribution curve of equivalent circle diameter are shown in Table 2.

**[Table 2]**

| | Unevenness degree | | | Equivalent circle diameter (µm) | | |
|---|---|---|---|---|---|---|
| | 10% cumulative | 50% cumulative | 90% cumulative | 10% cumulative | 50% cumulative | 90% cumulative |
| Baking soda 1 | 0.89 | 0.95 | 0.99 | 6.01 | 15.3 | 43.3 |
| Baking soda 2 | 0.97 | 1.00 | 1.00 | 2.72 | 3.85 | 9.29 |

### <Examples 1-1 to 1-7>

### [Preparation of uncrosslinked composition]

As a first stage, raw materials shown in Raw material 1 of Tables 3 and 4 were kneaded at 140°C for 2 minutes using a BB-4 type Banbury mixer (manufactured by KOBE STEEL, LTD.). Thereafter, the ram was raised to clean the inside of the extruder, and the mixture was kneaded for 1 minute and discharged at approximately 150°C to obtain a first-stage blending material. The Mooney viscosity of the first-stage blending material is shown in Tables 3 and 4.

Next, as a second stage, the blending material obtained in the first stage was wound around an 8-inch roll (manufactured by Nippon Roll Co., Ltd.; the surface temperature of the front roll was 50°C, the surface temperature of the rear roll was 50°C, the rotation speed of the front roll was 16 rpm, and the rotation speed of the rear roll was 18 rpm), raw materials shown in Raw material 2 of Tables 3 and 4 were added thereto, and the mixture was kneaded for 10 minutes to obtain an uncrosslinked composition of each of Examples.

### [Preparation of sheet-shaped crosslinked molded body]

The uncrosslinked composition of each of Examples was pressed at 180°C for 10 minutes in a mold using a press molding machine to obtain a sheet-shaped crosslinked molded body having a thickness of 2 mm.

### [Evaluation]

For the uncrosslinked compositions of each of Examples, a crosslinking behavior (low-temperature crosslinking) when the crosslinking temperature was set to 90°C and the crosslinking time was set to 90 minutes and a crosslinking behavior (high-temperature crosslinking) when the crosslinking temperature was set to 180°C and the crosslinking time was set to 30 minutes were measured. The results are shown in Tables 3 and 4. As shown in Tables 3 and 4, in Examples 1-1 to 1-7, it was found that the obtained molded bodies had excellent physical properties and processability.

As shown in Tables 3 and 4, in Examples 1-1 to 1-7 in which the crosslinking agent (Y-1-1) or (Y-1-2) was used, each ts value in the low-temperature crosslinking was larger than that in Example 1-8 in which the crosslinking agent (Y-2) was used, and the scorch resistance was excellent. In addition, it was found that tc90 in the high-temperature crosslinking of Examples 1-1 to 1-7 was 10 minutes or less, and a sufficient crosslinking rate was obtained during the crosslinking.

In addition, in Examples 1-1 to 1-7, the tensile product of the crosslinked molded body was larger than that in Example 1-8, and the elongation properties were excellent.

**[Table 3]**

| | | | Example 1-1 | Example 1-2 | Example 1-3 | Example 1-4 |
|---|---|---|---|---|---|---|
| Raw material 1 | Copolymer (S-1) | Part by mass | 100 | 100 | 100 | 100 |
| | Carbon black 1 | Part by mass | 40 | 40 | 40 | 40 |
| | Heavy calcium carbonate | Part by mass | 30 | 30 | 30 | 30 |
| | Process oil 1 | Part by mass | 40 | 40 | 40 | 40 |
| | Calcium oxide 1 | Part by mass | 10 | 10 | 10 | 10 |
| | Total | Part by mass | 220 | 220 | 220 | 220 |
| | ML (1 + 4) 100°C | - | 85 | 85 | 85 | 85 |
| Raw material 2 | Crosslinking agent (Y-1-1) | Part by mass | 4.0 | 2.5 | 4.0 | 6.3 |
| | Crosslinking agent (Y-1-2) | Part by mass | - | - | - | - |
| | Crosslinking agent (Y-2) | Part by mass | - | - | - | - |
| | Catalyst 1 | Part by mass | 0.2 | - | - | - |
| | Catalyst 2 | Part by mass | - | 0.2 | 0.2 | 0.2 |
| | Reaction inhibitor 1 | Part by mass | 0.1 | - | - | - |
| | Reaction inhibitor 2 | Part by mass | - | 0.1 | 0.1 | 0.1 |
| Total | | Part by mass | 224.3 | 222.8 | 224.3 | 226.6 |
| Low-temperature crosslinking | Condition: 90°C and 90 minutes | | | | | |
| | ts1 | min | 63.8 | > 90 | 81.2 | 73.1 |
| | ts2 | min | > 90 | > 90 | > 90 | 83.9 |
| | ts4 | min | > 90 | > 90 | > 90 | > 90 |
| | ts10 | min | > 90 | > 90 | > 90 | > 90 |
| | MCR | dNm/min | 0.35 | 0.38 | 0.32 | 0.43 |
| High-temperature crosslinking | Condition: 180°C and 30 minutes | | | | | |
| | tc90 | min | 7.0 | 4.6 | 4.5 | 1.0 |
| | S'max - S'min | dNm | 9.3 | 9.7 | 12.3 | 13.0 |
| | MCR | dNm/min | 36.9 | 37.8 | 55.9 | 70.3 |
| Physical properties | Molding condition: 180°C and 10 minutes | | | | | |
| | Duro A hardness | - | 56 | 54 | 57 | 58 |
| | M100 | MPa | 1.68 | 1.40 | 1.64 | 1.90 |
| | M200 | MPa | 4.01 | 3.00 | 3.63 | 4.20 |
| | M300 | MPa | 6.91 | 5.00 | 6.39 | 7.30 |
| | TB | MPa | 8.4 | 9.3 | 7.8 | 8.2 |
| | EB | % | 351 | 481 | 351 | 334 |
| | Tensile product | - | 2952 | 4473 | 2748 | 2739 |
| CS: 150°C, 22 hours, and compression rate of 25% | | % | 16 | 18 | 12 | 10 |

**[Table 4]**

| | | | Example 1-5 | Example 1-6 | Example 1-7 | Example 1-8 |
|---|---|---|---|---|---|---|
| Raw material 1 | Copolymer (S-1) | Part by mass | 100 | 100 | 100 | 100 |
| | Carbon black 1 | Part by mass | 40 | 40 | 40 | 40 |
| | Heavy calcium carbonate | Part by mass | 30 | 30 | 30 | 30 |
| | Process oil 1 | Part by mass | 40 | 40 | 40 | 40 |
| | Calcium oxide 1 | Part by mass | 10 | 10 | 10 | 10 |
| | Total | Part by mass | 220 | 220 | 220 | 220 |
| | ML (1 + 4) 100°C | - | 85 | 85 | 85 | 85 |
| Raw material 2 | Crosslinking agent (Y-1-1) | Part by mass | 4.0 | 4.0 | - | - |
| | Crosslinking agent (Y-1-2) | Part by mass | - | - | 4.0 | |
| | Crosslinking agent (Y-2) | Part by mass | - | - | - | 4.0 |
| | Catalyst 1 | Part by mass | - | - | - | 0.2 |
| | Catalyst 2 | Part by mass | 0.2 | 0.2 | 0.2 | - |
| | Reaction inhibitor 1 | Part by mass | - | - | | 0.1 |
| | Reaction inhibitor 2 | Part by mass | 0.1 | 0.2 | 0.1 | - |
| Total | | Part by mass | 224.3 | 224.4 | 224.3 | 224.3 |
| Low-temperature crosslinking | Condition: 90°C and 90 minutes | | | | | |
| | ts1 | min | 55.3 | > 90 | > 90 | 20.0 |
| | ts2 | min | 65.6 | > 90 | > 90 | 32.6 |
| | ts4 | min | 72.9 | > 90 | > 90 | 39.0 |
| | ts10 | min | > 90 | > 90 | > 90 | 62.5 |
| | MCR | dNm/min | 0.39 | 0.00 | 0.00 | 0.55 |
| High-temperature crosslinking | Condition: 180°C and 30 minutes | | | | | |
| | tc90 | min | 4.1 | 5.0 | 4.3 | 0.8 |
| | S'max - S'min | dNm | 12.2 | 12.6 | 10.9 | 12.7 |
| | MCR | dNm/min | 56.6 | 47.4 | 33.4 | 87.9 |
| Physical properties | Molding condition: 180°C and 10 minutes | | | | | |
| | Duro A hardness | - | 57 | 56 | 52 | 59 |
| | M100 | MPa | 1.80 | 1.80 | 1.14 | 2.10 |
| | M200 | MPa | 4.10 | 3.80 | 2.13 | 5.18 |
| | M300 | MPa | 7.10 | 6.50 | 3.68 | - |
| | TB | MPa | 8.7 | 7.6 | 6.5 | 7.9 |
| | EB | % | 319 | 336 | 469 | 280 |
| | Tensile product | - | 2775 | 2554 | 3049 | 2204 |
| CS: 150°C, 22 hours, and compression rate of 25% | | % | 11 | 12 | 18 | 11 |

### <Examples 2-1 to 2-4>

### [Preparation of uncrosslinked composition]

As a first stage, raw materials shown in Raw material 1 of Table 5 were kneaded at 140°C for 2 minutes using a BB-4 type Banbury mixer (manufactured by KOBE STEEL, LTD.). Thereafter, the ram was raised to clean the inside of the extruder, and the mixture was kneaded for 1 minute and discharged at approximately 150°C to obtain a first-stage blending material.

Next, as a second stage, the blending material obtained in the first stage was wound around an 8-inch roll (manufactured by Nippon Roll Co., Ltd.; the surface temperature of the front roll was 50°C, the surface temperature of the rear roll was 50°C, the rotation speed of the front roll was 16 rpm, and the rotation speed of the rear roll was 18 rpm), raw materials shown in Raw material 2 of Table 5 were added thereto, and the mixture was kneaded for 10 minutes to obtain an uncrosslinked composition of each of Examples.

### [Preparation of tube-shaped foam molded body]

The uncrosslinked composition of each of Examples was extruded into a tube shape using a 50 mmϕ extruder equipped with a tube-shaped die (inner diameter: 10 mm, wall thickness: 1 mm) [manufactured by MITSUBA MFG. CO., LTD.; L/D = 16] under the conditions of a die temperature of 80°C, a cylinder temperature of 60°C, and a screw temperature of 50°C. The molded body was crosslinked in a hot air vulcanization tank (HAV) at 230°C for 5 minutes to obtain a tube-shaped foam molded body.

### [Evaluation]

For the uncrosslinked compositions of each of Examples, the crosslinking behavior was measured when the crosslinking temperature was set to 180°C and the crosslinking time was set to 15 minutes. The results are shown in Table 5. As shown in Table 5, it was found that all of Examples had excellent physical properties and processability of the obtained molded body.

As shown in Table 5, it was found that, in all of Examples, the tc90 was 10 minutes or less, and a sufficient crosslinking rate was obtained during the crosslinking.

In addition, Table 5 shows the results of evaluating sponge physical properties of the sheet-shaped foam molded body of each of Examples.

Among these, Examples 2-1 and 2-2 in which the baking soda 1 was used had a lower specific gravity than Examples 2-3 and 2-4 in which the baking soda 2 was used, as shown in Table 5. In addition, the water absorption was also higher than that in Example 2-3.

In addition, the results of evaluating the compressive permanent strain (CS) of the tube-shaped foam molded body of each of Examples are shown in Table 5. Among these, in Examples 2-1 and 2-2, the compressive permanent strain (CS) was smaller than that in Example 2-3, as shown in Table 5.

**[Table 5]**

| | | | Example 2-1 | Example 2-2 | Example 2-3 | Example 2-4 |
|---|---|---|---|---|---|---|
| Raw material 1 | Copolymer (S-1) | Part by mass | 100 | 100 | 100 | 100 |
| | Carbon black 2 | Part by mass | 120 | 120 | 120 | 120 |
| | Process oil 2 | Part by mass | 90 | 90 | 90 | 90 |
| Raw material 2 | Calcium oxide 1 | Part by mass | 5 | 5 | 5 | 5 |
| | Baking soda 1 | Part by mass | 2.4 | 2.4 | - | - |
| | Baking soda 2 | Part by mass | - | - | 2.4 | 4.0 |
| | Antioxidant | Part by mass | - | 2 | | |
| | Crosslinking agent (Y-1-1) | Part by mass | 6.5 | 6.5 | 6.5 | 6.5 |
| | Reaction inhibitor 2 | Part by mass | 0.4 | 0.4 | 0.4 | 0.4 |
| | Catalyst 2 | Part by mass | 0.2 | 0.2 | 0.2 | 0.2 |
| Crosslinking behavior | Condition: 180°C and 15 minutes | | | | | |
| | tc10 | min | 0.56 | 0.61 | 0.50 | 0.46 |
| | tc90 | min | 2.01 | 1.52 | 1.17 | 1.20 |
| | TS1 | min | 0.56 | 0.62 | 0.51 | 0.47 |
| | TS2 | min | 0.60 | 0.66 | 0.55 | 0.50 |
| | S'max - S'min | dNm | 9.62 | 8.56 | 8.93 | 8.42 |
| Sponge physical properties | Molding condition: 230°C and 5 minutes | | | | | |
| | Specific gravity | | 0.51 | 0.48 | 0.67 | 0.68 |
| | Water absorption | % | 24.0 | 40.4 | 0.81 | - |
| | TB | MPa | 1.97 | 1.93 | 2.69 | - |
| | EB | % | 200 | 219 | 233 | - |
| CS: 70°C, 22 hours, and compression rate of 50% | | % | 8.7 | 6.7 | 9.7 | - |
| CS: 100°C, 22 hours, and compression rate of 50% | | % | 11.4 | 9.8 | 13.2 | - |

### <Examples 3-1 to 3-3>

### [Preparation of uncrosslinked composition of Example 3-1]

As a first stage, raw materials shown in Raw material 1 of Table 5 were kneaded at 120°C for 5 minutes using a BB-4 type Banbury mixer (manufactured by KOBE STEEL, LTD.). Thereafter, the ram was raised to clean the inside of the extruder, and the mixture was kneaded for 1 minute and discharged at approximately 150°C to obtain a first-stage blending material.

Next, as a second stage, the blending material obtained in the first stage was wound around an 8-inch roll (manufactured by Nippon Roll Co., Ltd.; the surface temperature of the front roll was 50°C, the surface temperature of the rear roll was 50°C, the rotation speed of the front roll was 16 rpm, and the rotation speed of the rear roll was 18 rpm), raw materials shown in Raw Material 2 of Table 6 were added thereto, and the mixture was kneaded for 5 minutes and dispensed into ribbons to obtain an uncrosslinked composition.

### [Preparation of uncrosslinked compositions of Examples 3-2 and 3-3]

As a first stage, raw materials shown in Raw material 1 of Table 5 were kneaded at 120°C for 5 minutes using a BB-4 type Banbury mixer (manufactured by KOBE STEEL, LTD.). Thereafter, the ram was raised to clean the inside of the extruder, and the mixture was kneaded for 1 minute and discharged at approximately 150°C to obtain a first-stage blending material.

Next, as a second stage, the blending material obtained in the first stage was wound around an 8-inch roll (manufactured by Nippon Roll Co., Ltd.; the surface temperature of the front roll was 50°C, the surface temperature of the rear roll was 50°C, the rotation speed of the front roll was 16 rpm, and the rotation speed of the rear roll was 18 rpm), raw materials shown in Raw material 2 of Table 6 were added thereto, and the mixture was kneaded for 10 minutes and dispensed into ribbons to obtain an uncrosslinked composition of each of Examples.

### [Preparation of sheet-shaped crosslinked molded body]

The uncrosslinked composition of each of Examples was pressed at 180°C for 10 minutes in a mold using a press molding machine to obtain a sheet-shaped crosslinked molded body having a thickness of 2 mm.

### [Evaluation]

For the uncrosslinked compositions of each of Examples, the crosslinking behavior (high-temperature crosslinking) was measured when the crosslinking temperature was set to 180°C and the crosslinking time was set to 15 minutes. Table 6 shows the results. As shown in Table 6, it was found that all of Examples had excellent physical properties and processability of the obtained molded body.

As shown in Table 6, it was found that, in all of Examples, the tc90 was 10 minutes or less, and a sufficient crosslinking rate was obtained during the crosslinking.

In addition, Table 6 shows the results of evaluating the physical properties of the crosslinked molded body of each of Examples. Among these, as shown in Table 6, in Example 3-1 in which the crosslinking agent was kneaded in the first stage, the compressive permanent strain (CS) was smaller than in Examples 3-2 and 3-3 in which the crosslinking agent was kneaded in the second stage.

**[Table 6]**

| | | | Example 3-1 | Example 3-2 | Example 3-3 |
|---|---|---|---|---|---|
| Raw material 1 | Copolymer (S-1) | Part by mass | 100 | 100 | 100 |
| | Carbon black 2 | Part by mass | 120 | 120 | 120 |
| | Process oil 2 | Part by mass | 90 | 90 | 90 |
| | Crosslinking agent (Y-1-1) | Part by mass | 6.5 | - | - |
| Raw material 2 | Crosslinking agent (Y-1-1) | Part by mass | - | 6.5 | 7.5 |
| | Calcium oxide 1 | Part by mass | 5 | 5 | 5 |
| | Reaction inhibitor 2 | Part by mass | 0.4 | 0.4 | 0.4 |
| | Catalyst 2 | Part by mass | 0.2 | 0.2 | 0.2 |
| Crosslinking behavior | Condition: 180°C and 15 minutes | | | | |
| | tc10 | min | 0.51 | 0.95 | 0.83 |
| | tc90 | min | 1.76 | 3.82 | 2.72 |
| | TS1 | min | 0.51 | 0.94 | 0.82 |
| | S'max - S'min | dNm | 11.53 | 11.21 | 11.5 |
| Tensile test | Molding condition: 180°C and 10 minutes | | | | |
| | TB | MPa | 8.89 | 8.3 | 8.01 |
| | EB | % | 453 | 466 | 425 |
| CS: 100°C, 22 hours, and compression rate of 25% | | % | 5.8 | 9.3 | 6.8 |
| CS: 150°C, 22 hours, and compression rate of 25% | | % | 13.0 | 19.2 | 12.4 |

### <Examples 4-1 to 4-4>

### [Preparation of uncrosslinked composition]

As a first stage, raw materials shown in Raw material 1 of Table 7 were kneaded at 120°C for 5 minutes using a BB-4 type Banbury mixer (manufactured by KOBE STEEL, LTD.) to obtain a first-stage blending material.

Next, as a second stage, the blending material obtained in the first stage was wound around an 8-inch roll (manufactured by Nippon Roll Co., Ltd.; the surface temperature of the front roll was 50°C, the surface temperature of the rear roll was 50°C, the rotation speed of the front roll was 16 rpm, and the rotation speed of the rear roll was 18 rpm), raw materials shown in Raw material 2 of Table 7 were added thereto, and the mixture was kneaded for 5 minutes to obtain an uncrosslinked composition of each of Examples.

### [Preparation of crosslinked molded body of Example 4-1]

The uncrosslinked composition was pressed at 180°C for 15 minutes in a mold using a press molding machine to obtain a sheet-shaped primary crosslinked body having a thickness of 2 mm. Next, secondary crosslinking was performed on the primary crosslinked body at 150°C for 16 hours with a high temperature thermostat (product name; horizontal high temperature oven PHH-202, manufactured by ESPEC Corp.) to obtain a crosslinked molded body of Example 4-1.

### [Preparation of crosslinked molded body of Example 4-2]

The primary crosslinked body obtained in Example 4-1 was used as a crosslinked molded body in Example 4-2.

### [Preparation of crosslinked molded body of Example 4-3]

Secondary crosslinking was performed on the primary crosslinked body obtained in Example 4-1 at 180°C for 2 hours with a high temperature thermostat (product name; horizontal high temperature oven PHH-202, manufactured by ESPEC Corp.) to obtain a crosslinked molded body of Example 4-3.

### [Preparation of crosslinked molded body of Example 4-4]

Secondary crosslinking was performed on the primary crosslinked body obtained in Example 4-1 at 200°C for 0.5 hours with a high temperature thermostat (product name; horizontal high temperature oven PHH-202, manufactured by ESPEC Corp.) to obtain a crosslinked molded body of Example 4-4.

### [Evaluation]

The compressive permanent strain (CS) and the content of the low-molecular-weight components of the crosslinked molded body of each of Example were measured. The results are shown in Table 7. As shown in Table 7, it was found that all of Examples had excellent physical properties and processability of the obtained molded body.

Among these, as shown in Table 7, the compressive permanent strain of the crosslinked molded body of Example 4-1, obtained by maintaining the secondary crosslinking in a heat medium at a relatively low temperature of 150°C for 16 hours, was small, and the content of the low-molecular-weight components was extremely small.

**[Table 7]**

| | | | Example 4-1 | Example 4-2 | Example 4-3 | Example 4-4 |
|---|---|---|---|---|---|---|
| Raw material 1 | Copolymer (S-1) | Part by mass | 100 | 100 | 100 | 100 |
| | Carbon black 2 | Part by mass | 120 | 120 | 120 | 120 |
| | Process oil 2 | Part by mass | 90 | 90 | 90 | 90 |
| Raw material 2 | Calcium oxide 1 | Part by mass | 5 | 5 | 5 | 5 |
| | Crosslinking agent (Y-1-1) | Part by mass | 6.5 | 6.5 | 6.5 | 6.5 |
| | Reaction inhibitor 2 | Part by mass | 0.4 | 0.4 | 0.4 | 0.4 |
| | Catalyst 2 | Part by mass | 0.2 | 0.2 | 0.2 | 0.2 |
| Primary crosslinking | | | 180°C × 15 min | 180°C × 15 min | 180°C × 15 min | 180°C × 15 min |
| Secondary crosslinking | | | 150°C × 16 h | None | 180°C × 2 h | 200°C × 0.5 h |
| CS: 70°C, 197 hours, and compression rate of 25% | | % | 4 | 10 | 6 | 7 |
| CS: 150°C, 22 hours, and compression rate of 25% | | % | 7 | 16 | 9 | 10 |
| Content of low-molecular-weight components | | ppm | 1 | 30 | 1 | 6 |

### <Examples 5-1 to 5-6>

### [Preparation of uncrosslinked composition]

As a first stage, using an 8-inch roll (manufactured by Nippon Roll Co., Ltd.; the surface temperature of the front roll was 50°C, the surface temperature of the rear roll was 50°C, the rotation speed of the front roll was 16 rpm, and the rotation speed of the rear roll was 18 rpm), raw materials shown in Raw material 1 of Tables 8 and 9 were kneaded for 10 minutes.

Next, as a second stage, the blending material obtained in the first stage was wound around an 8-inch roll (manufactured by Nippon Roll Co., Ltd.; the surface temperature of the front roll was 50°C, the surface temperature of the rear roll was 50°C, the rotation speed of the front roll was 16 rpm, and the rotation speed of the rear roll was 18 rpm), raw materials shown in Raw material 2 of Tables 8 and 9 were added thereto, and the mixture was kneaded for 10 minutes to obtain an uncrosslinked composition of each of Examples. The Mooney viscosity of the uncrosslinked composition of each of Examples is shown in Tables 8 and 9.

### [Preparation of sheet-shaped crosslinked molded body]

The uncrosslinked composition of each of Examples was pressed at 170°C for 10 minutes in a mold using a press molding machine to obtain a sheet-shaped crosslinked molded body having a thickness of 2 mm.

### [Evaluation]

For the uncrosslinked compositions of each of Examples, the crosslinking behavior was measured when the crosslinking temperature was set to 170°C and the crosslinking time was set to 10 minutes. The results are shown in Tables 8 and 9.

As shown in Tables 8 and 9, it was found that, in all of Examples, the tc90 was 10 minutes or less, and a sufficient crosslinking rate was obtained during the crosslinking.

In addition, Tables 8 and 9 show the results of evaluating the physical properties of the crosslinked molded body of each of Examples. As shown in Tables 8 and 9, it was found that all of Examples had excellent physical properties and processability of the obtained molded body.

Among these, as shown in Tables 8 and 9, in Examples 5-1 to 5-5 in which the Mooney viscosity of the uncrosslinked composition was in a range of 0.1 to 8, the compressive permanent strain (CS) was smaller than that in Example 5-6 in which the Mooney viscosity of the uncrosslinked composition was high. The compressive permanent strain (CS) was evaluated for the sheet-shaped crosslinked molded body.

**[Table 8]**

| | | | Example 5-1 | Example 5-2 | Example 5-3 |
|---|---|---|---|---|---|
| Raw material 1 | Copolymer (S-2) | Part by mass | 100 | 100 | 100 |
| | Process oil 3 | Part by mass | 50 | 50 | 50 |
| | Titanium oxide | Part by mass | 2.5 | 2.5 | 2.5 |
| | Blue complex oxide-based pigment | Part by mass | - | - | 4 |
| | Red pigment | Part by mass | - | - | - |
| | Yellow pigment | Part by mass | - | - | - |
| | Precipitation silica | Part by mass | 12.5 | - | - |
| | Calcined kaolin | Part by mass | 50 | 50 | 50 |
| | Calcium carbonate | Part by mass | - | 50 | 50 |
| | Carbon black 2 | Part by mass | - | - | - |
| | Calcium oxide 2 | Part by mass | - | - | - |
| | Total | Part by mass | 215.0 | 252.5 | 256.5 |
| Raw material 2 | Crosslinking agent (Y-1-1) | Part by mass | 6.5 | 6.5 | 6.5 |
| | Reaction inhibitor 2 | Part by mass | 0.4 | 0.4 | 0.4 |
| | Catalyst 2 | Part by mass | 0.2 | 0.2 | 0.2 |
| ML (1 + 4) 100°C | | - | 2.6 | 4.2 | 4.1 |
| Crosslinking behavior | Condition: 170°C and 10 minutes | | | | |
| | tc10 | min | 0.31 | 0.42 | 0.29 |
| | tc50 | min | 0.44 | 0.66 | 0.41 |
| | tc90 | min | 2.06 | 5.44 | 1.50 |
| | TS0.1 | min | 0.22 | 0.33 | 0.21 |
| | TS0.5 | min | 0.29 | 0.39 | 0.28 |
| | TS1 | min | 0.32 | 0.43 | 0.31 |
| | S'max | dNm | 7.92 | 8.35 | 7.33 |
| | S'max - S'min | dNm | 7.89 | 8.33 | 7.30 |
| | MCR | dNm/min | 25.8 | 18.2 | 26.4 |
| Physical properties | Molding condition: 170°C and 10 minutes | | | | |
| | Duro A hardness | - | 45 | 43 | 40 |
| | TB | MPa | 4.2 | 2.9 | 3.1 |
| | EB | % | 195 | 234 | 327 |
| | M25 | MPa | 0.52 | 0.50 | 0.44 |
| | M50 | MPa | 0.83 | 0.72 | 0.61 |
| | M100 | MPa | 1.73 | 1.17 | 0.92 |
| | M200 | MPa | - | 2.46 | 1.85 |
| | M300 | MPa | - | - | 2.87 |
| Crosslinking density | | × 10¹⁹ pieces/cc | 10.1 | 4.91 | 4.36 |
| CS: 70°C, 197 hours, and compression rate of 25% | | % | 12 | 16 | 20 |
| CS: 150°C, 72 hours, and compression rate of 25% | | % | 20 | 33 | 41 |

**[Table 9]**

| | | | Example 5-4 | Example 5-5 | Example 5-6 |
|---|---|---|---|---|---|
| Raw material 1 | Copolymer (S-2) | Part by mass | 100 | 100 | 100 |
| | Process oil 3 | Part by mass | 50 | 50 | 50 |
| | Titanium oxide | Part by mass | 2.5 | 2.5 | - |
| | Blue complex oxide-based pigment | Part by mass | - | - | - |
| | Red pigment | Part by mass | 4 | - | - |
| | Yellow pigment | Part by mass | - | 4 | - |
| | Precipitation silica | Part by mass | - | - | - |
| | Calcined kaolin | Part by mass | 50 | 50 | - |
| | Calcium carbonate | Part by mass | 50 | 50 | - |
| | Carbon black 2 | Part by mass | - | - | 150 |
| | Calcium oxide 2 | Part by mass | 5 | 5 | - |
| | Total | Part by mass | 261.5 | 261.5 | 300.0 |
| Raw material 2 | Crosslinking agent (Y-1-1) | Part by mass | 6.5 | 6.5 | 6.5 |
| | Reaction inhibitor 2 | Part by mass | 0.4 | 0.4 | 0.4 |
| | Catalyst 2 | Part by mass | 0.2 | 0.2 | 0.2 |
| ML (1 + 4) 100°C | | - | 4.1 | 4.0 | 28.2 |
| Crosslinking behavior | Condition: 170°C and 10 minutes | | | | |
| | tc10 | min | 0.39 | 0.29 | 1.51 |
| | tc50 | min | 0.52 | 0.39 | 2.56 |
| | tc90 | min | 1.53 | 0.69 | 6.35 |
| | TS0.1 | min | 0.32 | 0.22 | 0.51 |
| | TS0.5 | min | 0.38 | 0.28 | 1.31 |
| | TS1 | min | 0.41 | 0.31 | 1.43 |
| | S'max | dNm | 5.82 | 6.96 | 14.95 |
| | S'max - S'min | dNm | 5.79 | 6.92 | 14.27 |
| | MCR | dNm/min | 18.3 | 31.0 | 6.3 |
| Physical properties | Molding condition: 170°C and 10 minutes | | | | |
| | Duro A hardness | - | 37 | 40 | 73 |
| | TB | MPa | 2.8 | 2.7 | 7.0 |
| | EB | % | 348 | 304 | 180 |
| | M25 | MPa | 0.38 | 0.43 | 1.64 |
| | M50 | MPa | 0.50 | 0.59 | 2.88 |
| | M100 | MPa | 0.72 | 0.86 | 5.27 |
| | M200 | MPa | 1.42 | 1.69 | - |
| | M300 | MPa | 2.35 | 2.72 | - |
| Crosslinking density | | × 10¹⁹ pieces/cc | 2.91 | 3.37 | 7.82 |
| CS: 70°C, 197 hours, and compression rate of 25% | | % | 14 | 14 | 36 |
| CS: 150°C, 72 hours, and compression rate of 25% | | % | 23 | 31 | 54 |

### <Examples 6-1 to 6-7>

### [Preparation of uncrosslinked composition]

As a first stage, raw materials shown in Raw material 1 of Table 10 were kneaded at room temperature for 10 minutes using a defoaming conditioning mixer (manufactured by Shinky Co., Ltd., AR-250, rotation/revolution propellerless mixing method).

Next, as a second stage, the blending material obtained in the first stage was wound around a three-roll mill (manufactured by ATMEC Co., Ltd., BR-230BV, roll dimensions ϕ86.5 × 230 mmL), raw materials shown in Raw material 2 of Table 10 were added thereto, and the mixture was kneaded at room temperature for 10 minutes to obtain an uncrosslinked composition of each of Examples. The B-type viscosity of the uncrosslinked composition of each of Examples is shown in Table 10.

### [Preparation of sheet-shaped crosslinked molded body]

The uncrosslinked composition of each of Examples was pressed at 170°C for 10 minutes in a mold using a press molding machine to obtain a sheet-shaped crosslinked molded body having a thickness of 2 mm.

### [Evaluation]

For the uncrosslinked compositions of each of Examples, the crosslinking behavior was measured at various crosslinking temperatures and crosslinking times shown in Tables 11 and 12. The results are shown in Tables 11 and 12. As shown in Tables 11 and 12, in Examples 6-1 to 6-6, it was found that the obtained molded bodies had excellent physical properties and processability.

As shown in Tables 11 and 12, it was found that the crosslinking reaction did not proceed at 90°C, but the crosslinking reaction proceeded at 120°C or higher. The compressive permanent strain (CS) was evaluated for the sheet-shaped crosslinked molded body.

In addition, Table 13 shows the results of evaluating the physical properties of the crosslinked molded body of each of Examples. As shown in Table 13, in Examples 6-1 to 6-6, it was found that the obtained molded bodies had excellent physical properties and processability.

As shown in Table 13, it was found that, in Examples 6-1 to 6-6 using the copolymer (S-2), the hardness was lower and the EB was higher than in Example 6-7 using the copolymer (A-1).

**[Table 10]**

| | | | Example 6-1 | Example 6-2 | Example 6-3 | Example 6-4 | Example 6-5 | Example 6-6 | Example 6-7 |
|---|---|---|---|---|---|---|---|---|---|
| Raw material 1 | Copolymer (S-2) | Part by mass | 100 | 100 | 100 | 100 | 100 | 100 | - |
| | Copolymer (A-1) | Part by mass | - | - | - | - | - | - | 100 |
| | Process oil 3 | Part by mass | 285 | 235 | 200 | 285 | 285 | 285 | - |
| | Carbon black 3 | Part by mass | 20 | 20 | 20 | 50 | 100 | 150 | 20 |
| | Calcined kaolin | Part by mass | 40 | 40 | 40 | - | - | - | 40 |
| | Total | Part by mass | 345 | 295 | 260 | 335 | 385 | 435 | 160 |
| Raw material 2 | Crosslinking agent (Y-1-1) | Part by mass | 6.5 | 6.5 | 6.5 | 6.5 | 6.5 | 6.5 | 6.5 |
| | Reaction inhibitor 2 | Part by mass | 0.4 | 0.4 | 0.4 | 0.4 | 0.4 | 0.4 | 0.4 |
| | Catalyst 2 | Part by mass | 0.2 | 0.2 | 0.2 | 0.2 | 0.2 | 0.2 | 0.2 |
| B-type viscosity | | Pa·s | 1040 | 2010 | 3370 | 1310 | 2420 | 5430 | 3570 |

**[Table 11]**

| | | Example 6-1 | Example 6-2 | Example 6-3 | Example 6-4 |
|---|---|---|---|---|---|
| Condition: 90°C and 60 minutes | | | | | |
| tc10 | min | 43.00 | 14.81 | 24.93 | 10.81 |
| tc50 | min | 43.02 | 14.85 | 25.03 | 10.88 |
| tc90 | min | 44.25 | 14.93 | 30.91 | 12.72 |
| S'max | dNm | 0.02 | 0.02 | 0.03 | 0.02 |
| S'max - S'min | dNm | 0.02 | 0.02 | 0.03 | 0.00 |
| MCR | dNm/min | 0.12 | 0.14 | 0.12 | 0.09 |

| Condition: 120°C and 30 minutes | | | | | |
|---|---|---|---|---|---|
| tc10 | min | 3.52 | 19.34 | 10.49 | 0.24 |
| tc50 | min | 5.38 | 24.16 | 14.02 | 0.84 |
| tc90 | min | 19.85 | 28.73 | 24.28 | 29.15 |
| S 'max | dNm | 0.87 | 0.37 | 1.09 | 0.03 |
| S'max - S'min | dNm | 0.87 | 0.37 | 1.09 | 0.00 |
| MCR | dNm/min | 0.45 | 0.26 | 0.33 | 0.21 |

| Condition: 150°C and 10 minutes | | | | | |
|---|---|---|---|---|---|
| tc10 | min | 0.53 | 1.14 | 0.89 | 1.04 |
| tc50 | min | 0.82 | 1.76 | 1.31 | 1.76 |
| tc90 | min | 3.42 | 5.53 | 4.25 | 4.29 |
| S'max | dNm | 0.96 | 1.18 | 1.63 | 0.65 |
| S'max - S'min | dNm | 0.96 | 1.18 | 1.63 | 0.65 |
| MCR | dNm/min | 1.71 | 1.11 | 1.93 | 0.50 |

| Condition: 170°C and 10 minutes | | | | | |
|---|---|---|---|---|---|
| tc10 | min | 0.32 | 0.48 | 0.43 | 0.44 |
| tc50 | min | 0.48 | 0.73 | 0.61 | 0.65 |
| tc90 | min | 2.79 | 3.41 | 2.53 | 1.84 |
| S'max | dNm | 1.01 | 1.25 | 1.66 | 0.79 |
| S'max - S'min | dNm | 1.01 | 1.25 | 1.66 | 0.79 |
| MCR | dNm/min | 2.80 | 2.43 | 4.04 | 1.66 |

**[Table 12]**

| | | Example 6-5 | Example 6-6 | Example 6-7 |
|---|---|---|---|---|
| Condition: 90°C and 60 minutes | | | | |
| tc10 | min | 0.23 | 0.25 | 13.91 |
| tc50 | min | 0.59 | 0.95 | 13.94 |
| tc90 | min | 22.70 | 16.09 | 24.58 |
| S 'max | dNm | 0.03 | 0.04 | 0.04 |
| S'max - S'min | dNm | 0.00 | 0.00 | 0.04 |
| MCR | dNm/min | 0.10 | 0.09 | 0.11 |

| Condition: 120°C and 30 minutes | | | | |
|---|---|---|---|---|
| tc10 | min | 0.61 | 0.26 | 8.42 |
| tc50 | min | 24.52 | 1.58 | 13.36 |
| tc90 | min | 28.63 | 29.78 | 25.01 |
| S'max | dNm | 0.26 | 0.06 | 1.39 |
| S'max - S'min | dNm | 0.00 | 0.00 | 1.39 |
| MCR | dNm/min | 0.24 | 0.19 | 0.29 |

| Condition: 150°C and 10 minutes | | | | |
|---|---|---|---|---|
| tc10 | min | 0.97 | 1.50 | 0.95 |
| tc50 | min | 2.00 | 3.01 | 2.56 |
| tc90 | min | 5.79 | 7.07 | 7.12 |
| S'max | dNm | 0.96 | 1.06 | 3.36 |
| S'max - S'min | dNm | 0.96 | 1.06 | 3.36 |
| MCR | dNm/min | 0.56 | 0.44 | 1.67 |

| Condition: 170°C and 10 minutes | | | | |
|---|---|---|---|---|
| tc10 | min | 0.41 | 0.47 | 0.43 |
| tc50 | min | 0.82 | 1.07 | 1.13 |
| tc90 | min | 3.48 | 4.69 | 4.07 |
| S'max | dNm | 1.06 | 1.25 | 4.11 |
| S'max - S'min | dNm | 1.06 | 1.25 | 4.10 |
| MCR | dNm/min | 1.44 | 1.17 | 4.47 |

**[Table 13]**

| | | Example 6-1 | Example 6-2 | Example 6-3 | Example 6-4 | Example 6-5 | Example 6-6 | Example 6-7 |
|---|---|---|---|---|---|---|---|---|
| Molding condition: 170°C and 10 minutes | | | | | | | | |
| Duro A hardness | - | 6 | 9 | 12 | 7 | 11 | 16 | 38 |
| Duro C hardness | - | 22 | 24 | 28 | 20 | 26 | 31 | 80 |
| TB | MPa | 1.07 | 1.33 | 1.51 | 0.77 | 2.37 | 3.28 | 3.15 |
| EB | % | 330 | 321 | 309 | 300 | 463 | 557 | 180 |
| M25 | MPa | 0.07 | 0.08 | 0.10 | 0.07 | 0.09 | 0.12 | 0.40 |
| M50 | MPa | 0.10 | 0.11 | 0.15 | 0.10 | 0.15 | 0.21 | 0.72 |
| M100 | MPa | 0.16 | 0.20 | 0.25 | 0.16 | 0.29 | 0.46 | 1.71 |
| M200 | MPa | 0.38 | 0.54 | 0.68 | 0.38 | 0.74 | 1.16 | - |
| M300 | MPa | 0.89 | 1.14 | 1.43 | 0.76 | 1.27 | 1.75 | - |
| Crosslinking density | × 10¹⁹ pieces/cc | 0.69 | 0.85 | 1.17 | 0.69 | 0.78 | 0.84 | 9.56 |
| CS (70°C × 197 h), compression rate of 25% | % | 4 | 10 | 5 | 6 | 13 | 27 | 8 |

### <Examples 1 to 4>

The copolymer composition of each of Examples was prepared as follows.

As a first stage, raw materials shown in Raw material 1 of Table 14 were kneaded using a BB-4 type mixer (manufactured by KOBE STEEL, LTD.). The kneading conditions were set to a rotor rotation speed of 50 rpm, a floating weight pressure of 3 kg/cm², and a kneading time of 5 minutes, thereby obtaining a first-stage blending material at a discharge temperature of 150°C.

Next, as a second stage, the blending material obtained in the first stage was wound around an 8-inch roll (manufactured by Nippon Roll Co., Ltd.; the surface temperature of the front roll was 50°C, the surface temperature of the rear roll was 50°C, the rotation speed of the front roll was 18 rpm, and the rotation speed of the rear roll was 15 rpm), raw materials shown in Raw material 2 of Table 14 were added thereto, and the mixture was kneaded for 5 minutes to obtain an uncrosslinked copolymer composition.

### [Evaluation]

The odor of the copolymer composition of each of Examples was evaluated. In addition, the crosslinking rate, the physical properties of the crosslinked molded body, and the like were measured and evaluated. The results are shown in Table 14. As shown in Table 14, it was found that all of Examples had excellent physical properties and processability of the obtained molded body.

As shown in Table 14, in Examples 1 to 4 in which the hydrosilyl group-containing compound (Y-1-1) was used, the "180°C (tc90) minute" was not excessively large, the "125°C (TS1) minute" was almost 20 minutes or longer, and a sufficient scorch resistance was obtained while an appropriate crosslinking rate was maintained.

In addition, Examples 1 to 4 in which the hydrosilyl group-containing compound (Y-1-1) was used exhibited a sufficient EB value in the same manner as in Example 9 in which the hydrosilyl group-containing compound (Y-1-1) was used and the organic peroxide was not blended.

In addition, in Examples 1 to 4 and 9 in which the organic peroxide (Z-1) was used, there was no problem of odor.

**[Table 14]**

| | | Example 1 | Example 2 | Example 3 | Example 4 | Example 9 |
|---|---|---|---|---|---|---|
| Raw material 1 (part by mass) | Copolymer (S-1) | 100 | 100 | 100 | 100 | 100 |
| | Carbon black 3 | 75 | 75 | 75 | 75 | 75 |
| | Process oil 1 | 40 | 40 | 40 | 40 | 40 |
| | Hydrosilyl group-containing compound (Y-1-1) | 1.625 | 3.25 | 4.875 | 6.5 | 6.5 |
| | Hydrosilyl group-containing compound (Y-2) | - | - | - | - | - |
| Raw material 2 (part by mass) | Organic peroxide (Z-1) converted to purity of 100% by mass | 2.19 | 1.46 | 0.73 | 2.92 | - |
| | Organic peroxide (Z-2) converted to purity of 100% by mass | - | - | - | - | - |
| | Catalyst 1 | - | - | - | - | - |
| | Catalyst 2 | 0.05 | 0.1 | 0.15 | 0.2 | 0.2 |
| | Reaction inhibitor 1 | - | - | - | - | - |
| | Reaction inhibitor 2 | 0.075 | 0.15 | 0.225 | 0.3 | 0.3 |
| Crosslinking agent | Y + Z (equivalent to 100 parts by mass) | 0.039 | 0.038 | 0.036 | 0.075 | 0.035 |
| | Y/Z (equivalent ratio) | 23/77 | 47/53 | 72/28 | 47/53 | 100/0 |
| Vulcanization rate | 125°C (TS1) minute | 50.1 | 42.1 | 33.9 | 24.3 | 38.8 |
| | 180°C (tc90) minute | 3.5 | 3.2 | 2.6 | 1.3 | 1.6 |
| Crosslinked molded body | Odor | O | O | O | O | O |
| | Surface stickiness | O | O | O | O | O |
| | Scratch resistance | 3 | 5 | 5 | 5 | 5 |
| | Hardness (Duro-A) | 62 | 63 | 62 | 64 | 62 |
| | TB (MPa) | 13.1 | 12.8 | 12.3 | 12.7 | 10.8 |
| | EB (%) | 293 | 284 | 279 | 252 | 303 |
| | CS: 120°C × 72 h (%) | 9 | 10 | 13 | 7 | 15 |

### [Industrial Applicability]

According to the present invention, it is possible to provide an ethylene/α-olefin/non-conjugated polyene copolymer composition having excellent physical properties, processability, and the like of a molded body to be obtained; a foam molded body obtained from the copolymer composition and a production method of the foam molded body; and a crosslinked molded body and a production method of the crosslinked molded body.

## Claims

1. A copolymer composition comprising:
a copolymer (S);
a hydrosilyl group-containing compound (Y); and
a platinum catalyst,
wherein the copolymer (S) has a structural unit derived from an ethylene (A), a structural unit derived from an α-olefin (B) having 3 to 20 carbon atoms, and a structural unit derived from a non-conjugated polyene (C) including, in a molecule, a total of two or more partial structures of at least one type selected from Formula (1) and Formula (II), and satisfies the following requirement (i) and the following requirement (ii),
the hydrosilyl group-containing compound (Y) is an organohydrogenpolysiloxane represented by Formula (a), which has at least one silicon atom-bonded aralkyl group and at least two silicon atom-bonded hydrogen atoms in a molecule,
the requirement (i) is that [A]/[B], which is a ratio of a number of moles [A] of the structural unit derived from the ethylene (A) to a number of moles [B] of the structural unit derived from the α-olefin (B) having 3 to 20 carbon atoms, is 40/60 to 99.9/0.1,
the requirement (ii) is that a mass percent concentration of the structural unit derived from the non-conjugated polyene (C) is 0.07% to 10% by mass with respect to all structural units constituting the copolymer (S), 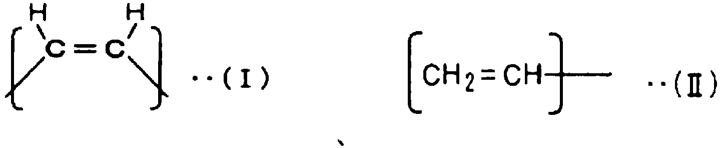 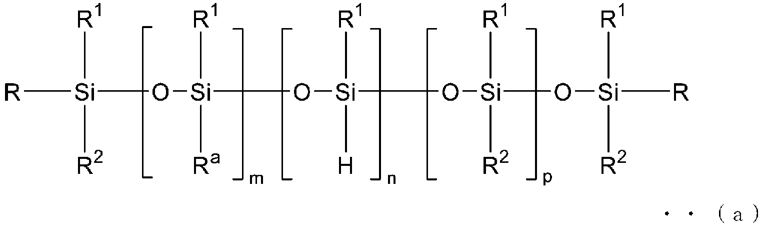
in Formula (a), n and p are each independently 0 or a positive number, m is a number in a range of 1 to 20, a sum of n, m, and p is 5 to 50, a plurality of R¹'s and R²'s are each independently a monovalent alkyl group, R^{a} is an aralkyl group, two R's are each independently a group selected from the group consisting of R¹, R², a hydrogen atom, and R^{a}, and the structural units may be arranged in blocks or randomly, provided that in a case where n = 1, at least one of the two R's is a hydrogen atom, and in a case where n = 0, both the two R's are hydrogen atoms.

2. The copolymer composition according to Claim 1, further comprising:
a baking soda-based foaming agent satisfying the following requirement (b),
wherein the requirement (b) is that a cumulative 10% unevenness degree in a number-based cumulative distribution curve of unevenness degree is 0.9 or less, and a cumulative 90% equivalent circle diameter in a number-based cumulative distribution curve of equivalent circle diameter is 43 µm or more,
where the unevenness degree is a ratio of an envelope peripheral length to a peripheral length, which are measured by a dynamic image analysis method using methyl ethyl ketone as a dispersion solvent, and the equivalent circle diameter is a diameter of a circle with an area equal to a projected area of particles measured by a dynamic image analysis method using methyl ethyl ketone as a dispersion solvent.

3. The copolymer composition according to Claim 2,
wherein, with respect to 100 parts by mass of the copolymer (S), the hydrosilyl group-containing compound (Y) is contained in an amount of 0.1 to 100 parts by mass, the platinum catalyst is contained in an amount of 0.001 to 10 parts by mass, and the baking soda-based foaming agent is contained in an amount of 1 to 30 parts by mass.

4. The copolymer composition according to Claim 2 or 3, further comprising:
a reaction inhibitor in an amount of 0 to 2 parts by mass with respect to 100 parts by mass of the copolymer (S).

5. The copolymer composition according to any one of Claims 2 to 4, further comprising:
a hindered phenol-based antioxidant in an amount of 0.07 to 10 parts by mass with respect to 100 parts by mass of the copolymer (S).

6. A foam molded body comprising:
a foam body obtained by crosslinking and foaming the copolymer composition according to any one of Claims 2 to 5.

7. A production method of a foam molded body, comprising:
melt-extruding and crosslinking the copolymer composition according to any one of Claims 2 to 5.

8. The copolymer composition according to Claim 1,
wherein the copolymer (S) further satisfies the following requirements (iii) to (v) and has an intrinsic viscosity [η] of 2.0 to 4.0 dL/g,
the copolymer composition further contains, with respect to 100 parts by mass of the copolymer (S), carbon black in an amount of 0.1 to 200 parts by mass, paraffinic process oil in an amount of 0.1 to 200 parts by mass, and a reaction inhibitor as necessary,
a Mooney viscosity "ML (1 + 4) 100°C" of a composition obtained by mixing components other than the hydrosilyl group-containing compound (Y), the platinum catalyst, and the reaction inhibitor, which is measured by a method in accordance with JIS K 6300-1: 2013, is 8 to 200,
the requirement (iii) is that (n_{C}) obtained by the following expression (1) is 4.5 or more and 40 or less,
(n_{C}) = (Mw) × {(a mass percent concentration of (C)/100}/a molecular weight of (C) ... (1),
where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
the requirement (iv) is that a ratio P (η^{*}_{(ω = 0.1}/η^{*}_{(ω = 100)}) between a complex viscosity η^{*}_{(ω = 0.1)} (Pa·sec) at a frequency ω of 0.1 rad/s and a complex viscosity η*_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P / \left({\left[η\right]}^{2.9}\right) \leq the mass percent concentration of \left(C\right) \times 6$
and
the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000C} \leq 1 - 0.07 \times Ln \left(Mw\right)$

9. A crosslinked molded body obtained by crosslinking the copolymer composition according to Claim 8.

10. The copolymer composition according to Claim 1,
wherein the copolymer (S) further satisfies the following requirements (iii) to (v) and has an intrinsic viscosity [η] of 0.5 dL/g or more and less than 2.0 dL/g,
the copolymer composition further contains paraffinic process oil in an amount of 10 to 100 parts by mass with respect to 100 parts by mass of the copolymer (S),
a Mooney viscosity "ML (1 + 4) 100°C" measured by a method in accordance with JIS K 6300-1: 2013 is 0.1 to 8,
the requirement (iii) is that (n_{C}) obtained by the following expression (1) is 4.5 or more and 40 or less,
(nc) = (Mw) × {(a mass percent concentration of (C)/100}/a molecular weight of (C) ... (1),
where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
the requirement (iv) is that a ratio P (η^{*}_{(ω = 0.1)}/η^{*}_{(ω = 100)}) between a complex viscosity η^{*}_{(ω = 0.1)} (Pa·sec) at a frequency ω of 0.1 rad/s and a complex viscosity η^{*}_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P / \left({\left[η\right]}^{2.9}\right) \leq the mass percent concentration of \left(C\right) \times 6$ and
the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000C} \leq 1 - 0.07 \times Ln \left(Mw\right)$

11. A crosslinked molded body obtained by crosslinking the copolymer composition according to Claim 10.

12. The copolymer composition according to Claim 1,
wherein the copolymer (S) further satisfies the following requirements (iii) to (v) and has an intrinsic viscosity [η] of 0.5 dL/g or more and less than 2.0 dL/g,
the copolymer composition further contains, with respect to 100 parts by mass of the copolymer (S), carbon black in an amount of 0.1 to 200 parts by mass and paraffinic process oil in an amount of 100 to 400 parts by mass,
a Brookfield rotational viscosity at 25°C, which is measured by a method in accordance with JIS K 7117: 1999, is 6,000 Pa·s or less,
the requirement (iii) is that (nc) obtained by the following expression (1) is 4.5 or more and 40 or less,
(n_{C}) = (Mw) × {(a mass percent concentration of (C)/100}/a molecular weight of (C) ... (1),
where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
the requirement (iv) is that a ratio P (η^{*}_{(ω = 0.1)}/η^{*}(_{ω = 100)}) between a complex viscosity η^{*}_{(ω = 0.1)} (Pa·sec) at a frequency ω of 0.1 rad/s and a complex viscosity η*_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P / \left({\left[η\right]}^{2.9}\right) \leq the mass percent concentration of \left(C\right) \times 6$ and
the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000C} \leq 1 - 0.07 \times Ln \left(Mw\right)$

13. A crosslinked molded body obtained by crosslinking the copolymer composition according to Claim 12.

14. The copolymer composition according to Claim 1, further comprising:
a reaction inhibitor; and
an organic peroxide (Z),
wherein the copolymer (S) further satisfies the following requirements (iii) to (v),
the organic peroxide (Z) is contained in an amount of 0.2 to 6 parts by mass with respect to 100 parts by mass of the copolymer (S),
the requirement (iii) is that (n_{C}) obtained by the following expression (1) is 4.5 or more and 40 or less,
(n_{C}) = (Mw) × {(a mass percent concentration of (C)/100 }/a molecular weight of (C) ... (1),
where in the expression (1), (Mw) is a weight-average molecular weight of the copolymer (S), the mass percent concentration of (C) is a content (% by mass) of the structural unit derived from the non-conjugated polyene (C) to a total mass of the structural units constituting the copolymer (S), and the molecular weight of (C) is a molecular weight of the non-conjugated polyene (C),
the requirement (iv) is that a ratio P (η*_{(ω = 0.1)}/η^{*}_{(ω = 100)}) between a complex viscosity η^{*}_{(ω = 0.1)} (Pa·sec) at a frequency ω of 0.1 rad/s and a complex viscosity η^{*}_{(ω = 100)} (Pa·sec) at a frequency ω of 100 rad/s, which are obtained by a linear viscoelastic measurement (190°C) using a rheometer, the intrinsic viscosity [η], and the mass percent concentration of the structural unit derived from the non-conjugated polyene (C) (the content (% by mass) of the structural unit derived from the non-conjugated polyene (C) to the total mass of the structural units constituting the copolymer (S)) satisfy the following expression (2), $P / \left({\left[η\right]}^{2.9}\right) \leq the mass percent concentration of \left(C\right) \times 6$ and
the requirement (v) is that a number of long-chain branches (LCB_{1000C}) per 1,000 carbon atoms and a natural logarithm [Ln(Mw)] of the weight-average molecular weight (Mw), which are obtained by a 3D-GPC, satisfy the following expression (3), ${LCB}_{1000C} \leq 1 - 0.07 \times Ln \left(Mw\right)$

15. The copolymer composition according to Claim 14,
wherein, with respect to 100 parts by mass of the copolymer (S), the hydrosilyl group-containing compound (Y) is contained in an amount of 0.01 to 10 parts by mass, the platinum catalyst is contained in an amount of 0.001 to 1 parts by mass, and the reaction inhibitor is contained in an amount of 0.001 to 5 parts by mass.

16. A crosslinked molded body obtained by crosslinking the copolymer composition according to Claim 14 or 15.

17. A production method of the copolymer composition according to any one of Claims 1 to 5, 8, 10, 12, 14, and 15, the production method comprising:
kneading the copolymer (S) and the hydrosilyl group-containing compound (Y) at 80°C to 170°C for 1 to 10 minutes to obtain a first-stage blending material; and
adding the platinum catalyst to the first-stage blending material and kneading the mixture at 10°C to 130°C for 1 to 30 minutes to obtain a second-stage blending material,
wherein the copolymer (S) has a structural unit derived from an ethylene (A), a structural unit derived from an α-olefin (B) having 3 to 20 carbon atoms, and a structural unit derived from a non-conjugated polyene (C) including, in a molecule, a total of two or more partial structures of at least one type selected from Formula (I) and Formula (II), and satisfies the following requirement (i) and the following requirement (ii),
the hydrosilyl group-containing compound (Y) is an organohydrogenpolysiloxane represented by Formula (a), which has at least one silicon atom-bonded aralkyl group and at least two silicon atom-bonded hydrogen atoms in a molecule,
the requirement (i) is that [A]/[B], which is a ratio of a number of moles [A] of the structural unit derived from the ethylene (A) to a number of moles [B] of the structural unit derived from the α-olefin (B) having 3 to 20 carbon atoms, is 40/60 to 99.9/0.1,
the requirement (ii) is that a mass percent concentration of the structural unit derived from the non-conjugated polyene (C) is 0.07% to 10% by mass with respect to all structural units constituting the copolymer (S), 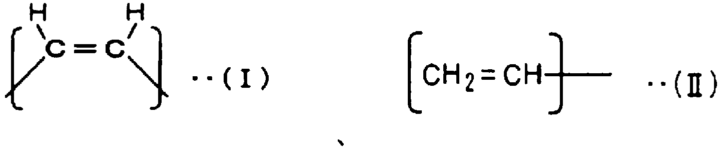 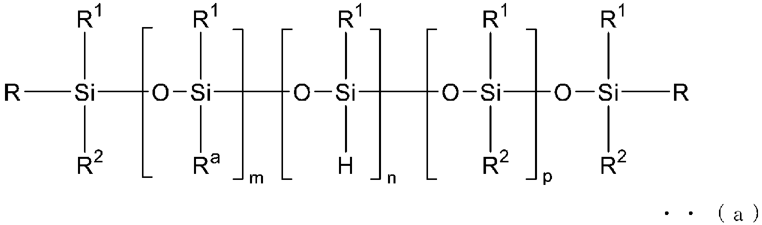
in Formula (a), n and p are each independently 0 or a positive number, m is a number in a range of 1 to 20, a sum of n, m, and p is 5 to 50, a plurality of R¹'s and R²'s are each independently a monovalent alkyl group, R^{a} is an aralkyl group, two R's are each independently a group selected from the group consisting of R¹, R², a hydrogen atom, and R^{a}, and the structural units may be arranged in blocks or randomly, provided that in a case where n = 1, at least one of the two R's is a hydrogen atom, and in a case where n = 0, both the two R's are hydrogen atoms.

18. The production method of the copolymer composition according to Claim 17,
wherein, with respect to 100 parts by mass of the copolymer (S), the hydrosilyl group-containing compound (Y) is used in an amount of 0.1 to 100 parts by mass, and the platinum catalyst is used in an amount of 0.001 to 10 parts by mass.

19. A crosslinked molded body obtained by crosslinking the copolymer composition obtained by the production method according to Claim 17 or 18.

20. A production method of a crosslinked molded body, comprising:
obtaining a kneaded product consisting of the copolymer composition according to any one of Claims 1 to 5, 8, 10, 12, 14, and 15, by melt-kneading the copolymer (S), the hydrosilyl group-containing compound (Y), and the platinum catalyst;
performing primary crosslinking by press-molding the kneaded product at 120°C to 200°C for 1 to 20 minutes to obtain a primary molded body; and
performing secondary crosslinking by heating the primary molded body in a heat medium at 120°C to 160°C for 10 to 24 hours,
wherein the copolymer (S) has a structural unit derived from an ethylene (A), a structural unit derived from an α-olefin (B) having 3 to 20 carbon atoms, and a structural unit derived from a non-conjugated polyene (C) including, in a molecule, a total of two or more partial structures of at least one type selected from Formula (1) and Formula (11), and satisfies the following requirement (i) and the following requirement (ii),
the hydrosilyl group-containing compound (Y) is an organohydrogenpolysiloxane represented by Formula (a), which has at least one silicon atom-bonded aralkyl group and at least two silicon atom-bonded hydrogen atoms in a molecule,
the requirement (i) is that [A]/[B], which is a ratio of a number of moles [A] of the structural unit derived from the ethylene (A) to a number of moles [B] of the structural unit derived from the α-olefin (B) having 3 to 20 carbon atoms, is 40/60 to 99.9/0.1,
the requirement (ii) is that a mass percent concentration of the structural unit derived from the non-conjugated polyene (C) is 0.07% to 10% by mass with respect to all structural units constituting the copolymer (S), 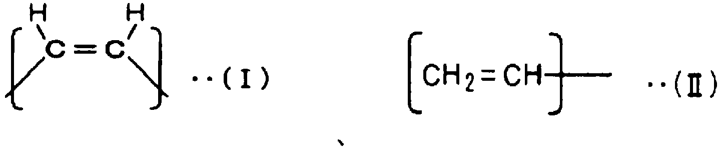 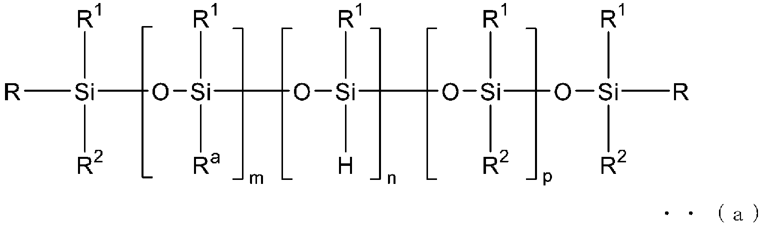
in Formula (a), n and p are each independently 0 of a positive number, m is a number in a range of 1 to 20, a sum of n, m, and p is 5 to 50, a plurality of R¹'s and R²'s are each independently a monovalent alkyl group, R^{a} is an aralkyl group, two R's are each independently a group selected from the group consisting of R¹, R², a hydrogen atom, and R^{a}, and the structural units may be arranged in blocks or randomly, provided that in a case where n = 1, at least one of the two R's is a hydrogen atom, and in a case where n = 0, both the two R's are hydrogen atoms.

21. The production method of a crosslinked molded body according to Claim 20,
wherein, with respect to 100 parts by mass of the copolymer (S), the hydrosilyl group-containing compound (Y) is used in an amount of 0.1 to 100 parts by mass, and the platinum catalyst is used in an amount of 0.001 to 10 parts by mass.
